(19) Europäisches Patentamt
European Patent Office
Office européen des brevets

(11) **EP 3 738 094 B1**

(12) **EUROPEAN PATENT SPECIFICATION**

(45) Date of publication and mention
of the grant of the patent:
**11.02.2026  Bulletin 2026/07**

(21) Application number: **19736046.4**

(22) Date of filing: **08.01.2019**

(51) International Patent Classification (IPC):
**G06Q 50/163** *(2024.01)*       **G06Q 40/02** *(2023.01)*
**G06Q 40/03** *(2023.01)*       **G06Q 40/06** *(2012.01)*

(52) Cooperative Patent Classification (CPC):
**G06Q 40/02; G06Q 40/03; G06Q 40/06;**
**G06Q 50/163**

(86) International application number:
**PCT/US2019/012665**

(87) International publication number:
**WO 2019/136430 (11.07.2019 Gazette 2019/28)**

(54) **METHOD AND APPARATUS FOR REAL TIME, DYNAMIC MANAGEMENT OF REAL ESTATE FINANCE, SERVICES, AND REPORTING**

VERFAHREN UND VORRICHTUNG ZUR DYNAMISCHEN ECHTZEIT-VERWALTUNG VON IMMOBILIENFINANZEN, -DIENSTEN UND -BERICHTEN

PROCÉDÉ ET APPAREIL DE GESTION DYNAMIQUE ET EN TEMPS RÉEL DE FINANCES, SERVICES ET RAPPORTS SUR DES BIENS IMMOBILIERS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.01.2018  US 201862614720 P**
**07.01.2019  US 201916241820**

(43) Date of publication of application:
**18.11.2020  Bulletin 2020/47**

(60) Divisional application:
**25224095.7 / 4 693 155**

(73) Proprietor: **DOMOS, LLC**
**Stanford, CA 94305 (US)**

(72) Inventor: **STRNAD, James, Frank, II**
**Stanford, California 94305 (US)**

(74) Representative: **Stöckeler, Ferdinand et al**
**Schoppe, Zimmermann, Stöckeler**
**Zinkler, Schenk & Partner mbB**
**Patentanwälte**
**Radlkoferstrasse 2**
**81373 München (DE)**

(56) References cited:
| | |
|---|---|
| WO-A1-2017/218984 | AU-A1- 2015 258 248 |
| US-A1- 2007 118 460 | US-A1- 2010 333 116 |
| US-A1- 2012 005 091 | US-A1- 2017 046 638 |
| US-A1- 2017 213 289 | US-A1- 2017 330 174 |
| US-B2- 9 849 364 | |

**Description**

**CROSS REFERENCE TO RELATED APPLICATIONS**

**TECHNICAL FIELD**

The invention relates to data processing. More particularly, the invention relates to a method and apparatus for real time, dynamic management of real estate finance, services, and reporting.

**BACKGROUND**

Computer technology provides an integrated and low-cost experience for consumers and providers of many goods and services. For example, consumers of investment services can access brokerage websites on which they can buy and sell securities, track their account in real time, receive monthly statements, receive securities price quotes, engage in margin borrowing to buy securities, borrow securities to sell short, and move back and forth between more expensive and less expensive levels of service with different features. Computer technology links other service providers into the operation in real time, including trading venues, margin lenders, security settlement services, quotation providers, and others. The result is a seamless, comprehensive, and low-cost presentation, as well as execution both for consumers of investment services and for various service providers. In particular, consumers typically can access all the services they need at low cost on one website through a few GUI interface pages, and a variety of service providers can interact with consumers efficiently through the same website.

In contrast to many other industries, current computer technology in the field of residential real estate services and finance results in a fragmented presentation along with high costs for consumers who buy and own homes, for investors that provide mortgage or equity funding, and for various service providers. Various functions and services have online implementations, but these are not integrated. Current computer technology does not facilitate coordination between various parties on the finance side adequately, resulting in high costs for all. The resulting consumer experience contrasts sharply with what is available for investment services in which the service providers are coordinated and operate seamlessly, obviating any need for the consumer to deal with them separately or at all. The description which follows illustrates the fragmentation and lack of coordination inherent in current technology in the field of residential real estate services and finance.

The purchase, finance, and sale of homes involves multiple actors and multiple transactions. Some of the major parties are: (1) homeowners; (2) investors who provide mortgage or equity finance; (3) originators who interact with consumers to initiate mortgage or equity finance or refinance; (4) mortgage servicers who perform functions such as collecting payments from homeowners, transferring the payments to investors, and providing information to both parties; (5) mortgage insurers that for a fee or fees insure investors in mortgages against non-payment; (6) investment pools of mortgages or rental properties; and (7) real estate agents and others who participate in the purchase and sale of homes.

Fragmentation is particularly evident at the homeowner level. Homeowners must access separate websites for disparate purposes. Homeowners can apply for mortgage finance or refinance on one set of websites, for example Rocket Mortgage. Homeowners can access separate servicer-provided portals to receive information about their mortgages and to make payments. Home buyers or sellers can access yet other websites that provide valuations and identify listed properties, for example Zillow and Redfin. Real estate agencies have websites that offer purchase and sale services, for example Coldwell Banker.

This fragmentation makes some services extremely costly because they are done on a one off, separate basis instead of being integrated through computer technology into a comprehensive, ongoing service. For example, it often costs 2-3% of the loan principal amount to refinance a mortgage. This situation stands in stark contrast to many other consumer services in which there is ongoing capability to change the terms of service online for little or no cost.

This fragmentation is accompanied by a lack of coordination that drives up costs both for homeowners and for the various service providers involved. The treatment of mortgages is a good example. Mortgages are typically packaged into pools and sold to investors. When interest rates go down, homeowners prepay their mortgages and refinance, which decimates existing mortgage pools. This prepayment risk for investors causes them to require a premium, typically in the form of a higher interest rate paid by homeowners, to lend. Refinancing is a *de novo* transaction, not an adjustment to an existing mortgage, and the homeowner typically carries this out either on a separate website from the servicing website for the current mortgage or entirely offline in person at a financial institution or with a mortgage broker.

Fragmentation and lack of coordination not only results in costs for home equity and mortgage investors but also precludes major investment opportunities. Most striking, it is very difficult to invest in owner-occupied housing in a comprehensive way. Mortgages, a debt component, are the major investment vehicle. It also is possible to invest in appreciation shares either as part of shared appreciation mortgages or directly, for example Unison.

There currently is no way to capture the returns from owner-occupied housing comprehensively, both the implicit rents and the appreciation. No current vehicle accesses implicit rents at all. The inability of third parties to invest comprehensively in owner-occupied housing is a major loss. Residential real estate is a major asset class, e.g. $31.8 trillion in 2017 for the United States, which exceeded total U.S. stock market capitalization. The bulk of it is owner-occupied.

It is possible to invest in portfolios of rental homes, for example American Homes for Rent, but these homes tend to have lower returns than owner-occupied homes because owners take better care of homes than tenants do.

Fragmentation exists at the service provider level also. Discrete functions, such as underwriting and marketing mortgages to mortgage pools or investors, take place on separate websites or portals. These functions are not coordinated with consumers in a dynamic way. They are separate steps that need to be updated manually when there is a change in homeowner status or the mortgage deal that a homeowner desires.

Behind this environment of fragmentation and lack of coordination is a simple reality. Current computer technology typically takes single business methods or operations that are not coordinated with each other and applies them separately online largely as is. For example, one fills out a mortgage application online at a website primarily devoted to that purpose instead of filling out a paper application. Integrated, low-cost computer implementations are not available.

Prior art is known from US 2017/0046638 A1. The document discloses a system that includes a first client device that is coupled to a second client device. An apparatus, coupled to the first and second devices, includes a storage device coupled to a processor. The storage device stores software instructions for controlling the processor that when executed configures the processor to generate a listing of expected values and referral events associated with a tracked matter. Each referral event corresponds to a different expected value and the distributed listing includes a sequence of units corresponding to different expected values and corresponding referral events. The processor receives a notification from one of the first or second device that is representative of a referral operation between the first and second location. The processor determines an outcome value for the referral operation and identifies whether the determined outcome value is accurate based on the distributed listing.

Document US 2017/0213289 A1 discloses an apparatus, computer-readable medium, and computer-implemented method for creating collateralized portfolios. A portfolio is a collection of income-producing assets. These income-producing assets are a derivative of primary sources such as real property. A portfolio is generated through transactions that exchange estimated asset value for liquid instruments in the portfolio. Asset valuation is determined through known pricing functions. Transaction elasticity is provided by liquid instruments (reserve funds and portfolio-owned shares) held in reserve in the portfolio's reservoir which provides a market smoothing function to gracefully adapt to changes in asset demand and risk. Each portfolio's reservoir is collectively owned by the shareholders; continuously replenishing itself with income generated by assets in the portfolio. Shares can be represented by digital tokens, traded as digital currency such as cryptocurrency, and monetized with the convenience of cash through a network of exchanges and payment gateways.

US 2017/0330174 A1 discloses systems and methods for recording ownership information in a distributed ledger (such as a blockchain), and for performing application processing utilizing the distributed ledger. An example server computer system is configured to: record on a blockchain ownership information of an asset; to configure, for each owner of the asset, a digital wallet associated with a private cryptographic key and at least one blockchain address; using a blockchain address from a digital wallet to access ownership information in the blockchain; perform application processing using the accessed ownership information; and record in the blockchain, updated ownership information or other information associated with the ownership information in accordance with the performed application processing.

AU 2015 258 248 A1 discloses a computer-implemented system for managing real estate assets on the basis of dynamic owner occupied real estate instruments (DOOR) between home owners and investors. The system comprises an analytic machine for updating equity balances of investors. WO 2017/218984 A1 relates to a service for determining discrepancies in executed asset transactions on a blockchain. The service uses a directed graph to trace the transfer of assets between different parties and a position table that represents the quantities of assets held by different parties at different times.

## SUMMARY

In accordance with an embodiment, a computer technology system for real time, dynamic management of a real estate finance, services, and reporting comprises:

maintaining, on a website controlled by a managing entity and accessible to at least a homeowner and an investor, a display of the terms, parameter values, and upcoming required actions under a housing finance arrangement;

storing, in at least one blockchain system containing at least a housing instrument data blockchain, the system containing at least: contractual information specifying at least one housing finance arrangement between at least one homeowner and at least one investor financing a particular home, a time series of economic parameters relevant to dynamic management of at least one housing finance arrangement, a record of current and past ownership of the financing debt or equity, a record of transactions including at least payments by the homeowner to investors, a record of any adjustments to or changes in the housing finance arrangement, specification of at least one balancing mechanism designed to track at least the homeowner's and investor's net contributions considering the housing finance arrangement between them as a joint venture and to adjust at least one residual account to reflect the net contributions of the parties, a record of the data and calculations of a balancing engine operating continuously based on one or more balancing mechanisms along with the resulting adjustments of at least one residual account, an access protocol defining various levels of access to data in the blockchain system as well as levels of permission to write new data onto the blockchain system, and data describing the homes that are the subject of the housing finance arrangements;

maintaining, on at least one processing server controlled by a managing entity, a balancing engine embodied in at least one processing unit, at least one receiving unit, and at least one transmitting unit for purposes of implementing adjustments under a balancing mechanism;

receiving, periodically through a receiving unit of the balancing engine, a message from the managing entity or an artificial intelligence entity representing it, initiating a balancing entry onto the housing instrument data blockchain; transmitting, through a transmitting unit of the balancing engine, a query of the blockchain system for data relevant to a balancing calculation; receiving said data through a receiving unit of the balancing engine;

in a direct arrangement, determining through a processing unit of the balancing engine an updated balance in at least one residual account; writing, through a transmitting unit of the balancing engine, the updated residual account balance along with details of the computation on the housing instrument data blockchain; modifying, through a processing unit and a transmitting unit of the balancing engine, a website accessible at least to a homeowner and an investor to display the updated residual account balance and then, through a transmitting unit of the balancing engine, alerting at least a homeowner and an investor, who may be offline, of the updated residual account balance through a mobile phone or other receiving device;

or in an arrangement that is not a direct arrangement, determining through a processing unit of the balancing engine an updated unscheduled outcome and associated quantities that use the unscheduled outcome as an input; writing, through a transmitting unit of the balancing engine, the updated unscheduled outcome and associated quantities along with details of the computation on the housing instrument data blockchain; modifying, through a processing unit and a transmitting unit of the balancing engine, a website accessible to at least a homeowner, an investor, and a residual balancing position holder to display the updated unscheduled outcome and associated quantities and then, through a transmitting unit of the balancing engine, alerting at least a homeowner, an investor, and a residual balancing position holder, who may be offline, of the updated unscheduled outcome and associated quantities through a mobile phone or other receiving device;

maintaining, on at least one processing server controlled by a managing entity, at least one data engine embodied in at least one processing unit, at least one receiving unit, at least one transmitting unit, and at least one database for purposes of creating, gathering, updating, processing, storing, and communicating at least one time series of at least one data parameter;

receiving, on a receiving unit of at least one data engine, third-party data comprising input data for computing at least one data parameter generated by the data engine; formatting, through a processing unit of the data engine, the added data and then modifying, through the same processing unit of the data engine, a database to incorporate the added data; computing, through a processing unit of the data engine, at least one non-third-party version of the data parameter if desired; computing, through a processing unit of the data engine, a single operative value of the data parameter using the third-party and non-third-party valuations; writing, through a transmitting unit of the data engine, the updated operative value of the data parameter along with a record of the calculation including at least a time and date stamp of the calculation, the third-party and non-third-party values, and the methodology used to compute the operative value onto a housing instrument data blockchain; modifying, through a processing unit and a transmitting unit of the data engine, a website accessible at least to a homeowner and an investor to display the updated operative value of the data parameter and then, through a transmitting unit of the data engine, alerting at least a homeowner and an investor, who may be offline, of the updated operative value through a mobile phone or other receiving device if either party requested updates of the operative value generally or upon certain values of the data parameter being realized;

maintaining, on at least one processing server controlled by a managing entity, at least one third-party data engine embodied in at least one processing unit, at least one receiving unit, at least one transmitting unit, and at least one database for the purposes of creating, gathering, updating, processing, storing, and communicating at least one time series of at least one data parameter that emerges from at least one third-party finance arrangement;

receiving, on a receiving unit of at least one third-party data engine operating on a processing server controlled by the managing entity, data with respect to at least one third-party finance arrangement; identifying, through a processing unit of the third-party data engine, the elements of the data that need to be recorded on a housing instrument data blockchain and modifying the data that needs to be recorded into a suitable format; writing, through a transmitting unit of the third-party data engine, the necessary data elements along with a record of any associated calculations on a housing instrument data blockchain; extracting from the housing instrument data blockchain, through a receiving unit of the third-party data engine, data adequate to describe the current status and relevant history of the third-party finance arrangement; organizing, through a processing unit of the third-party data engine, this data into a form suitable for website display;

modifying, through a processing unit and a transmitting unit of the third-party data engine, a website accessible at least to a homeowner and an investor to display the updated data for the third-party finance arrangement, and then, through a transmitting unit of the third-party data engine, alerting at least a homeowner and an investor, who may be offline, of the updated data through a mobile phone or other receiving device if either party requested such updated data generally or upon certain values of certain data parameters being realized;

maintaining, on a least one processing server controlled by a managing entity, a contract engine embodied in at least one processing unit, at least one receiving unit, and at least one transmitting unit for purposes of initiating, implementing, enforcing, and updating the housing finance arrangement between at least a homeowner and an investor;

receiving, through a receiving unit of a contract engine operating on a processing server controlled by a managing entity, initial contract data describing a housing finance arrangement; identifying, through a processing unit, the elements of the initial contract data that need to be recorded on a housing instrument data blockchain; organizing and modifying, through a processing unit of the contract engine, the data that needs to be recorded into a suitable format; writing through a transmitting unit of the contract engine the necessary data elements onto a housing instrument data blockchain;

receiving, on a website or other input device controlled by a managing entity, a request from the homeowner to alter at least one term in a housing finance arrangement specifying at least one option for a new term; transmitting, through a transmitting unit of a server controlled by the managing entity, the request to a receiving unit of a contract engine operating through a processing unit controlled by the managing entity;

in the case of a direct arrangement, extracting, from the housing instrument data blockchain through a receiving unit of the contract engine, necessary contract provisions governing the requested change in terms for each option along with other relevant data; determining, through a processing unit of the contract engine, if the requested change in terms for each option is permitted under the housing finance arrangement contract and, if so, whether any approvals by parties other than the homeowner are required; if the change in terms under at least one option is otherwise permissible, seeking, through a transmitting unit of the contract engine, any required approvals for each option by alerting at least one relevant party through at least one receiving device of said party of the need to approve or deny approval of each option that requires approval; after receiving a response or after the deadline for a response lapses, determining, through a processing unit of the contract engine, whether each option proposed by the homeowner is approved or denied; modifying, through a transmitting unit of the contract engine, a website accessible to the homeowner to inform the homeowner of whether each option is authorized or denied, and, in the case that at least one option is authorized, requesting the homeowner to confirm acceptance of one of the options or to reject all of them, and then via a transmitting unit of the data engine alerting at least the homeowner, who may be offline, through a mobile phone or other receiving device of the authorized or denied options, and, if at least one option is authorized, the need to confirm one option or reject them all; if the homeowner confirms an option, writing, through a transmitting unit of the contract engine, the change in terms along with associated data comprising the accepted option including at least the effective date and time of the change in terms onto the housing instrument data blockchain; modifying, through a processing unit and a transmitting unit of the contract engine, a website accessible at least to a homeowner and an investor to confirm that the change is in effect, to display the effective time and date of the change, and to display the new housing finance arrangement terms, and then, through a transmitting unit of the contract engine alerting at least a homeowner and an investor, who may be offline, that the change is in effect along with the effective time and date of the change through a mobile phone or other receiving device;

or in an arrangement that is not a direct arrangement, extracting, from the housing instrument data blockchain, through a receiving unit of the third-party data engine, necessary contract provisions governing the requested change in terms along with other relevant data including at least data sufficient to generate offers to the homeowner with respect to each option, the offers containing changes in terms of the housing finance arrangement other than the terms that are the subject of the request; computing, through a processing unit of the contract engine, at least one offer for each change-in-terms option specified by the homeowner; modifying, through a transmitting unit of the contract engine, a website accessible to the homeowner to inform the homeowner of the offers and requesting the homeowner to confirm acceptance of one of the offers or to confirm rejection of all of the offers, and then, through a transmitting unit of the contract engine alerting at least the homeowner, who may be offline, through a mobile phone or other receiving device of the offers and the need to accept one or turn them all down; creating, through a processing unit of the contract engine, an offer data ensemble including at least the content of the offers and the values of the governing data parameters at the time of the offers, values that govern the offer terms; writing, through a transmitting unit of the contract engine, the offer data ensemble onto the housing instrument data blockchain; if the homeowner accepts an offer, extracting, through a receiving unit of the contract engine, the offer data ensemble from the housing instrument data blockchain; computing, through a processing unit of the contract engine using the offer data ensemble, the adjustments between at least a homeowner, an investor, and a residual balancing position holder required to close out the existing housing finance arrangement and replace it with a new one embodying the terms specified in the accepted offer; transmitting through a transmitting unit of the contract engine, a message informing the relevant parties of the required steps; receiving, through a receiving unit of the contract engine, verification that the required steps, including any required payments between parties, have been completed; compiling, through a processing unit of the contract engine, a transition data package including at least the adjustments made to close the existing housing finance arrangement, the terms of the new housing finance arrangement along with the starting residual account positions of the parties, and the date and time the new arrangement went into effect; writing, through a transmitting unit of the contract engine, the transition data onto the housing instrument data blockchain, thereby effecting the shift to the new housing finance arrangement; creating, through a processing unit of the contract engine, separate displayable versions of the transition data appropriate for each relevant party; modifying, through a processing unit and a transmitting unit of the contract engine, a website accessible to the relevant parties to display the transition data in separate versions on separate portions of the website to each separate party as well as to display in commonly accessible areas of the website the new arrangement, and, through a transmitting unit of the contract engine, alerting each of the relevant parties, who may be offline, of the transition data relevant to that party as well as of the common data describing the new housing finance arrangement;

receiving, on a website or other input device controlled by a managing entity, a request from a homeowner to sell a residual account position to at least one investor or to buy a residual account position from at least one investor; transmitting, through a transmitting unit of a server controlled by the managing entity, the sell or buy request to a receiving unit of a contract engine operating through a processing unit controlled by the managing entity;

in the case of a direct arrangement, extracting, from the housing instrument data blockchain through a receiving unit of the contract engine, necessary contract provisions governing the requested sale or purchase along with other relevant data including at least the data required to determine the terms of the sale or purchase; determining, through a processing unit of the contract engine, if the requested sale or purchase is permitted under the housing finance arrangement contract and, if so, whether approval by the investors on the other side of the transaction is required; determining, through a processing unit of the contract engine, the applicable terms of the purchase or sale; and if the sale or purchase is otherwise permissible, seeking, through a transmitting unit of the contract engine, investor approvals, if required, based on the computed terms by alerting the investors through at least one receiving device of each said investor of the terms and the need to approve or deny approval; after receiving a response or after the deadline for a response lapses, determining, through a processing unit of the contract engine, whether the sale or purchase on the computed terms is authorized or denied; modifying, through a transmitting unit of the contract engine, a website accessible to the homeowner to inform the homeowner of authorization or denial, and, in the case of authorization, requesting the homeowner to confirm acceptance or rejection on the basis of the computed terms, and then, through a transmitting unit of the contract engine, alerting the homeowner, who may be offline, through a mobile phone or other receiving device of the authorization or denial, and, in the case of authorization, requesting the homeowner to confirm acceptance or rejection of the transaction on the basis of the computed terms; if the homeowner confirms the transaction, transmitting, through a transmitting unit of the contract engine, a message informing the relevant party or parties of the required steps; receiving, through a receiving unit of the contract engine, verification that the required steps, including any required payments between the parties, have been completed; compiling, through a processing unit of the contract engine, a transaction data package including at least the confirmation of the transaction, the terms of the transaction, the date and time the transaction was effective, and the new residual account positions of the parties as of that date and time; writing, through a transmitting unit of the contract engine, after suitable formatting through a processing unit of the contract engine, the transaction data onto the housing instrument data blockchain; modifying, through a processing unit and a transmitting unit of the contract engine, a website accessible at least to a homeowner and an investor to display the relevant portions of the transaction data, and then, through a transmitting unit of the contract engine alerting at least a homeowner and an investor, who may be offline, of the relevant portions of the transaction data through a mobile phone or other receiving device;

or in an arrangement that is not a direct arrangement, extracting from the housing instrument data blockchain, through a receiving unit of the third-party data engine, necessary contract provisions governing the requested sale or purchase along with other relevant data including at least data sufficient to generate offers to the homeowner with respect to the proposed sale or purchase, each offer containing changes in the terms of the housing finance arrangement accompanying the proposed sale or purchase; computing, through a processing unit of the contract engine, at least one offer with respect to the sale or purchase proposed by the homeowner; determining, through a processing unit of the contract engine, if the requested sale or purchase is permitted under the housing finance arrangement contract and, if so, whether approval by the investors on the other side of the transaction is required; determining, through a processing unit of the contract engine, the applicable terms of the purchase or sale and the terms of each offer;

and if the sale or purchase is otherwise permissible, seeking, through a transmitting unit, investor approvals with respect to each offer, if required, based on the computed terms by alerting the investors through at least one receiving device of each said investor of the offers, and the need to approve or deny approval of each offer; after receiving a response or after the deadline for a response lapses, determining, through a processing unit of the contract engine, whether each offer is authorized or denied; modifying, through a transmitting unit of the contract engine, a website accessible to the homeowner to inform the homeowner of authorization or denial of each offer, and, in the case of authorization of at least one offer, requesting the homeowner to confirm acceptance of one offer along with the sale or purchase terms or to reject them all, and then, through a transmitting unit of the contract engine, alerting the homeowner, who may be offline, through a mobile phone or other receiving device of the authorization or denial of each offer, and, in the case of authorization of at least one offer, requesting the homeowner to confirm acceptance of one offer along with the sale or purchase terms or to reject them all; creating, through a processing unit of the contract engine, an offer data ensemble including at least the content of the offers, the sale or purchase terms, and the values of the governing data parameters at the time of the offers, values that govern the offer terms; writing, through a transmitting unit of the contract engine, the offer data ensemble onto the housing instrument data blockchain; if the homeowner accepts an offer along with the sale or purchase terms, extracting, through a receiving unit of the contract engine, the offer data ensemble from the housing instrument data blockchain; computing, through a processing unit of the contract engine using the offer data ensemble, the adjustments between at least a homeowner, an investor, and a residual balancing position holder required to close out the existing housing finance arrangement and replace it with a new one embodying the terms specified in the accepted offer; transmitting, through a transmitting unit of the contract engine, a message informing the relevant parties of the required steps; receiving, through a receiving unit of the contract engine, verification that the required steps, including any required payments between parties, have been completed; compiling, through a processing unit of the contract engine, a transition data package including at least the adjustments made to close the existing housing finance arrangement, the terms of the sale or purchase, the terms of the new housing finance arrangement along with the starting residual account positions of the parties, and the date and time the new arrangement went into effect; writing, through a transmitting unit of the contract engine, the transition data onto the housing instrument data blockchain, effecting the shift to the new housing finance arrangement; creating, through a processing unit of the contract engine, separate displayable versions of the transition data appropriate for each relevant party; modifying, through a processing unit and a transmitting unit of the contract engine, a website accessible to the relevant parties to display the transition data in separate versions on separate portions of the website to each separate party as well as to display the new arrangement in commonly accessible areas of the website, and then, through a transmitting unit of the contract engine, alerting each of the relevant parties, who may be offline, of the transition data relevant to that party as well as the common data describing the new housing finance arrangement.

## DESCRIPTION OF THE DRAWINGS

FIG. 1 is a block diagram illustrating a macro system architecture for integrating centralized and decentralized computer systems to create optimized dynamic data structures that accurately reflect housing market conditions to facilitate home finance transactions and produce a unified user experience in accordance with exemplary embodiments.

FIG. 2 is a block diagram illustrating the balancing engine of FIG. 1 that manages data structures, allocates home equity to residual accounts, and authorizes equity rebalancing in accordance with exemplary embodiments.

FIG 3. Is a block diagram of the blockchain system of FIG. 1 that receives, processes, and transmits data to and from a blockchain database in accordance with exemplary embodiments.

FIG. 4 is a block diagram illustrating the application layer of FIG. 1 that processes data, accesses centralized and decentralized databases, and provides the computer architecture to support user interfaces for the parties involved in accordance with exemplary embodiments.

FIG. 5 is a flow diagram illustrating the process for authorization of an equity rebalancing request using the processing server of FIG. 4 and issuing a transaction message in accordance with exemplary embodiments.

FIG. 6 is a block diagram illustrating an exemplary embodiment of a FIG. 1 data engine that creates, updates, and transmits one or more parameter values used by the system, in which an exemplary embodiment comprises a valuation engine that transforms data structures with a series of algorithms to calculate the value of home equity and the associated data structures on centralized and decentralized databases in accordance with exemplary embodiments.

FIG. 7 is a flow diagram illustrating the process of authorizing an equity valuation request, executing an equity valuation using the processing server of FIG. 6 and issuing a transaction message in accordance with exemplary embodiments.

FIG. 8 is a block diagram illustrating the contract engine of FIG. 1 for managing, processing, and executing the contractual arrangements between parties in accordance with exemplary embodiments.

FIG. 9 is a flow diagram illustrating the process of authorizing a homeowner's request in accordance with exemplary embodiments.

FIG. 10 is a flow diagram illustrating a process for selling cryptocurrency and writing to a transaction blockchain in relation to a homeowner selling equity in accordance with exemplary embodiments.

FIG. 11 is a block diagram illustrating a cryptocurrency trading engine or cryptocurrency portfolio engine in accordance with exemplary embodiments.

FIG. 12 is a flow diagram illustrating the process for writing to a cryptocurrency portfolio blockchain in accordance with exemplary embodiments.

FIG. 13 is a flow diagram illustrating the process of organizing a data ensemble from the data blockchain system of FIG. 1, recording this data ensemble on the data blockchain system, and transmitting a data message in accordance with exemplary embodiments.

FIG. 14 is a flow diagram illustrating the process for writing payment data to and extracting updated data from the blockchain system in accordance with exemplary embodiments.

FIG.. 15 is a flow diagram illustrating the process for requesting a valuation from the blockchain system and recoding to the blockchain a paydown amount in accordance with exemplary embodiments.

FIG. 16 is a flow diagram illustrating the process for recording payment data to the blockchain system or using the blockchain system to identify investor contacts to deliver an inadequate funds message in accordance with exemplary embodiments.

FIG. 17 is a flow diagram processing a received default notice using data obtained by the blockchain and determining and recording in the blockchain system a change in investor in accordance with exemplary embodiments.

FIG. 18 is a flow diagram illustrating the process for extracting contract provisions data from the blockchain system and for causing activation of a payment engine to generate and write payment data to the blockchain system in accordance with exemplary embodiments.

FIG. 19 is a flow diagram illustrating the process for updating the blockchain system in relation to an initiated EBP arrangement in accordance with exemplary embodiments.

FIG. 20 is a flow diagram illustrating the process for adding balance entry data to the blockchain system in relation to unscheduled outcomes in accordance with exemplary embodiments.

FIG. 21 is a flow diagram illustrating the process for extracting contract data from the blockchain system, computing an offer data ensemble, and writing the offer data ensemble to the blockchain system in relation to a payment change request in accordance with exemplary embodiments.

FIG. 22 is a flow diagram illustrating the process for computing a required allocation, causing a bank transfer to execute, and updating the blockchain system in relation to an accepted payment offer in accordance with exemplary embodiments.

FIG. 23 is a block diagram illustrating a transaction engine in accordance with exemplary embodiments.

FIG. 24 is a flow diagram illustrating a buy offer process and updating to the blockchain system in relation to an accepted buy offer in accordance with exemplary embodiments.

FIG. 25 is a block diagram of a computer system as may be used to implement certain features of some of the embodiments.

## DETAILED DESCRIPTION

*Dynamic Housing Data Structures*

Various of the disclosed embodiments concern dynamically updating a data structure that defines logical relationships between multiple entities to adapt to real-time fluctuations in conditions defined by multiple data streams that affect said logical relationships, such as those between parties to dynamic housing instruments. More particularly, embodiments of the invention concern data structures in the form of DOOR instruments. DOOR stands for "dynamic owner-occupied real estate." By creating appropriate underlying dynamic data structures, that is, by choosing appropriate DOOR instruments, storing the associated data on traditional databases and one or more publicly verifiable blockchains, and using blockchain-based methods to settle key transactional components, embodiments of the invention enable the computer to dynamically modify web pages and create graphical user interfaces in real time that are capable of providing homeowners and service providers with an integrated, transparent, low-cost experience.

DOOR instruments as a class provide homeowners, mortgagees, and equity investors with new methods to live in and invest in owner-occupied real estate. Embodiments of the invention center on particular balancing engines that monitor various factors that affect the criteria that define rights and obligations with regard to said real estate and accordingly dynamically adjust said rights and obligations in real time. The balancing engine is only one aspect of a DOOR instrument. Other aspects include, but are not limited to, various data engines that support the dynamic data structure that comprise the DOOR instrument.

Some DOOR instrument balancing engines translate directly into commercially valuable arrangements between homeowners and investors who finance the homeownership. Several such "direct arrangement" variants provide easy to understand embodiments in the description that follows. The invention, however, is more general. It exploits the use of a certain set of balancing engines capable of solving the technical problems that result in the fragmentation and lack of coordination that currently characterize computer technology in the field of residential real estate services and finance. In many such cases the arrangement that would be implicit in the balancing engine is not the housing arrangement made available to homeowners and investors who finance ownership. The balancing engine resides in the background, creating computer technology that provides homeowners and service providers with an integrated, transparent, low-cost experience with respect to a different arrangement entirely.

Before discussing a more general level of the invention, it is useful to consider as examples and for the purpose of explanation, some direct arrangements that DOOR instruments make possible and how the invention operates for those arrangements.

*DOOR Implementations of Housing Finance Arrangements*

DOOR instruments are data structures that permit allocations between the homeowner and equity investor and that are preferably non-linear and dynamic. In a preferred embodiment of a DOOR instrument, the sharing rule can be more general than a linear schedule over various home value ranges, and it can be dynamic. That is, the rule itself is a data structure that may change as a result of economic conditions or the value of the home. This approach allows the sharing rule to address many problems that are irreconcilable under a piecewise linear, static approach. These problems include, but are not limited to: (1) suboptimal homeowner incentives to maintain the home; (2) financial strategies for the homeowner that are not sensible, e.g. effectively putting a large share of wealth in a single leveraged asset that is correlated with life outcomes so that home value and total wealth tend to decline sharply at the same time as income declines or a job loss occurs; (3) the inability of the investor to receive returns on owner-occupied housing in a pure and transparent form; (4) the inability to increase borrowing against the home without a costly refinance of the equity instrument; (5) the inability to value instruments easily for purposes of creating or accepting new investments in investment pools; and (6) the presence of incentives to strategically refinance equity instruments when home values fall. Some of these problems underlie the lack of coordination between housing finance and services functions as well as the fragmentation that characterizes current computer technology that is directed toward real estate finance and services.

Importantly, under static approaches the arrangement becomes more favorable toward the homeowner or investor as time passes and economic conditions change. For the arrangement to be viable, there must be either restrictions on homeowner refinancing opportunities or the terms need to favor the investor. The dynamic nature of DOOR instruments make it possible in certain embodiments to obviate these restrictions in ways that result in a superior deal for homeowners, preserve at least a market rate of return for investors, and free investors from losses due to prepayment. DOOR arrangements typically also extend to the accompanying mortgage, in some variants eliminating the impact of prepayments on the mortgagee/investor and allowing features, such as automatic, nearly costless, and online refinance of the mortgage when mortgage rates decline.

Embodiments of the invention concern the use of a class of non-linear algorithms to create DOOR instruments that dynamically maintain an economic balance between the homeowner and investor on an ongoing basis. At each moment, treating the arrangement as a joint venture, a DOOR balancing engine acts as an analytic machine that calculates changes in equity shares or other accounts that precisely capture each party's net contribution to the venture. As a result of the ongoing economic balance, the arrangement is neutral in the sense that it does not become misaligned, favoring one party over the other, and results in each party earning a market rate of return after adjusting for what they have received from and contributed to the arrangement. It also is possible to add subsidies or a favorable rate of return versus the market for either party, but any such feature is explicit -- useful, for example, when the investor is a government or private entity that wishes to provide subsidized housing to citizens or employees.

In DOOR arrangements aimed at economic balance, one or more residual accounts are required to do the balancing. These residual accounts may consist of equity shares, debt or debt-like interests secured by the home, fluctuating payments between the parties, cash or investment accounts, cryptocurrency balances, or other vehicles, and any one arrangement may employ more than one residual account.

*Discussion*

Embodiments of the invention create computer technology in the form of appropriate underlying dynamic data structures that enable the computer to modify web pages and create graphical user interfaces capable of providing homeowners and service providers with an integrated, transparent, low-cost implementation of housing finance arrangements.

The following discussion includes several examples which first describe a particular housing arrangement, along with a qualitative indication of how a DOOR instrument works in the arrangement, and then explain an implementation of the invention. The description of the housing finance arrangements permits the definition of crucial terms.

MM-0 and MM-1, the two housing finance arrangements described as initial examples, can be implemented as direct arrangements by using suitable DOOR instrument balancing engines. Subsequent examples include instances that are not implementations of direct arrangements. The housing finance arrangement examples as a whole provide an important backdrop to describe further embodiments of the invention disclosed herein. The embodiments are drawn from a general claimed class of DOOR instrument variants that include ANZIE-DOOR (see WO 2010/085481 A1). It is important to keep in mind that some DOOR instrument variants in the class implement balancing engines that enable the computer to modify web pages and create graphical user interfaces that are capable of providing homeowners and service providers with an integrated, transparent, low-cost experience, even if the real estate arrangement differs from the direct arrangement inherent in the balancing engine.

The following discussion of embodiments of the invention begins with a section which provides a description of some aspects of the required technical environments and a list of some of the relevant parties to the associated housing finance arrangements and transactions. Immediately subsequent sections include:

(i) a description of the MM-0 housing finance arrangement, an arrangement with only two parties, a homeowner and an investor who provides housing finance;

(ii) an explanation of how one embodiment of MM-0 is implemented by the invention that illustrates how the computer technology comprising the invention solves the problem of fragmentation and lack of coordination inherent in current computer technology for a direct arrangement;

(iii) a description of the claimed class of data structures (DOOR instruments) and the theory behind it, using one particular residual account, earned equity, and emphasizing the associated balancing engines;

(iv) an indication of the extent of the disclosed class by describing applications involving: residual accounts other than earned equity; multiple homeowners, investors, or mortgagees; accrual under a residual account that flows to a party other than the homeowner; and the ability to shift seamlessly between neutral DOOR instruments;

(v) a description of the MM-1 housing finance arrangement, an arrangement that differs from MM-0 because multiple independent service providers are involved in addition to the homeowner and the investor providing housing finance;

(vi) an explanation of how an embodiment of MM-1 is implemented by the invention that illustrates how the computer technology comprising the invention solves the problem of fragmentation and lack of coordination inherent in current computer technology for this more complex direct arrangement;

(vii) a description of a scheduled earned equity housing finance arrangement that cannot be implemented as a direct arrangement;

(viii) an explanation of how one embodiment of the scheduled earned equity finance arrangement is implemented by the invention that illustrates how the computer technology comprising the invention solves the problem of fragmentation and lack of coordination inherent in current computer technology for an arrangement that is not a direct arrangement.

These sections are followed by others that describe further embodiments and aspects of the invention.

*Various Parties and Technical Environment Aspects*

Multiple parties are involved at the point of purchase, at the point of sale, and during the ownership period for a particular home and homeowner. During the period of ownership, typically there is at least one homeowner and one financing party (an "investor"). If the financing party is a mortgagee, then there may be mortgage guarantors, mortgage insurers, mortgage servicers, and other parties involved with the mortgage. There may be a maintenance contract for the house with a party providing maintenance services. The maintenance servicer or appraisers may periodically provide an assessment of the value of the home based on its current condition. There is a managing entity that oversees the operation of the ownership arrangement and the associated computer technology.

In some embodiments, the investor may be a portfolio fund that holds a portfolio of equity or debt interests in homes on behalf of "portfolio fund investors" who own stakes in the fund, and in further embodiments, this portfolio may be embodied in a tradable cryptocurrency in which case the investor is a "cryptocurrency portfolio fund." Whether or not a cryptocurrency is involved, the portfolio fund operates as an investment fund, collecting investments from portfolio fund investors who from time to time may invest additional funds in the portfolio held by the portfolio fund or withdraw funds from the portfolio resulting in additions or subtractions to the portfolio.

In addition to a homeowner and investor, there may be various third parties. A "third-party financing entity" may provide "third-party housing finance" that supplements the housing finance provided by the investor. In addition, and possibly distinct from the third-party financing entity may be at least one "third-party service provider" that provides services with respect to either the financing provided by the investor, the financing provided by the third-party financing entity or both. For example, if the third-party housing finance is a mortgage, the third-party financing entity is the mortgagee, and, separate from the mortgagee, there may be a mortgage servicer and a mortgage insurer, two third-party service providers.

The invention requires and enables a deep computing and communication environment. Each instrument is continuously updated with respect to the value of residual accounts and the share among various parties in such accounts and in the associated housing stakes. As a result, central to the invention is a dynamic data structure that constantly updates the values and shares based on fluctuating economic variables interacting with real-time decisions of the parties and that dynamically generates a corresponding user experience. Various events such as refinancing mortgages, changing payment amounts, or even changing the applicable DOOR variant itself require actions or approvals by various parties. Such events include purchase and sale of the underlying properties. These events require an added layer of communication devices and software to enable or improve the functioning of computing or other devices devoted to the task.

Although there are other ways to implement the invention, we illustrate here by considering implementations that rely on blockchain methods and that require use of certain purchase parity DOOR variants, which are defined and described in a later section. Blockchain provides a way to make data immutable and verifiable and therefore may be crucial for making the technical solutions embodied in the invention credible to the various parties of interest in the underlying housing arrangements.

Blockchain ledgers store data in an immutable and transparent way. There are many possible ways to implement and use blockchains consistent with our innovation including at least: (1) a centralized system in which data is anchored to the blockchain using a third-party method that provides the application layer between the user and the blockchain; (2) the use of smart contracts to organize data and facilitate transactions by saving smart contract states to a public blockchain with much of the work occurring off chain to increase efficiency; and (3) developing a custom private blockchain. In the embodiments below, we refer to a "blockchain system" to mean both a blockchain and a method of implementation. It should be appreciated that the details of implementation are by way of example only and are not in any way meant to be limiting.

In the embodiments that follow, one or more blockchain systems are used for the following purposes:

(1) **Housing Instrument Data and History.** One or more "housing instrument data blockchains" contain the data and history of each housing instrument in an immutable form along with the current value of relevant economic variables. The associated blockchain systems form a transparent basis for queries by investors, homeowners, servicing entities, other blockchain systems, or other parties concerning current DOOR instrument shares, values, or other elements using various computing or communication devices.

(2) **Transaction Data.** One or more "transaction blockchain systems" might be used to complete part or all of certain transactions including at least refinancing the mortgage underlying a DOOR instrument, changing payment rates, shifting among neutral DOOR instruments, or buying or selling the underlying home with the concomitant creation or retirement of the associated DOOR instrument.

(3) **Cryptocurrency Operation.** One or more "cryptocurrency blockchains" might include data over time on the housing interests held by various cryptocurrencies that embody portfolios of such interests. Using purchase parity variants results in the property that, across a wide variety of DOOR instruments that use different residual accounts and differ in other ways, the investor continuously earns precisely the economic return on the underlying home. These instruments can be pooled, creating a portfolio of pure housing returns that can serve as the basis of a cryptocurrency operated through a blockchain system. National, regional, or world housing returns can be simulated through the underlying pool, resulting in a hard currency backed by housing returns of a certain type. Soft fiat currencies, such as the dollar would fluctuate continuously relative to this hard currency.

Implementing the dynamic data structures that comprise DOOR instruments requires an immense, coordinated communication and computing environment in which various devices, software, and the blockchain systems that are part of the invention enable or enhance the technical operation of the underlying devices. To make this aspect more concrete, consider a narrative example.

Suppose that one embodiment involves purposes (1) and (2) for a wide variety of DOOR instruments, some of which are in purchase parity form and otherwise are appropriate for inclusion in the cryptocurrency pool, i.e. purpose (3). A homeowner purchases a home, financing it through a DOOR purchase parity embodiment that involves mortgage payments, additional payments, and accrual of earned equity in favor of the homeowner. Later, the homeowner wants to reduce the rate at which additional payments are made.

Consider first, a purchase transaction. To complete the purchase, it is necessary to query potential investors and possibly also potential mortgagees and then perform various actions and secure various approvals from multiple parties. For the dynamic instrument embodied in the invention, the instrument terms are varying in real time along with the relevant market variables. Thus, time is of the essence, lest the quoted terms for the initial instrument move away from being consistent with current market conditions. Various communication devices and software, such as mobile phone applications, are required to provide notifications and secure approvals from the relevant parties. Otherwise the basic computing and communication devices that are central to the DOOR system cannot work efficiently.

Now consider the homeowner's later request for a reduction in the rate at which the homeowner makes additional payments. As with the home purchase, the rate change requires a complex set of actions and approvals that are contingent on each other. The homeowner must initiate the request for the change in rate. Approval under the terms of the instrument typically is necessary because the payment rate affects the accumulation of earned equity and the instrument may require certain minimum levels of earned equity or of earned equity accrual to ensure that the homeowner has an appropriately powerful incentive to maintain the home. In addition, approval of payment rate changes may be required by the investor or investors in the instrument. Again, time is of the essence because the changed payment rate has a dynamic impact on the accrual of earned equity and on the homeowner's cash flows in a way that depends on market conditions. Various communication devices and software, such as mobile phone applications, are required to provide notifications and secure approvals from the relevant parties, as well as to determine whether the change is permissible under the terms of the instrument.

Finally, on top of the structure implementing purposes (1) and (2) is the cryptocurrency. If the cryptocurrency is based on an index idea, such as a balanced portfolio of homes across a nation, continuous adjustments and interactions with homeowners, investors, and other blockchains are required. For instance, consider a cryptocurrency backed by a pool of DOOR instruments covering a representative set of homes across the United States, in effect creating a portfolio of housing returns for an underlying pool of homes that form or replicate a U.S. housing index. If the DOOR instruments are purchase parity MM-0 variants, the equity position underlying the cryptocurrency continuously shrinks, and offsetting cash flows accrue to the cryptocurrency. In addition, certain underlying homes are sold, converting the underlying DOOR instrument positions to cash. Because the cryptocurrency aims at replicating a balanced set of housing returns across the United States, it is necessary to seek out new DOOR instrument investments with the accumulating cash, investments that not only move the cryptocurrency close to full investment in housing, but also do so in a balanced way. At any given time, for example, more investments in homes located in northeastern cities may be required to reestablish balance. Balance might require sales of DOOR investment shares, as well as purchases. The cryptocurrency managers or artificial intelligence entities representing them might query one or more other housing instrument data blockchain systems for suitable purchase candidates and then make offers to the associated investors. They might also offer properties for sale through blockchain systems or otherwise. The queries might extend outward to real estate agents or other parties, informing them of the presence of an immediately interested and very liquid buyer or seller. Because the cryptocurrency is in real-time use, time is of the essence, and various communication devices and software, such as mobile phone applications, are required to make offers of purchase or sale, complete the required transactions, and secure approvals from the relevant parties.

This narrative example, as well as more technical examples presented below, is illustrative rather than exhaustive with respect to the technical aspects of the invention.

*MM-0 Housing Finance Arrangements*

Housing finance arrangements for a single owner-occupied property implemented using DOOR instruments may include multiple investors, multiple homeowners, and multiple mortgagees holding the same or different debt interests secured by the property. One or more of the investors or homeowners also may be a mortgagee. Furthermore, there may be debt-like instruments that do not involve interest payments but, instead, equivalent credits that enter into the balancing calculation.

We begin with MM-0, a very simple class of housing finance arrangements:

(i) There is at most only one mortgage and no debt-like instruments;

(ii) When there is a mortgage, the investor is also the mortgagee, providing all of the home finance by contributing equity as an investor and also lending money secured by the home;

(iii) The mortgage is non-recourse versus the homeowner, with no implications for the homeowner if funds at sale are inadequate to pay the principal due on the mortgage after making any required payments to the homeowner. Thus, if there is a shortfall, the investor as mortgagee simply absorbs the loss; and

(iv) The DOOR instrument variant is adapted to implement MM-0 directly, an "MM-0 variant" of DOOR.

MM-0 housing finance is characterized by the following operational features:

(1) **Conventional Equity Position Held by the DOOR Investor.** A DOOR instrument investor funds the conventional equity position in a home that also may be financed by a mortgage. If there is a mortgage, the mortgage financing is provided by the DOOR investor. If there is no mortgage, the DOOR investor provides all of the funding as equity.

(2) **Homeowner Obligations.** The homeowner is responsible for any mortgage payments (both principal and interest), property taxes, maintaining the home, and other obligations, possibly including scheduled payments that accumulate, at least in part, in favor of the DOOR investor. In the case where there is no mortgage, typically there are scheduled payments, but scheduled payments also may supplement mortgage payments.

(3) **Earned Equity Held by the Homeowner.** The homeowner accrues earned equity, which is a percentage of home value that the DOOR investor is obligated to pay the homeowner upon sale of the home or other termination of the DOOR instrument. Earned equity accumulates based on the homeowner's net contribution to the venture as specified by a dynamic algorithm, the core of the engine that creates economic balance. Major positive elements of that net contribution are loan payments, property tax payments, scheduled payments, if any, and maintenance of the home. The major negative element is the imputed rental value of living in the home. If there is a down payment by the homeowner, it increases earned equity directly as a percentage of home value. Earned equity is an unleveraged equity interest in the home, a percentage of total home value at any given point in time. Earned equity has priority at sale over the debt and equity interests held by the investor.

(4) **Robust Maintenance Incentive.** Contractual terms mandate that failure to maintain the home in a condition at least as good as at the time of purchase results in a dollar-for-dollar reduction in earned equity that would be paid to the homeowner at termination. Because the earned equity position comprises unleveraged equity in the home, the homeowner's maintenance incentives remain robust in the face of situations in which the home is worth less than the outstanding mortgage debt.

(5) **Periodic Adjustment that Implements Economic Balance.** The DOOR balancing engine is an analytic engine that continuously adjusts a residual account to compensate the party making a net contribution. In the case of MM-0, the residual account is the homeowner's earned equity and the balancing mechanism is based on the purchase parity accumulation algorithm described below. The balancing engine translates the homeowner's net contribution during each period into an appropriate increase in earned equity, that is, an increase that is precisely compensatory in expectation for both parties when viewed with respect to the current period.

The terms of DOOR instruments, including MM-0, vary depending on market conditions. A fully dynamic instrument incorporates the current values of all relevant parameters such as interest rates, the value of the underlying home, the rental rate for the home, depreciation rates for the home, property tax rates, and other variables. Making instruments fully dynamic eliminates certain options associated with them. For example, it is not worth refinancing a fully dynamic DOOR instrument because the terms of the new instrument are the same as the old one, reflecting current market values. The option to refinance is worthless. In contrast, this option has value under conventional mortgage contracts, and the mortgagor has an incentive to prepay the mortgage and refinance when mortgage rates fall, with ensuing consequences: the initial price of borrowing is higher, there is a dilemma of when to exercise for the homeowner, and valuation of mortgages is more difficult because it depends on prepayment behavior.

Some DOOR implementations use approximations: The DOOR contract only adjusts to exact, real-time market values with respect to a subset of the relevant parameters, using approximations for the others. The result is an instrument that only approximates zeroing out option values, but one with more predictable outcomes for quantities such as earned equity. In other DOOR implementations the goal is to come as close as possible to the fully dynamic version of the instrument.

Note that MM-0 housing finance arrangements can operate with or without a mortgage. In the case where there is no mortgage, typically there needs to be payments from the homeowner into the venture or directly to the investor to create enough of a net contribution from the homeowner to generate significant earned equity. These scheduled payments may be a function of home value, may fluctuate to achieve and maintain a target level of earned equity, or may vary in other ways depending on the nature of the arrangement.

The dynamic nature of DOOR instruments allows adding many other features. Some that might be particularly appealing additions to MM-0 or other variants are:

(A) **Reducing the Level of Payments as an Option or as a Basis Underlying Rescue Provisions for Financially Distressed Homeowners.** If homeowners get into financial distress, provisions of the DOOR arrangement may permit them to omit scheduled payments or mortgage payments for a period of time or up to a total amount. There is no impact on the investor because the payment reductions are fully offset by slower accrual of earned equity or actual reductions in earned equity. In variants that involve third-party mortgages, that is, where the investor is not also the mortgagee, the investor steps in and makes the mortgage payments omitted by the homeowner. Again, the investor is compensated exactly by a reduction in the investor's earned equity obligation at sale. The possibility of reducing the level of payments is general, not limited to distress situations, and can be included as a homeowner option.

(B) **Partial Mortgage Payoff to Limit the Loan-to-value ("LTV") Ratio or Equivalent Reductions in Scheduled Payments.** DOOR contract provisions may require the investor to partially pay off or reduce the mortgage obligation of the homeowner to limit the LTV ratio. In cases where there is a third-party mortgage with priority over earned equity, the LTV level may be set to guarantee that the investor's conventional equity exceeds the earned equity due at sale. A desirable way to structure the pay-off under MM-0 is to remove part of the loan, lowering the payment, but leaving the terms otherwise the same, in effect creating a scaled-down version of the original loan. Without the LTV ceiling, earned equity accumulates very fast in low-value situations, potentially swallowing up the remaining available home equity entirely. The DOOR mechanism provides the DOOR investor exact economic compensation for any paydown because reducing the loan payments reduces the rate at which earned equity accrues in a manner that is exactly compensatory. Where there is no mortgage, but there are scheduled payments under MM-0, the payments can be reduced in an equivalent manner in low-value situations with a compensating reduction in the accrual of earned equity.

(C) **Additional Homeowner Payments.** The DOOR contract may allow homeowners to make additional optional or regularly scheduled payments to or for the benefit of the investor. These payments increase the accrual of earned equity in a way that exactly compensates the homeowner for making them.

(D) **Targeted Earned Equity.** The DOOR arrangement may encompass accumulation of earned equity up to a target level with payments adjusting thereafter to zero out the future net contributions of the homeowner and thereby forestall any additional accumulation. The homeowner may be permitted to move the target amount of earned equity up and down within certain limits through an adjustment in ongoing payments made to achieve the target over time or through lump-sum payments in either direction to implement the adjustment immediately.

These features and many others are easy to add because the DOOR balancing engine is an analytic mechanism that fully compensates the parties for any changes in their contributions to the arrangement considered as a joint venture. Many of the possible features require that the parties to the arrangement be notified and make interlocking and interdependent decisions on a real-time basis.

The next section illustrates how the invention creates computer technology that allows a representative embodiment of MM-0 to be implemented in a way that enables the computer to modify web pages and create graphical user interfaces that are capable of providing homeowners and service providers with an integrated, low-cost experience, what is missing under current technology.

*Implementation of an Embodiment of an MM-0 Housing Finance Arrangement*

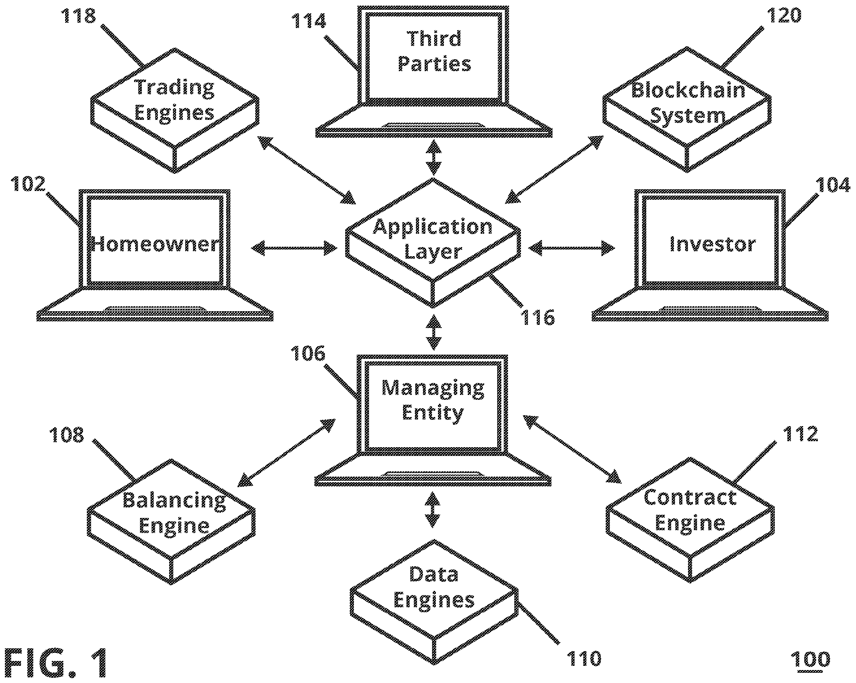

FIG. 1 illustrates a system **100** comprising the macro system architecture for integrating centralized and decentralized computer systems to create optimized dynamic data structures that accurately reflect housing market conditions to facilitate home finance transactions and produce a unified user experience.

In system **100,** a transaction may occur between the computing device of a homeowner **102** and an investor **104** that is embodied in a home finance instrument and facilitated by a managing entity **106** and an associated computer interface or interfaces. The managing entity may oversee a number of computer systems, including one or more balancing engines **108,** data engines **110,** and contract engines **112.** A number of third parties **114** and associated computer interfaces may also be involved in the transaction. The system may also include an application layer **116** that receives, processes, and transmits data and provides the requisite computer architecture to manage user interfaces for the parties involved in a specific transaction. The application layer may also interact with one or more trading engines **118** and/or one or more blockchain systems **120.**

To describe how system **100** operates, consider implementation of an embodiment of the MM-0 housing arrangement. We focus on the ownership period and begin with the simple case of a homeowner **102,** a single investor **104,** and 100% equity finance, that is, no mortgage. At the core of the invention is a balancing engine **108** embodied in a processing unit **206,** at least one receiving unit **202,** and at least one transmitting unit **204** operated on a processing server by the managing entity.

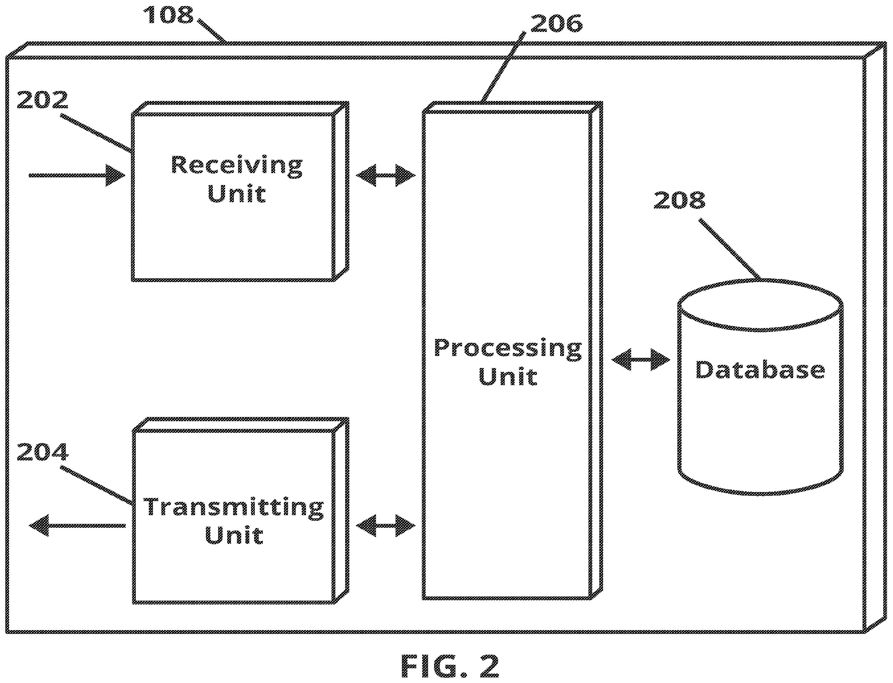

FIG. 2 illustrates an embodiment of the balancing engine **108** of system **100.** The balancing engine **102** may include a database **208,** receiving unit **202** configured to receive data over one or more networks, a processing unit **206** that performs the functions of the balancing engine **108** described herein, and a transmitting unit **204** configured to transmit data over one or more networks.

The balancing engine **108** assesses over time the ongoing contributions of the homeowner **102** and investor **104,** considering the housing arrangement between them as a joint venture. In one embodiment, the investor **104** initially finances the entire home with equity finance, i.e. no mortgage, the homeowner **102** makes payments to the investor **104,** the homeowner **102** makes property tax payments, the homeowner **102** maintains the home, and the homeowner **102** lives in the home. In this embodiment, the homeowner's **102** net contribution equals (i) the payments to the investor **104,** (ii) the property tax payments, (iii) the maintenance, and (iv) other obligations such as insurance, less (v) what would be charged as rent (the "implicit rent"), which is the value of living in the home. The balancing mechanism requires a residual account stored on a centralized **208** or decentralized database **120** to reconcile the interests of the homeowner **102** and investor **104.** In this embodiment, the residual account consists of an unleveraged interest in the home, which the investor **104** must pay the homeowner **102** upon sale of the home or termination of the financing arrangement, and the payments are set so that the homeowner's **102** net contribution is positive. Because the unleveraged equity accrues based on homeowner **102** net contributions, we call it "earned equity."

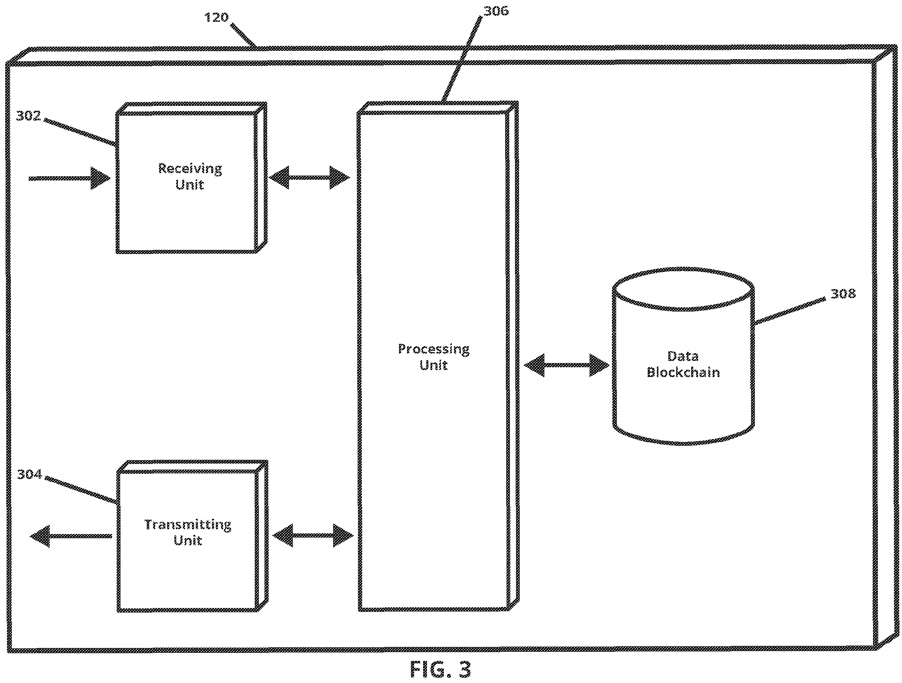

In system **100,** the data for input into the balancing engine **108** resides in a housing instrument data blockchain system **120**. FIG. 3 illustrates an embodiment of the data blockchain system **120** of system **100**. The data includes a time series of all the contribution elements including at least homeowner **102** payments to the investor **104.** The housing instrument data blockchain system **120** has a receiving unit **302** configured to receive data over one or more networks as well as a database **308** for storing data. The blockchain system **120** also includes a processing unit **306** with an access protocol and is protected and anonymized using methods familiar to those skilled in the art such as encryption, state channels, and public and private keys. The access protocol defines various levels of access to data on the blockchain system **120,** as well as levels of permission to write new data onto the blockchain system **120.** Persons or entities seeking access to the blockchain system **120** submit access authorization data that determines through the access protocol, the level of access to data as well as the extent of the ability to write on the blockchain accorded to that person or entity. The housing instrument data blockchain system **120** has a transmitting unit **304** configured to transmit data over one or more networks.

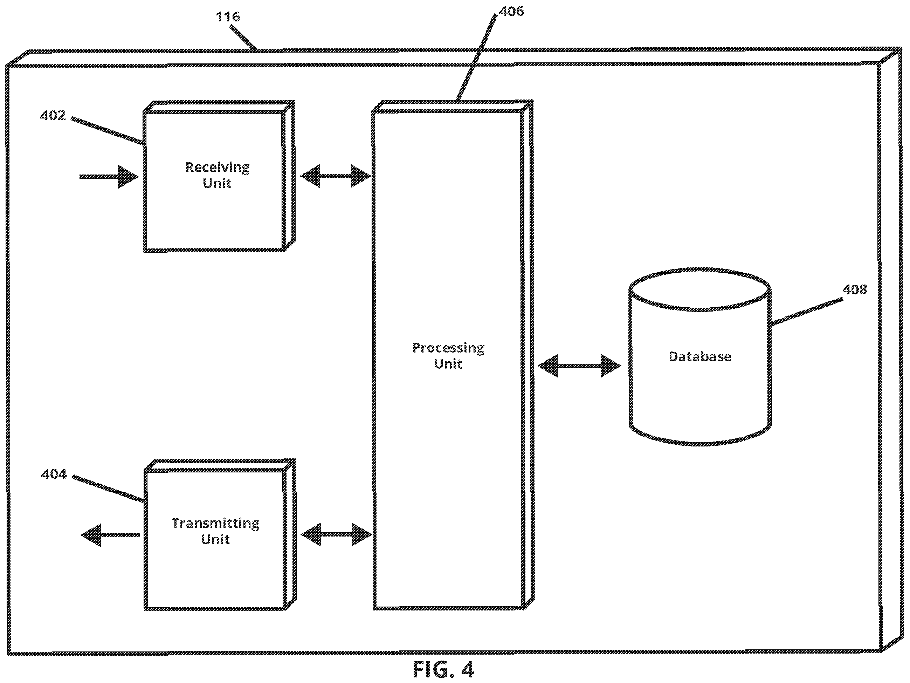

FIG. 4 illustrates an embodiment of an application layer **116** of system **100** with a receiving unit **402** designed to receive data over one or more networks, a transmitting unit **404** to broadcast data over one or more networks, a processing unit **406** with the computer architecture to support user interfaces for relevant parties, and a database **408** for storing data. The managing entity computer system **106** controls the balancing engine **108,** which transmits data to the blockchain system **120** via the application layer **116.**

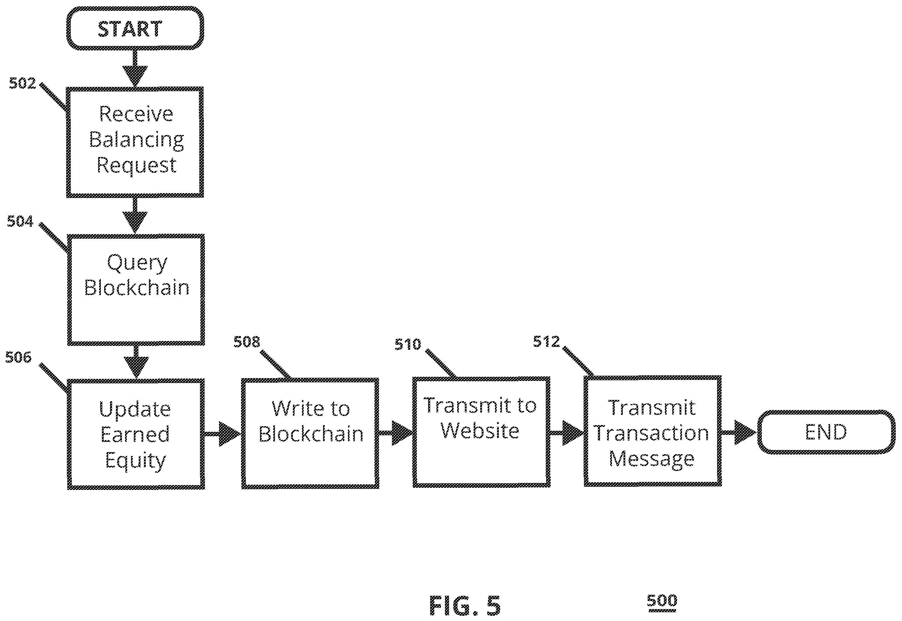

An embodiment can be understood with reference to FIG. 5, a flow diagram (500) illustrating the process for execution of an equity rebalancing request using the processing server of FIG. 4 and issuing a transaction message in accordance with exemplary embodiments. Periodically, the managing entity or an artificial intelligence entity representing it, sends a message to a receiving unit of the balancing engine initiating a balancing entry onto the housing instrument data blockchain (502). The balancing engine transmits through a transmitting unit a query of the housing instrument data blockchain system along with access authorization data to extract relevant data on contributions and other elements, including the governing algorithm for computing earned equity under the contract covering the home finance arrangement, itself encoded on the housing instrument data blockchain (504). The housing instrument data blockchain system implements its access protocol to determine if the balancing engine has access to the requested data. After verification that access is permitted, the balancing engine receives this data via a receiving unit, and the processing unit associated with the balancing engine updates the earned equity balance (residual account) of the homeowner (506). The balancing engine sends this updated balance along with details of the computation to a transmitting unit, which writes it to the housing instrument data blockchain along with details of the computation itself (508). The balancing engine sends via a transmitting unit, the updated earned equity value to a website accessible to the homeowner and the investor where the new value is reported (510). The balancing engine via a transmitting unit alerts the homeowner and the investor (or an artificial intelligence entity representing the investor), who may be offline, of the updated earned equity value via email or an SMS message through a mobile phone or other receiving device (512).

In system **100,** the input data for the balancing engine **108** resides on the housing instrument data blockchain **120** and is generated by multiple data engines **110** residing on one or more servers controlled by the managing entity **106.** Each data engine **110** operates for the purposes of creating, gathering, updating, processing, storing, and communicating at least one time series of at least one data parameter.

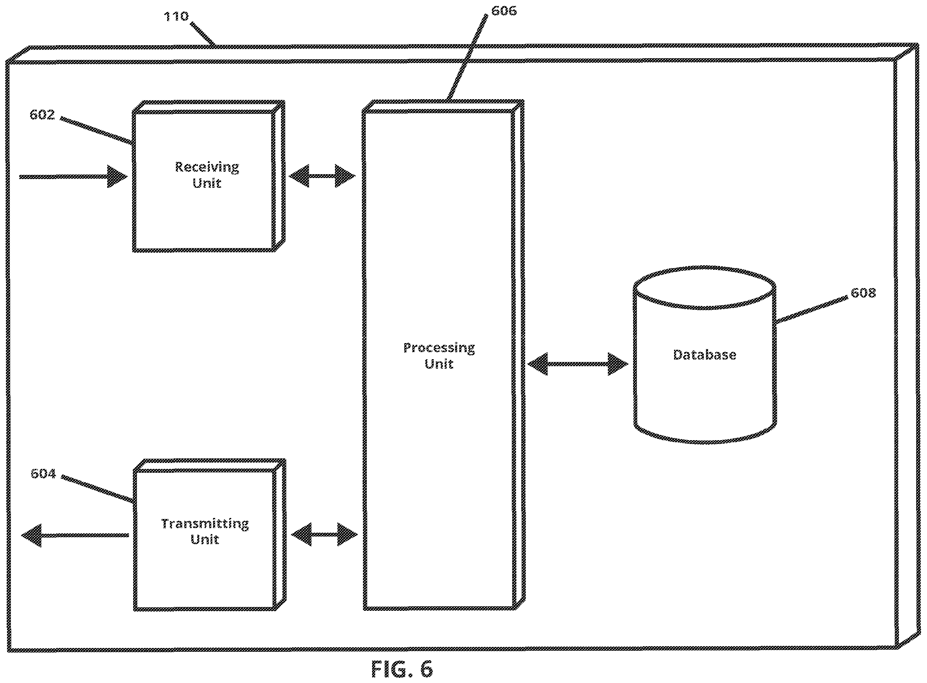

FIG 6. illustrates a valuation engine, which provides an exemplary embodiment of a data engine **110** of system **100,** operating on a processing server controlled by the managing entity **106.** A valuation engine **110** creates and updates a time series of house values for the home that is subject to financing by writing to the housing instrument data blockchain **120.** One exemplary embodiment of a valuation engine **110** has a receiving unit **602** that receives data over one or more networks, a transmitting unit **604** that transmits over one or more networks, a processing unit **606** with the computer architecture to execute the exemplary embodiments, and a database **608** for storing data.

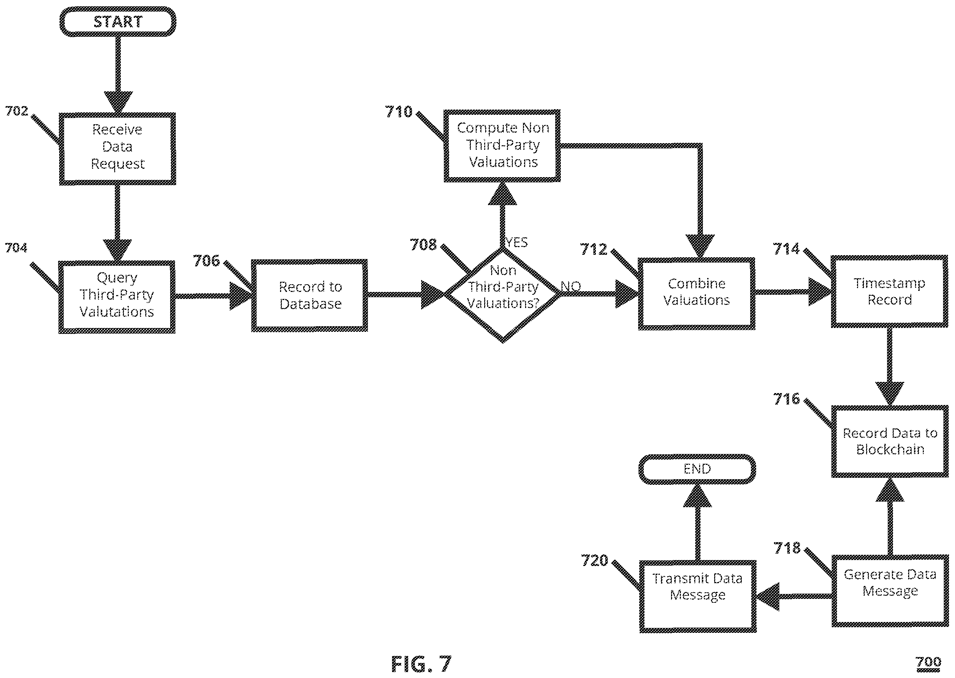

An embodiment can be understood with reference to FIG. 7, a flow diagram (700) illustrating the process of receiving an equity valuation request, executing an equity valuation using the processing server of FIG. 6, and issuing a transaction message in accordance with exemplary embodiments. The valuation engine receives a data request corresponding to the equity valuation request (702). The valuation engine through one or more receiving units collects third-party valuations via a query (704). The valuation engine encodes these valuations in a database (706). Through a processing unit, the valuation engine generates, when applicable (708), one or more non-third-party valuations (710) and combines both the third-party valuations and the non-third-party valuations (712) using one or more statistical procedures into an operative valuation for use by the balancing engine. Through a transmitting unit, the valuation engine writes the operative valuation to the housing instrument data blockchain along with a timestamp and a record of the calculation (714), including the third-party and non-third-party valuations, the methodology used to compute the non-third-party valuations, and the methodology used to compute the operative valuation (716). The valuation engine generates a data message (718) and sends via a transmitting unit (720), the new operative valuation along with the third-party and non-third-party valuations to a website accessible to the homeowner and the investor where these valuations are reported. The valuation engine via a transmitting unit alerts the homeowner and investor (or an artificial intelligence entity representing the investor), who may be offline, via email or an SMS message through a mobile phone or other receiving device of the new operative valuation if they have requested updates of the operative valuation generally or upon certain values being realized.

To compute non-third-party valuations, the valuation engine requires data from third-party sources including at least housing transaction data. A receiving unit of the valuation engine receives data from third-party providers automatically or when prompted by the managing entity. The valuation engine formats this data appropriately and adds the data to a housing database after processing it to make it consistent with the data structure in the database. Data may include appraisals of the value of the home being financed or of other homes.

Other data elements, including at least implicit rent, depreciation, and property tax liability, are governed by other data engines operating in a manner similar to the valuation engine.

The managing entity **106** maintains, on a least one processing server controlled by a managing entity, a contract engine **112** embodied in at least one processing unit **806,** at least one receiving unit **802,** and at least one transmitting unit **804** for purposes of initiating, implementing, enforcing, and updating the housing finance arrangement between at least a homeowner **102** and an investor **104.** Input data for the contract engine **112** resides in a housing instrument data blockchain system **120.**

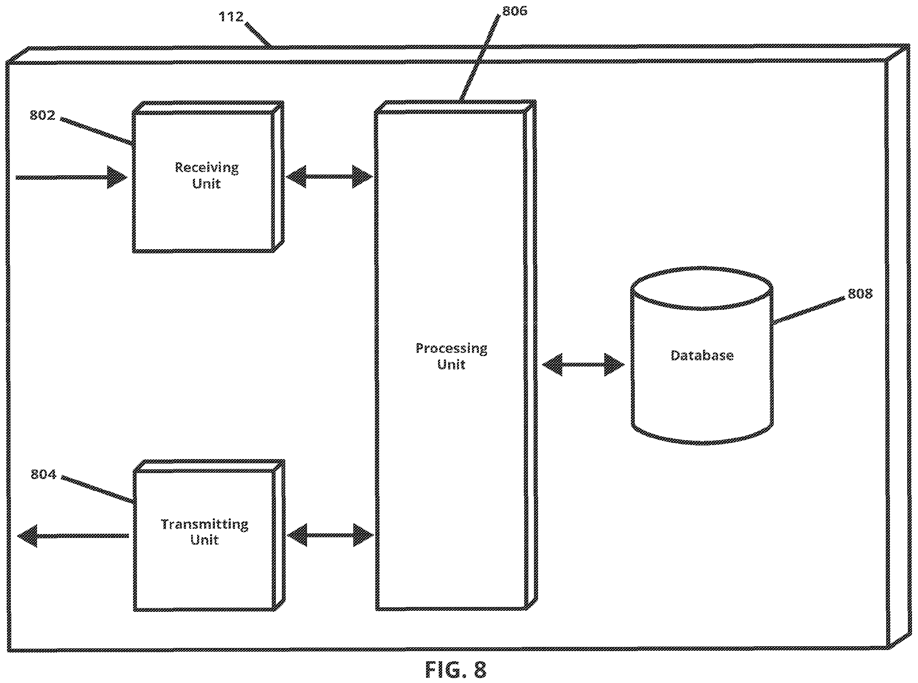

FIG. 8 illustrates an exemplary embodiment of the contract engine **112** of system **100** with a receiving unit **802** designed to receive data over one or more networks, a transmitting unit **804** to broadcast data over one or more networks, a processing unit **806** with the computer architecture to execute the exemplary function of the embodiment described, and a database **808** for storing data.

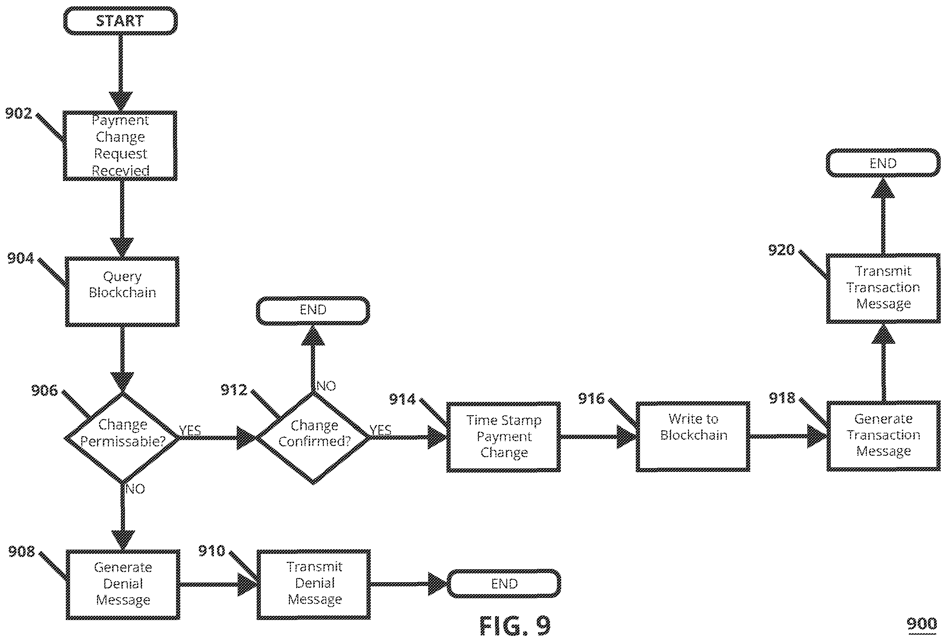

FIG. 9 is a flow diagram illustrating the process of addressing a homeowner's request in accordance with exemplary embodiments (900). The homeowner may want to change the level of payments to the investor, effectively refinancing the home finance arrangement.

The homeowner accesses the website operated by the managing entity and requests a change in the level of the payment, generating a transmission message sent through a transmitting unit to the receiving unit of a contract engine controlled by the managing entity (902). The contract engine processing unit sends through a transmitting unit a query of the housing instrument data blockchain system along with access authorization data to extract relevant information including necessary contract information and other data including at least the level of earned equity (904). The housing instrument data blockchain system implements its access protocol to determine if the contract engine has access to the requested data. After verification that access is permitted, the contract engine receives this data via a receiving unit, and the processing unit associated with the contract engine determines if the change in payment is permissible under the contract without further investor approval (906). If the change is not permissible, the contract engine generates a denial message (908) and sends it to the website where it is displayed (910). The contract engine simultaneously alerts the homeowner, who may be offline, via email or an SMS message via a mobile phone or other receiving device informing the homeowner whether the change in payment level has been approved or denied and, if approved, asking the homeowner to confirm the change (912). If the change is confirmed, a confirmation message is generated, sent through a transmitting unit associated with the website to a receiving unit associated with the contract engine. The contract engine transmits through a transmitting unit a query of the housing instrument data blockchain system along with access authorization data to secure permission to write the change consisting of at least the change in payment level along with the date and time the change is effective (914) onto the housing instrument data blockchain. The housing instrument data blockchain system implements its access protocol to verify that the contract engine has the requisite permissions. After receiving verification of the permissions through a receiving unit, the contract engine, through a transmitting unit writes the change data onto the blockchain, creating a record of the change in level of payments on the blockchain (916).

The contract engine, through a transmitting unit, generates (918) and sends (920) a second confirmation message to a webpage, and the webpage, which is visible to the homeowner and investor, reports that the change is in effect as of the specified date and time. The contract engine through a transmitting unit simultaneously alerts the homeowner and investor, who may be offline, via email or via an SMS message accessible by mobile phone or other receiving device that the change is in effect as of the specified date and time. This configuration results in an almost instantaneous, low-cost change in the terms of the financing arrangement via the same website that allows the homeowner to track payments made and earned equity accumulated. In future iterations of earned equity accumulation, the balancing engine takes into account the different payment level, adjusting the amount of accumulation accordingly so that the impact is economically exactly what is appropriate for both the homeowner and the investor. The investor is not affected in net by the change in financing terms because the adjustment in the rate of accumulation of earned equity precisely offsets whatever the change in payment level is.

In a different embodiment, there is a mortgage component, as well as an equity component, in the financing arrangement, the investor holds both positions, and part or all of the payment from the homeowner to the investor is a mortgage payment. In this embodiment, the same kind of mechanism as the one just described can be employed with the same result: Refinancing can be low-cost, nearly instantaneous, and without any net economic consequence for the investor.

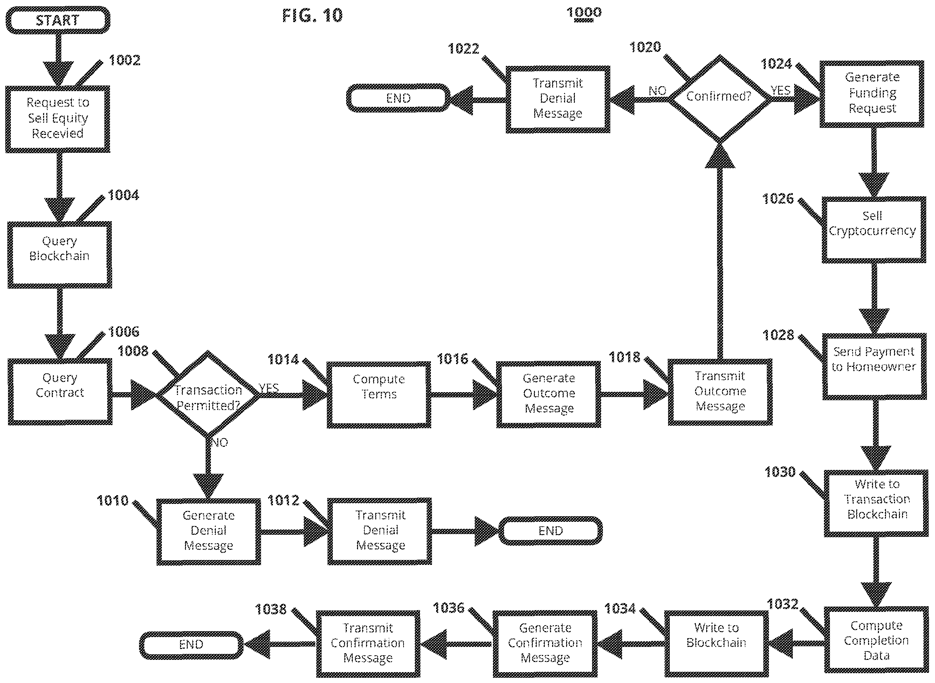

An embodiment can be understood with reference to FIG. 10, a flow diagram illustrating a process for approval of an equity adjustment and issuance of a transaction message requesting authorization and/or issuance of a transaction message confirming the transaction in accordance with exemplary embodiments (1000). Also referring to the prior embodiment, a homeowner may wish to sell some of the homeowner's earned equity back to the investor in exchange for proceeds in the form of a specified fiat currency under a contractual right to do so without further investor approval, where in a particular embodiment the investor is a cryptocurrency portfolio fund affiliated with the managing entity, and the cryptocurrency portfolio fund holds the investor-side housing equity interest in the particular home.

The homeowner accesses a "managing entity website" controlled by the managing entity and initiates a request to buy or sell equity, generating a transmission message sent through a transmitting unit to the receiving unit of a contract engine controlled by the managing entity (1002). The data for input into the contract engine resides in a housing instrument data blockchain. The contract engine transmits through a transmitting unit a query of the housing instrument data blockchain system along with access authorization data to extract relevant data including the applicable contract terms and the current values of relevant parameters, including at least the current operative home valuation, stored on the blockchain (1004). The housing instrument data blockchain system implements its access protocol to determine if the contract engine has access to the requested data. After verification that access is permitted, the contract engine receives the data via a receiving unit, including contract data pertinent to the question of whether the transaction is permissible (1006), and the processing unit associated with the contract engine determines whether the requested transaction is permissible under the contract without further investor approval given the current value of the relevant parameters extracted from the housing instrument data blockchain (1008). If the requested transaction is not permissible, the processing unit associated with the contract engine generates a denial message (1010) and transmits the denial message to the homeowner and investor (or an artificial intelligence entity representing the investor), who may be offline, by email, SMS message, or otherwise (1012).

The assessment comprises tasks including at least determining whether a minimum level of earned equity will remain after the requested sale of earned equity by the homeowner is carried out, a level sufficient to support the homeowner's maintenance obligation. As part of the assessment, the contract engine computes the amount of equity in percentage (of home value) terms and the corresponding dollar amount based on the house value extracted from the housing instrument data blockchain for the requested sale of equity by the homeowner (1014). The contract engine generates an outcome message (1016) and sends the message through a transmitting unit to the managing entity website accessible to the homeowner and investor (1018). The request outcome message contains request outcome data that includes at least: (i) the percentage and dollar value of the earned equity that the homeowner proposes to sell to the investor; (ii) whether the request was approved or denied; (iii) in the case of denial, the applicable reasons for denial; and (iv) in the case of approval, the time limits for confirmation by the homeowner along with a request for confirmation and payment receipt instructions from the homeowner.

The managing entity website reports through a graphical user interface or other accessible display option the approval or denial along with the other applicable request outcome data. The contract engine via a transmitting unit notifies the homeowner and investor (or an artificial intelligence entity representing the investor), who may be offline, by email, SMS message, or otherwise whether the request was approved or not along with the request outcome data relevant to each party. If the request was approved, then the notification to the homeowner includes a confirmation request asking the homeowner to confirm the sales transaction (1020). If the contract engine does not receive confirmation from the homeowner within a certain amount of time, then the contract engine periodically sends through a transmitting unit to the managing entity website accessible to the homeowner further confirmation request messages with confirmation request data that include at least: (i) the percentage and dollar value of the earned equity that the homeowner proposes to sell to the investor; and (ii) the time limits for confirmation and payment by the homeowner along with a request for confirmation and payment receipt instructions from the homeowner.

The contract engine, via a transmitting unit, notifies the homeowner, who may be offline, by email, SMS message, or otherwise of the request for confirmation along with the relevant confirmation request data. If the homeowner declines to confirm or the time period for confirmation lapses, the contract engine sends through a transmitting unit a message to the managing entity website accessible to the homeowner and investor reporting that the homeowner has denied confirmation of the transaction or that the confirmation period has lapsed (1022). The managing entity website reports through a graphical user interface or other accessible display option denial of the confirmation or lapse of the confirmation period. The contract engine via a transmitting unit notifies the homeowner and investor (or an artificial intelligence entity representing the investor), who may be offline, by email, SMS message, or otherwise of the denial of the confirmation or the lapse of the confirmation period.

If the homeowner confirms the transaction on the managing entity website, a transmitting unit associated with the website sends a message indicating confirmation along with the homeowner's payment instructions to a receiving unit associated with the contract engine. The contract engine through a transmitting unit sends payment data that includes at least the amount due and payment receipt instructions from the homeowner to the receiving unit of the cryptocurrency portfolio fund **104**. In this embodiment, the cryptocurrency portfolio is designed to hold only real estate positions and not cash. The processing unit of the cryptocurrency portfolio fund determines as per that design that no cash is available for the cryptocurrency portfolio to purchase the equity being offered by the homeowner. Because there is no cash to pay the homeowner in the sales transaction, the processing unit of the cryptocurrency portfolio fund sends a funding request message through a transmitting unit to a cryptocurrency trading engine operated by the managing entity (1024).

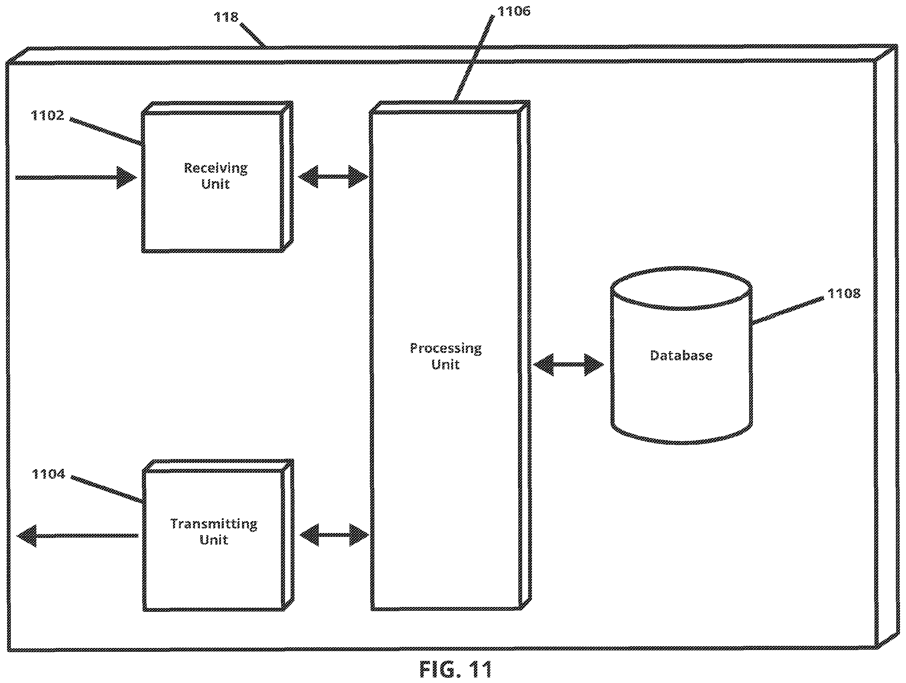

An embodiment of the cryptocurrency trading engine **118** can be understood with reference to FIG. 11. The funding request message contains funding request data that includes at least: (i) the cryptocurrency that needs to be issued; (ii) the amount of issuance; (iii) the specified fiat currency for the proceeds; and (iv) payment receipt instructions from the homeowner. The cryptocurrency trading engine includes an embedded payment network and blockchain-based transaction mechanism **(1102, 1104, 1106,** and **1108)** that allows the engine to initiate purchases and sales of the cryptocurrencies it oversees nearly instantaneously on market exchanges, with verified credits or debits in the appropriate fiat currency accruing to a "managing entity bank account" or "MEBA" for short, which is a bank account or other repository controlled by the managing entity. The MEBA is held at a third-party or proprietary bank and is fully authorized and enabled to engage in electronic deposits and transfers.

Various ways to operate such a payment network and blockchain-based transaction mechanism to execute cryptocurrency transactions nearly instantaneously using appropriate verification methods are understood by those skilled in the art. See, e.g. US 9,870,562 B2. The cryptocurrency trading engine through a transmitting unit **1104** sends orders to sell newly issued units of the relevant cryptocurrency to the receiving units of one or more third-party or proprietary exchanges on which the cryptocurrency is traded. After execution (1026), the exchange confirms the sale and transmits funds in the relevant fiat currency, perhaps after one or more intervening transactions that convert intermediate cryptocurrencies used in the transaction into the desired fiat currency, to the MEBA. The exchange generates a trade confirmation message and sends it to a receiving unit **1102** of the cryptocurrency trading engine. The cryptocurrency trading engine through a transmitting unit sends a payment request, which includes the payment receipt instructions submitted by the homeowner and received by the cryptocurrency trading engine from the contract engine as part of the funding request, to the MEBA requesting issuance of funds to the homeowner. After issuance of funds (1028) and any required banking system confirmations, the MEBA sends a payment completion message to a receiving unit of the cryptocurrency trading engine. Data for cryptocurrency transactions are recorded on a cryptocurrency transaction blockchain **1108.** After securing the required permissions from the cryptocurrency blockchain system, the cryptocurrency trading engine through a transmitting unit writes the data for the sale transaction onto the cryptocurrency transaction blockchain (1030).

The methods of operating a cryptocurrency through one or more such blockchain systems will be clear to one skilled in the art. The cryptocurrency trading engine through a processing unit **1106** computes completion data (1032) and, through a transmitting unit, sends a transaction completion message to a receiving unit of the contract engine. The transaction completion message contains completion data that includes at least (i) confirmation that the transaction is complete and payment has been made; (ii) the percentage and dollar value of the earned equity that the homeowner sold to the investor; (iii) the home valuation used to set the terms of the sale; and (iv) the date and time that the sale was completed. The contract engine transmits through a transmitting unit a query of the housing instrument data blockchain system along with access authorization data to secure permission to write the completion data onto the blockchain. The housing instrument data blockchain system implements its access protocol to verify that the contract engine has the requisite permissions. After verification, the contract engine, through a transmitting unit writes the completion data onto the blockchain, creating a record on the blockchain of the sale of earned equity by the homeowner to the investor (1034). The contract engine generates a transaction confirmation message (1036), and, through a transmitting unit, sends the transaction confirmation message containing at least the completion data to the managing entity webpage (1038), and the managing entity webpage, which is visible to the homeowner and investor, reports confirmation of the transaction along with the relevant completion data. The contract engine simultaneously alerts the homeowner and investor, who may be offline, via email or via an SMS message accessible by mobile phone or other receiving device that the transaction is complete along with the relevant completion data.

This configuration results in an almost instantaneous, low-cost increase in the financed amount via the same website that allows the homeowner to track payments made and earned equity accumulated. In future iterations of earned equity accumulation, the balancing engine takes into account the reduction in the homeowner's earned equity as a result of selling a portion of it to the investor. The instantaneous execution and low cost stands in stark contrast to increasing the amount financed through a conventional mortgage arrangement which would require refinance of the existing mortgage or fresh borrowing subordinate to the existing mortgage, steps that typically take weeks, if not months, and often involve offline interactions along with accessing disparate websites.

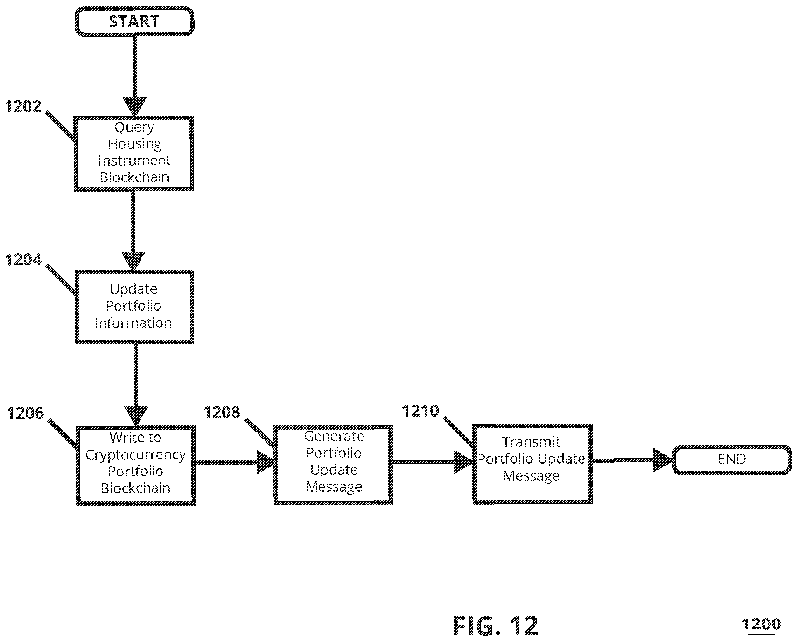

Data for the cryptocurrency portfolio resides on a cryptocurrency portfolio blockchain. An embodiment can be understood with reference to FIG. 12, a flow diagram (1200) illustrating the process of updating the cryptocurrency portfolio blockchain system **1108** and transmitting a transaction message relating to valuation of the portfolio in accordance with exemplary embodiments.

A portfolio engine **118** is embodied in a processing unit **1106,** at least one receiving unit **1102,** and at least one transmitting unit **1104** operated on a processing server by the cryptocurrency portfolio fund. Periodically, the cryptocurrency portfolio fund, which in this embodiment is affiliated with the managing entity, or an artificial intelligence entity representing the cryptocurrency portfolio fund, sends a query through a transmitting unit of the portfolio engine to the housing instrument data blockchain system along with access authorization data to extract relevant data on its equity position and the most current valuation data with respect to the homes in its portfolio as well as other information (1202). The housing instrument data blockchain system **120** implements its access protocol to determine if the portfolio engine has access to the requested data. After verifying that access is permitted, the portfolio engine **110** receives the relevant data via a receiving unit. A processing unit associated with the portfolio engine updates information about the cryptocurrency portfolio (1204), and the portfolio engine, after securing the required permissions from the cryptocurrency blockchain system, writes through a transmitting unit the updated information onto the cryptocurrency portfolio blockchain (1206). The portfolio engine generates a portfolio update message (1208) and sends via a transmitting unit, the updated portfolio information to a website accessible to investors in the cryptocurrency portfolio where the updated information is reported (1210). This information includes at least the valuation of the portfolio under one or more specific valuation approaches along with the corresponding value per unit of the cryptocurrency. In one or more embodiments, other features such as an investor approval step may be added to the process for sale of earned equity to the investor by the homeowner and an analogous process can be applied for cases in which the homeowner buys equity from the investor instead of selling equity to the investor.

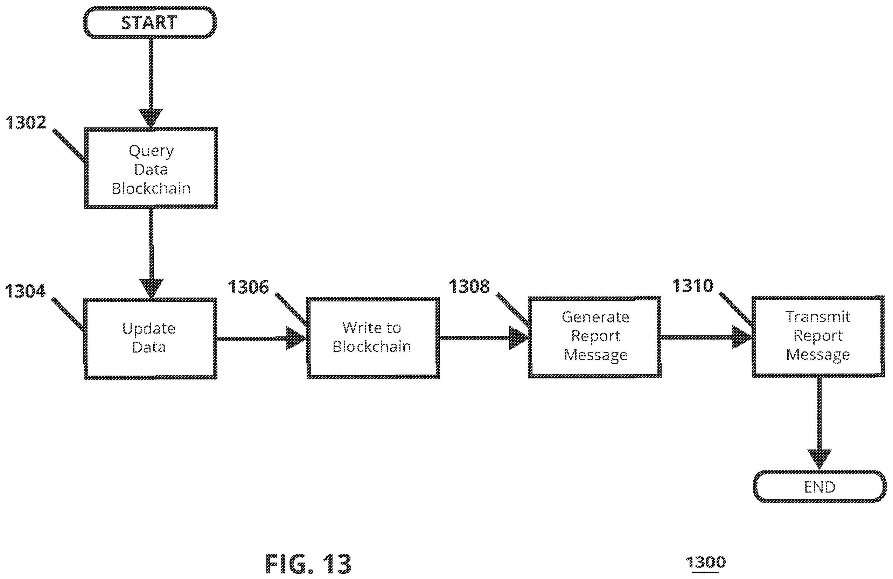

An embodiment can be understood with reference to FIG. 13, a flow diagram (1300) illustrating the process for extracting and organizing a data ensemble from the housing instrument data blockchain system of FIG. 1, recording this data ensemble on the housing instrument data blockchain system, and issuing a data report message in accordance with exemplary embodiments. Periodically, the managing entity or an artificial intelligence entity representing it, sends a message to a receiving unit of the contract engine initiating a data ensemble update entry onto the housing instrument data blockchain. The contract engine transmits through a transmitting unit a query of the housing instrument data blockchain system along with access authorization data to extract relevant data that characterizes the current state of each housing instrument including at least payment rates and terms, the next payment date and amount, the current level of homeowner earned equity, current levels of key parameters including at least implicit rent and home value, and other data that characterizes the current state of the housing instrument (1302). The housing instrument data blockchain system implements its access protocol to determine if the contract engine has access to the requested data. After verification that access is permitted, the contact engine receives this data via a receiving unit, and the processing unit associated with the contract engine updates the data ensemble for the housing instruments (1304). The contract engine sends this updated data ensemble to a transmitting unit, which writes it onto the housing instrument data blockchain (1306). The contract engine generates a report message containing the updated data ensemble (1308) and sends the report message via a transmitting unit to a website accessible to the homeowner and the investor where the updated data values are reported (1310).

At any time, the homeowner or investor may access the managing entity website and observe payment rates and terms including the next payment date and amount, the current level of homeowner earned equity, current levels of key parameters, including at least implicit rent and home value, and other data that characterizes the current state of the housing instrument. Behind this capability is continuous updating by the website network of the website information through reading the housing instrument data blockchain which is itself continuously being updated by various data and process engines including at least the valuation engine and contract engine maintained by the managing entity.

The embodiments so far describe a system in which the homeowner can access a single website and various GUI-based pages in order to engage in a large number of functions at low cost and nearly instantaneously including at least: monitoring earned equity levels and current data about the governing housing instrument, making payments to the investor, refinancing by changing the level of payments or paying down the equity held by the investor, and increasing the level of financing on current market terms by selling earned equity back to the investor. The fragmentation, high cost, and lack of coordination that characterizes current technology applicable to housing finance is cured by this system. Central to the system is a particular balancing mechanism.

*Balancing Mechanisms Underlying DOOR Housing Instruments*

Each DOOR balancing engine is characterized by a particular balancing mechanism. The examples of DOOR instruments presented above involve situations in which:

(i) there is a single homeowner;

(ii) there is a single investor;

(iii) the homeowner is making a positive net contribution when the housing arrangement is analyzed as if it is a joint venture; and

(iv) the homeowner receives earned equity, an unleveraged share of the home at sale or termination of the DOOR contract, in exchange for net contributions made during the life of the instrument.

DOOR arrangements may involve multiple homeowners, multiple investors, positive net contributions by investors instead of homeowners, and the use of residual accounts other than earned equity to compensate for net contributions. It is expeditious to explain the DOOR balancing mechanism by beginning with the base case in which the restrictions (i)-(iv) above hold. After showing how the DOOR balancing mechanism operates in this case, it will be clear to one skilled in the art how the innovation applies more generally, and subsequent sections indicate that breadth through some additional discussion and illustrative examples, according to one or more embodiments.

This section begins by describing a class of accumulation algorithms for earned equity that are disclosed for the base case, specifies a particularly interesting "purchase parity" variant in that class, and then discusses the theoretical basis for both the class of algorithms and the purchase parity variant. The purchase parity accumulation algorithm underlies the balancing mechanism for the MM-0 embodiment explicated in the previous section. That embodiment is a direct arrangement because the associated balancing mechanism implements the MM-0 housing arrangement itself. As will be clear from embodiments of the invention described later, the same balancing mechanism built around the purchase parity accumulation algorithm is useful in many cases in which the embodiments are not direct arrangements. Other accumulation algorithms in the class underlie other balancing mechanisms applicable to other embodiments of the invention.

We start with the net contribution of the homeowner. As discussed above, major positive elements include mortgage payments or other payments to the investor, property tax payments, and maintenance expenses. The major negative element is the implicit rental value of living in the home. All of these elements are continuous flows, accruing over time. The flow nature is evident from the standard practice of pro-rating mortgage payments and property tax liability on a daily basis when a property is purchased or sold.

We define the flow rate of net rent, $n_r$, in terms of: r, the flow rate of gross rent, which is the value of occupancy for the homeowner; d, the depreciation rate of the structure; p, the rate at which property tax liability accrues; and $f$, the flow rate of other non-financial expenses. For simplicity, it is assumed that the homeowner's maintenance obligation includes all depreciation charges. Net rent does not include the cost of servicing any mortgages or other debt-like elements. Net rent therefore is the flow of returns that would accrue to an unleveraged owner of the property:

$$n_r(t) = r(t) - p(t) - d(t) - f(t)$$

where t represents time in years, indicating that each of the flow elements in the equation may vary over time. Dividing by *H(t),* the home value at time t, results in rate of net rent accrual as a proportion of home value:

$$v(t) = \frac{n_r(t)}{H(t)} \qquad (1)$$

Turning to the financing elements, the homeowner is making mortgage contributions and/or scheduled payments at rate:

$$m(t) = m_p(t) + m_i(t) + s_p(t)$$

where, in the case of mortgage payments, $m_p(t)$ is the rate of principal contributions while $m_i(t)$ is the rate of interest contributions. $s_p(t)$ is the rate of scheduled payments, if any. We use the word contributions rather than payments because part of the financing may be provided by the homeowner implicitly, e.g. as committed equity, discussed below, for which interest contributions are imputed rather than paid. Normalizing these financial contributions by home value results in a rate of financial expense accrual as a proportion of home value:

$$\mu(t) = \frac{m(t)}{H(t)}$$

Now the net contribution rate per year of the homeowner as a proportion of home value is:

$$\gamma(t) = \mu(t) - \nu(t) \qquad \cdot \qquad (2)$$

Suppose that the earned equity proportion at time t is $E(t)$. Then define the grossed-up net contribution rate of the homeowner as:

$$\gamma^*(t) = \frac{\gamma(t)}{1 - E(t)} \qquad (3)$$

Now the class of accumulation algorithms for earned equity in the claim may be defined. Suppose that the instrument is held for a period of time $T$. Divide this period of time, $T$, into n equal sub-periods of length $\frac{T}{n}$. Consider the following discrete approximation for the earned equity proportion:

$$E_n(t) = 1 - e^{-\sum_{i=1}^{n} \gamma^*(t_{i-1})\omega(t_{i-1})\frac{T}{n}} \qquad (4)$$

where $t_{i-1}$ is the time at which period i begins, $t_i$ is the time at which period i ends, and $\omega(t)$ is a weighting function. Removing the approximation results in the exact, continuous-time earned equity proportion:

$$E(T) = \lim_{n \to \infty} E_n(T) \qquad (5)$$

Equations (4) and (5) define a class of accumulation algorithms with the different members of the class defined by different weighting functions, $\omega(t)$.[1] For instance, ANZIE-DOOR, one of the examples of a DOOR variant is defined by the following weighting function:

$$\omega(t) = \frac{i_f(t)}{\alpha(t) + \nu(t)}$$

where $i_f(t)$ is a suitable long-term riskless rate, $\alpha(t)$ is the expected appreciation rate for the house, and $v(t)$ is defined as in equation (1) above.

Imposing one particular weighting function, $\omega(t) = 1$, results in the purchase parity DOOR variant, defined by the following earned equity accumulation algorithm:

$$E^{pp}(T) = \lim_{n \to \infty} E_n^{pp}(T) \qquad (6)$$

where

$$E_n^{pp}(T) = 1 - e^{-\sum_{i=1}^{n} \gamma^*(t_{i-1})\frac{T}{n}} \qquad (7)$$

This variant has the trait that the accumulation of earned equity is the same as if the net contribution flow at each instant of time is used to purchase additional house value at the house price existing at that instant. To see this point, note that for an instant of time, *dt:*

$$E^{pp}(t + dt) - E^{pp}(t) = 1 - e^{-\gamma^*(t)dt}\big(1 - E^{pp}(t)\big) - E^{pp}(t)$$

$$= 1 - (1 - \gamma^*(t)dt)\big(1 - E^{pp}(t)\big) - E^{pp}(t) \qquad (8)$$

$$= \gamma^*(t)\big(1 - E^{pp}(t)\big)dt = \gamma(t)dt$$

[1] The limit does not result in simply shifting the sum in the exponent of equation (4) to an equivalent integral because $\gamma^*(t)$ is a function of $E(t)$ itself. For the discrete approximation, it is possible for each time period i to use the value of $E_n(t_{i-1})$ from the end of the previous time period to compute $E_n(t_i)$ and thus to calculate $E_n(T)$ recursively.

ignoring the insignificant terms in higher powers of dt. Equation (8) indicates that the increase in the earned equity portion over a small instant of time dt years is just the annualized net contribution rate as a proportion of house value multiplied by *dt.* The homeowner effectively purchases additional home equity in the exact dollar amount of the homeowner's net contribution. Thus the name "purchase parity" for this variant.

This variant has appealing properties. Because the homeowner effectively purchases home equity from the investor at the market value of that equity, both earn exactly the economic return on the home for their unleveraged positions. If either is leveraged, then that party earns the equivalent leveraged return. In the case of "unitary" DOOR instruments, all of the financing is provided by the investor and, as a consequence, the investor is effectively unleveraged and earns exactly the economic return on the home on the investor's combined position. Combining unitary DOOR investments into a portfolio therefore results in a vehicle that earns the combined exact economic return on the underlying homes. That property makes unitary DOOR instruments ideal for creating portfolios that replicate housing returns across regions, nations, or the world, portfolios that effectively replicate the returns on housing indices approximated or created by the set of homes underlying the instruments in the portfolio.

Although the purchase parity variant has strong appeal and is a central aspect of the invention, other variants defined by different weighting functions also are relevant for commercial applications. Weighting functions greater than 1 create higher amounts of earned equity compared to purchase parity, and weighting functions less than 1 create lower amounts of earned equity compared to purchase parity. These weighting functions are a means of creating subsidies or adjusting for risk or other aspects that are not reflected in the calculation of contributions made or positions accumulated by the party making the contributions. Under the purchase parity variant, after purchase of a particular position, the purchasing party earns the economic return inherent to that position. Up to this point, the only position considered has been earned equity, an unleveraged stake in the home. However, as indicated in the next section, under the claimed approach many other positions or adjustments are possible as residual accounts in addition to or instead of earned equity.

So far, the claimed class of DOOR variants has been described in terms of continuous flows of quantities including at least implicit rent, depreciation, property taxes, and mortgage payments. When a particular payment at time *t,* *P,* is discrete rather than part of a flow, then $\Delta E$, the increase in earned equity is:

$$\Delta E = \frac{P}{H(t)}\,\omega(t). \qquad (9)$$

Discrete elements may be added to flow elements by adding discrete elements governed by equation (9) to continuous elements described by equations (4) and (5). In the purchase parity case, both the discrete and flow portions may be calculated as direct purchases of earned equity at the prevailing house price.

Approximations may be used. For example, one might use $E_n(t)$ instead of $\lim_{n\to\infty} E_n(t)$ for some value of *n.* Or, in the purchase parity case, one might compute total net contribution by summing the contributions during each period using values halfway through the period for flows and then dividing by the house price halfway through the period. Use of approximations is encompassed by the invention. However, it is important to note that in some instances, approximations are inadequate unless they are very close to the exact answer. For example, the purchase parity variant has the property that both the investor and the homeowner earn precisely the *ex post* house return for each increment of investment if the calculation is exact. This property is critical for creating portfolios of DOOR instruments that amount to housing return indices or that precisely capture housing returns. Even cogent approximation methods, such as using the values at the midpoint of each period, may produce cumulative returns that diverge significantly from the actual ones, especially for short holding periods.

There is an analogy between the problem of strategic trading with respect to the taxation of capital gains and the problem of balancing the housing arrangement between an investor and a homeowner. In the capital gains situation, an ideal accrual tax would tax gains and allow losses as they occur. An equivalent approach is to assess the taxes on the gains and losses as they occur and then cumulate them with interest, to be paid when the asset is sold. If, instead, tax is assessed and paid only on the total gain or loss at sale without taking into account the history of the gains and losses during the holding period, there is a problem. Taxpayers have an incentive to defer gains by not selling the asset ("lock in") or to sell the asset to realize losses (strategic loss taking). In both cases, the government loses revenue and investor behavior is distorted in that investors hold or sell assets based on the tax implications rather than on the expected pre-tax returns of the assets. Alan Auerbach (see, A.J. Auerbach, Retrospective Capital Gains Taxation, American Economic Review, vol. 81, pp. 167-178 (March 1991)) shows that there is a unique solution for the tax treatment at sale which eliminates the distorting incentives and restores economic balance in the sense that investors hold or sell an asset based only on its economic returns relative to other assets. For an asset purchased at time 0 and sold at time s, the tax, a proportion of the asset value, $A_s$, at that time is:

$$T_s = (1 - e^{-\tau r_f s})A_s \tag{10}$$

where $\tau$ is the tax rate and $r_f$ is a suitable riskless interest rate.

The housing arrangement issue is precisely analogous. The party making net contributions can be compensated by a tax imposed on the other party at sale. Without loss of generality, take the homeowner to be the party making net contributions in an arrangement in which the other party is an investor. Then the investor is in the position of the asset owner in the tax situation, and the homeowner is in the position of the government. The homeowner's net contribution gives rise to a tax liability for the investor. Analogously to the tax setting, there are at least three ways to liquidate the tax liability:

(1) By an immediate offsetting payment from the investor to the homeowner, paying the tax on the spot;

(2) By noting the tax due, allowing it to accumulate at a suitable rate of interest, and then having the investor pay the cumulated amount to the homeowner at sale; and

(3) Taxing the asset at sale by reserving a proportion of the asset for the homeowner.

The third solution is analogous to the earned equity approach discussed above, and the unique solution that does not disturb incentives in the case of housing arrangements has the same form as the solution expressed by equation (10). The problematic incentives arise if the housing arrangement becomes more or less favorable to the homeowner versus a market deal, motivating the homeowner unduly to hold onto a deal when it becomes unfavorable to the investor or to refinance when it goes in the other direction and becomes unfavorable for the homeowner. This problem requires making the terms available to the homeowner in the market for homes more favorable to the investor to offset the instances in which market conditions cause the homeowner to refinance to the detriment of the investor. This problem with static housing arrangements is the same one noted earlier in this application.

To translate equation (10) into a unique solution for accumulating earned equity in the housing arrangement, one element is missing: the tax rate. Clearly, one factor that will be part of the tax rate is the positive net contribution of the taxing party, expressed as a rate in the context of equation (10). However, the net contribution rate needs to be normalized by a rate of return, the ratio reflecting the proportion of that rate of return that is contributed by the taxing party. That is, after also allowing for grossing up, an element discussed subsequently, the tax rate would take the form:

$$\tau(t) = \frac{\gamma^*(t)}{\rho(t)}$$

where $p(t)$ is a rate of return. Now equation (10) translates into equations (4) and (5) with the following weighting function:

$$\omega(t) = \frac{i_f(t)}{\rho(t)}$$

where $i_f$ is equivalent to $r_f$, different notations for the same suitable riskless rate. As discussed above, the choice of $p(t)$ and thus of $\omega(t)$ is open, depending on the goals of the housing arrangement. Absent a need to adjust for risk or other factors not otherwise captured in the calculations and absent a need to create a subsidy using $\omega(t)$, choosing $\omega(t) = 1$ is compelling: The purchase parity property of that choice creates market returns for both parties for the interests they receive or retain.

The rationale for grossing up the net contribution, that is, for using $\gamma^*(t)$ instead of $\gamma(t)$, is both clear in Auerbach's arrangement and obvious from the mathematics of equation (8) above. In Auerbach's arrangement the proportion $E(t)$ of any distribution to the asset holder at time $t$ properly belongs to the government because that is the proportion that would be taxed if the asset were sold at time $t$. Similarly, a contribution of amount C $by$ the government to the asset holder is equivalent to a contribution to the joint venture of $\frac{C}{1-E(t)}$ followed by a distribution of amount $C\frac{E(t)}{1-E(t)}$ immediately

back to the government. Thus, the contribution to the joint venture should be grossed up when crediting the government in Auerbach's arrangement or when crediting the party making a net contribution in the housing arrangement.

*Extent of the Disclosed Class*

The sections above detailed the treatment of DOOR housing arrangements in which earned equity is the residual account that maintains economic balance. Net contributions by a party to the arrangement result in accrual of earned equity in favor of that party. The previous section describes the appropriate rate of accrual for a class of accumulation algorithms, each of which define a balancing mechanism.

There are a plethora of other possible residual accounts, and any given arrangement may have more than one account. The extension of the analysis in the previous sections to arrangements that involve residual accounts different from or in addition to earned equity is particularly simple for purchase parity variants. The innovation includes the extension from purchase parity variants to variants with other accrual arrangements, but we take the purchase parity property to be normative in what follows to make the presentation simple and clear.

**Committed equity.** Committed equity is a position similar to a second mortgage except that the holder accrues interest as credits in a net contribution arrangement instead of receiving interest payments. The ANZIE-DOOR variant included committed equity. In that variant, the homeowner's net contributions based on all items other than a down payment or mortgage principal payments translated to earned equity. In contrast, any down payment or mortgage principal payments made by the homeowner became dollar-for-dollar committed equity. For example, assume that an ANZIE-DOOR arrangement applies, a home is purchased for $200,000, the DOOR investor puts in $40,000 of equity, the homeowner makes no down payment, and there is a $160,000 amortizing mortgage for which the homeowner makes both the interest and the principal payments. Suppose that after a few years, the homeowner has made $10,000 in total principal payments so that the mortgage balance is $150,000. Now the homeowner has $10,000 of committed equity, and this $10,000 position accrues interest at an appropriate imputed rate, which counts as part of the homeowner's ongoing net contribution.[2] Under ANZIE-DOOR, the down payment and mortgage payments translate dollar for dollar into committed equity, a treatment for committed equity accumulation equivalent to the purchase parity approach above, and the homeowner accrues earned equity separately to compensate for net contributions stemming from mortgage interest payments, property tax payments, home

maintenance, and other sources. Thus, ANZIE-DOOR is an example of a DOOR instrument for which there is more than one residual account: both committed equity and earned equity. [2] If the house is sold at this point, the proceeds first go to pay the $150,000 first mortgage balance, second to pay the $10,000 in committed equity due the homeowner, and third to the investor as conventional equity proceeds. The investor separately is obligated to pay the homeowner the homeowner's earned equity share, an obligation that binds even if the required earned equity payment exceeds the conventional equity received by the investor at sale.

**Stochastic payments.** In some applications, it is desirable to fix or limit the accumulation of earned equity. One obvious way to do so is to vary the payments made by the homeowner, the investor, or both. If the payments vary with economic conditions such that the rate of net contribution is maintained at zero, the earned equity proportion will remain fixed. In this case, stochastic payments are the residual account.

**Leveraged equity.** In MM-0 arrangements described above and MM-1 arrangements described below, the homeowner accumulates earned equity, which is an unleveraged interest in the home. Rather than use earned equity as the residual account, some form of leveraged equity may be employed. This leveraged equity may play off of the existing mortgage, in which case, the investor and homeowner are sharing the conventional equity in the home. As the homeowner position accrues, it is necessary to know what happens to the mortgage obligation, and it matters whether the obligation is to the investor as mortgagee or to a third party. In one embodiment, the investor is the mortgagee, and the investor transfers responsibility for a corresponding part of the mortgage along with the conventional equity slice as part of the accrual in favor of the homeowner. The transferred mortgage slice is recourse versus the homeowner. In another embodiment, the homeowner essentially buys conventional equity from the investor with a suitable interest rate adjustment on the mortgage if it is held by the investor to reflect the non-recourse nature of the mortgage versus the homeowner. In yet another embodiment, the homeowner accrues an American call option position in exchange for net contributions. Other embodiments for creating accrual of leveraged equity are contemplated, along with associated accrual algorithms for the claimed class of instruments when leveraged equity rather than earned equity is the residual account.

**Separate accumulation accounts.** Instead of earning a debt or equity stake in the home, net contributions may accumulate in a separate account. This account may earn a predetermined interest rate, may earn an interest rate derived from market rates, or may be invested in securities, index funds, or other assets, including cryptocurrencies backed by real estate portfolios. Rules about distributions determine whether and to what extent the party making net contributions may make withdrawals from or liquidate part of the account prior to sale of the home. Limitations on the ability to do so may be desirable for reasons such as ensuring that the party holding the account fulfills their maintenance obligations with respect to the property. SAVING-DOOR is an instance of using a separate accumulation account as the residual account.

**Many other residual accounts.** The innovation includes a plethora of other residual accounts that might be used to balance the housing arrangement. These include but are not limited to almost any kind of debt or equity position in the home as well as to arrangements such as allocating time shares for habitation among the parties. The invention covers all possible residual accounts aimed at achieving economic balance.

It is worth noting again the important role of the dynamic element of the instruments. For example, if the earned equity position of the homeowner is fixed at a particular value and payments by the homeowner are the other element in the arrangement, then the homeowner's payments must vary to hold the net contribution rate at zero. Otherwise, the arrangement begins to favor either the homeowner or the investor and no longer is neutral, and it is not possible to ensure that both parties earn the market rate of return on their positions.

Aside from the use of residual accounts other than earned equity, it is worth noting other ways in which the claimed class is broader than the various examples described above and below. Among other aspects, two dimensions that are particularly important are arrangements in which a party other than the homeowner makes positive net contributions and arrangements in which there are more parties than a single homeowner, a single investor, or a single mortgagee.

In many implementations, the investor rather than the homeowner accrues earned equity or additions to some other residual account. A prominent example is COZIE-DOOR, a class of instruments in which a homeowner receives payments on an ongoing basis or in lump sum from an investor in exchange for an earned equity or committed equity position in the home. In one version of COZIE-DOOR, the investor pays an annuity to a homeowner and then accrues earned equity as the annuity payments accrue. Property tax, home insurance, or other payments might be added to the arrangement in compensation for a greater amount or faster accrual of earned equity.

In other implementations, there may be multiple investors, multiple homeowners, or multiple mortgagees. In some cases, these situations create the need to facilitate accruals of earned equity or other residual accounts to more than one party. Each such party may be making distinct contributions different in type or amount from the contributions made by other parties. Relative contributions of the parties may shift as economic variables change in value.

A further feature of neutral DOOR instruments is that it is possible to shift seamlessly between them by freezing final values for one instrument and then immediately inserting the balances into a new, different one. For example, the homeowner might move from an instrument such as MM-0, which involves earned equity, to a variant that involves a leveraged equity position. If the investor and/or potential mortgagee agree to an arrangement permitting such flexibility, this change in either direction may be accomplished nearly instantaneously online. An arrangement of this sort is IS-A-DOOR.

*MM-1 Housing Finance Arrangements*

MM-0 housing finance arrangements are embodied in a unitary instrument. There is no third party who provides mortgage or any other kind of finance. In contrast, MM-1 housing finance arrangements require a multilateral instrument. A third party provides mortgage finance, and the DOOR investor provides the conventional equity finance. As a consequence, MM-1 introduces the need to coordinate the mortgage with the equity instrument and the homeowner, not only because of traditional aspects such as the right of the homeowner or investor to make extra principal payments, but also because MM-1 ties the mortgage tightly to the equity instrument.

The MM-1 variant adds several features to MM-0:

(1) **Mortgage Guarantee by DOOR Investor.** The third-party mortgage is recourse versus the DOOR investor, creating an insurance-like guarantee with respect to the mortgage balance in favor of the mortgagee. The DOOR investor is compensated in an ongoing manner via a slower accrual of earned equity by the homeowner.

(2) **Mortgage Paydown to Limit the LTV Ratio.** The DOOR investor is obligated to pay down the mortgage in low-value situations, creating a ceiling on the LTV ratio. The ceiling is set to guarantee that the DOOR investor's equity at sale exceeds the earned equity payout that the DOOR investor is required to make to the homeowner, thus ensuring performance of that obligation. The DOOR mechanism provides the DOOR investor exact economic compensation for any paydowns, creating investor motivation to remain in the arrangement when paydowns become necessary. This compensation is in the form of an enhanced conventional equity position and lower total mortgage payments, which translate to less accrual of earned equity that the investor must pay the homeowner at sale.

(3) **Mortgage/Equity Insurance Protection.** Except for the most creditworthy DOOR investors, an insurer stands behind the DOOR investor's mortgage guarantee, mortgage paydown, and earned equity obligations. Failure of the DOOR investor to make required mortgage paydowns triggers forfeiture of the DOOR instrument to the insurer, and the insurer receives compensatory value for making the paydowns, creating motivation at the time such measures are required.

MM-1 arrangements have considerable commercial potential. Homeowners are able to secure a home with little or no down payment and the unleveraged nature of their stake, which is a substantial percentage of home value after a few years of accumulation if the terms are set appropriately, means that they are solidly in the market even if prices decline. Investors obtain a superior alternative to renting because the financial returns are enhanced by the fact that an owner with a stake in the condition of the home is occupying it.

MM-1 arrangements substantially reduce business risk for mortgage creditors, mortgage originators, GSEs providing mortgage guarantees, and buyers of securitized mortgage obligations by creating a powerful set of layered mortgage credit enhancements:

(i) In low-value settings, the homeowner's incentive to maintain the home is robust because the homeowner's unleveraged equity stake is on the line dollar-for-dollar;

(ii) Similarly, homeowner incentives to continue making mortgage payments remain robust in low-value situations because the payments result in a compensatory accrual of earned equity;

(iii) The mortgage is guaranteed by the DOOR investor;

(iv) The DOOR investor is obligated to pay the mortgage down to maintain a ceiling on the LTV ratio, eliminating the problems that arise from "underwater" homes that are worth less than the underlying mortgage obligation; and

(v) An insurer stands behind the DOOR investor's mortgage guarantee and paydown obligations.

These layered credit enhancements, the last three of which are added by MM-1, substantially reduce the risk of default and foreclosure. The approach maintains an LTV level substantially below 100% and creates powerful homeowner incentives to continue maintaining the home and making mortgage payments even when home value drops substantially. Mortgage creditors are much less dependent on homeowner solvency because of the DOOR investor mortgage guarantees, themselves backed by mortgage insurance.

MM-1 is a game changer for mortgage insurers. A condition of the insurance contract is that failure of the DOOR investor to pay down the mortgage as required results in the DOOR investor forfeiting the DOOR investment in favor of the insurer. The insurer steps in, replaces the DOOR investor as a party to the DOOR contract, and makes the required mortgage payment under the contract. This payment is superficially similar to paying off a mortgage insurance claim. But there is a major difference: Instead of simply being stuck with a loss, the insurer now has an asset, and making the required mortgage paydown results in a precisely compensatory increase in the value of the asset. The balance sheet impact is positive because the asset had value before the paydown, and the paydown is fully compensated. Furthermore, an insurer faced with a plethora of paydown obligation failures due to a general decline in housing values across the country accumulates assets that sharply rebound when there is a recovery because the insurer holds the leveraged equity position in a broad portfolio of homes. If the insurer does not want to take on this portfolio investment role and the associated volatility, it can sell the DOOR instruments to a third party who is willing to do so, and the insurer can simultaneously write an insurance contract on the instrument. The net effect is to shift the instrument from a non-performing party to a performing one while retaining the associated insurance business.

These features of MM-1 arrangements that tie the mortgage in to the equity instrument require intensive and time-sensitive communications to implement the required interlocking decisions among the homeowner, DOOR investor, mortgagee, and mortgage insurer. For example, a drop in the home price can trigger the paydown feature requiring notice to the investor, a request for investor action, and a transfer of the instrument in the face of failure of the investor to act. The paydown may result in choices for the homeowner among payment alternatives for the reduced mortgage, which introduces the homeowner into the loop. And time is of the essence to maintain credibility that the homeowner's earned equity payment is assured. The invention provides all of these capabilities.

*Implementation of an MM-1 Housing Finance Arrangement*

To describe how the invention implements an embodiment of an MM-1 housing finance arrangement, we focus on the ownership period and begin with the simple case of a homeowner, a single investor, a single mortgage with a single mortgagee, and a single mortgage/equity insurer. Thus, the mortgage is third-party housing finance provided by the mortgagee who is a third-party financing entity, and the mortgage/equity insurer is a third-party service provider. In this embodiment, the mortgagee also services the mortgage, collecting payments and providing information to the mortgagor.

At the core of the implementation of the invention is a balancing engine embodied in a processing unit, at least one receiving unit, and at least one transmitting unit operated on a processing server by the managing entity. The balancing engine assesses over time the ongoing contributions of the homeowner and investor, considering the housing arrangement between them as a joint venture. In one embodiment, the investor and a mortgagee initially finance the entire home with conventional leveraged equity and a mortgage respectively, the homeowner makes the mortgage principal and interest payments to the mortgagee, the homeowner makes property tax payments, the homeowner maintains the home, and the homeowner lives in the home. In this embodiment, the homeowner's net contribution equals (i) the mortgage principal and interest payments to the mortgagee, (ii) the property tax payments, (iii) the maintenance, and (iv) other obligations such as insurance, less (v) what would be charged as rent (the "implicit rent"), which is the value of living in the home. The balancing mechanism requires a residual account to reconcile the interests of the homeowner and investor. In this embodiment, the residual account consists of earned equity, an unleveraged interest in the home, which the investor must pay the homeowner upon sale of the home or termination of the financing arrangement, and the payments are set so that the homeowner's net contribution is positive.

In the embodiment, the data for input into the balancing engine resides in a housing instrument data blockchain. The data includes a time series of all the contribution elements including at least homeowner mortgage payments to the investor. Referring to FIG. 5, periodically, the managing entity or an artificial intelligence entity representing it, sends a message to a receiving unit of the balancing engine initiating a balancing entry onto the housing instrument data blockchain (502). The balancing engine transmits through a transmitting unit a query of the housing instrument data blockchain system along with access authorization data to extract relevant data on contributions and other elements, including the governing algorithm for computing earned equity under the contract covering the home finance arrangement, itself encoded on the housing instrument data blockchain (504). The housing instrument data blockchain system implements its access protocol to determine if the balancing engine has access to the requested data. After permission for access is verified, the balancing engine receives this data via a receiving unit, and the processing unit associated with the balancing engine updates the earned equity balance of the homeowner (506). The balancing engine sends this updated balance along with details of the computation to a transmitting unit, which writes it to the housing instrument data blockchain along with details of the computation itself (508). The balancing engine sends via a transmitting unit, the updated earned equity value to a website accessible to the homeowner and the investor where the new value is reported (510). The balancing engine via a transmitting unit alerts the homeowner and the investor (or an artificial intelligence entity representing the investor), who may be offline, of the updated earned equity value via email or an SMS message through a mobile phone or other receiving device (512).

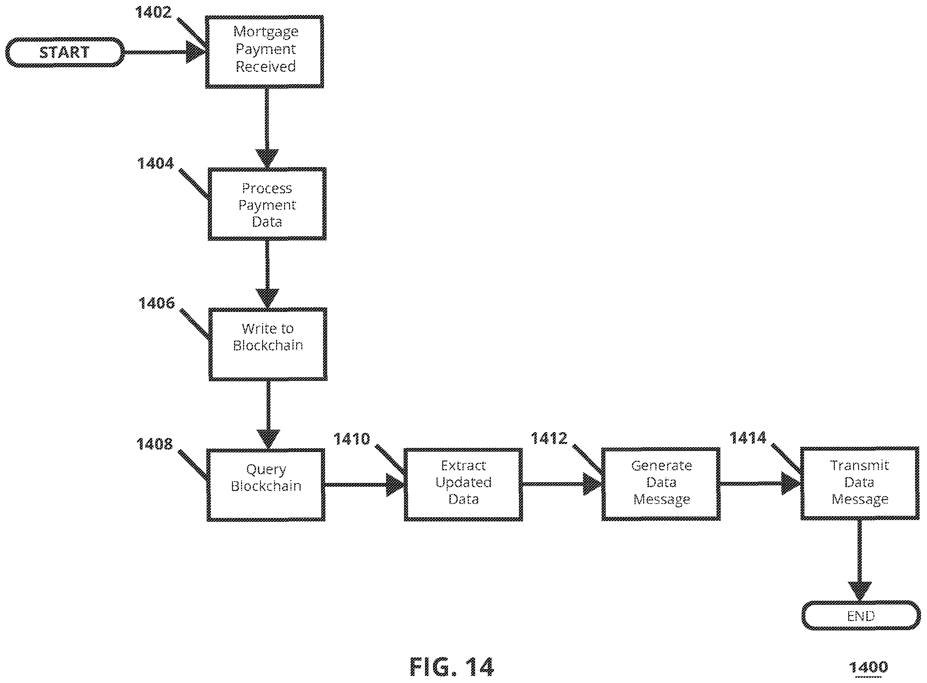

An embodiment can be understood with reference to FIG. 14, a flow diagram (1400) illustrating the process for writing payment data to and extracting updated data from the blockchain system in accordance with exemplary embodiments.

The input data for the balancing operation resides on the housing instrument data blockchain and is generated and updated by multiple data engines residing on one or more servers controlled by the managing entity, each data engine including at least one processing unit, at least one receiving unit, at least one transmitting unit, and at least one database. Each data engine operates for the purposes of creating, gathering, updating, processing, storing, and communicating at least one time series of at least one data parameter. In implementing an MM-1 housing finance arrangement, the data engines include at least one third-party data engine: a mortgage data engine residing on one or more servers controlled by the managing entity, embodied in at least one processing unit, at least one receiving unit, at least one transmitting unit, and at least one database, the mortgage data engine operating for the purposes of gathering, storing, processing and communicating data with respect to the third-party mortgage. When the homeowner makes a mortgage payment, a transmitting unit of a processing server of the mortgagee sends a payment message to a receiving unit of a mortgage data engine operating on a processing server controlled by the managing entity (1402). The payment message contains payment data including at least: (i) the amount of the payment; (ii) the breakdown between principal and interest; and (iii) the time and date of the payment. A processing unit of the mortgage data engine changes this data into a form suitable for the housing instrument data blockchain (1404) and transmits through a transmitting unit a query of the housing instrument data blockchain system along with access authorization data to secure permission to write the payment data onto the blockchain. The housing instrument data blockchain system implements its access protocol to verify that the mortgage data engine has the requisite permissions. After receiving confirmation of the verification through a receiving unit, the mortgage data engine, through a transmitting unit writes the payment data onto the housing instrument data blockchain (1406). The mortgage data engine transmits, through a transmitting unit, a query of the housing instrument data blockchain system along with access authorization data to extract data adequate to update the status of the mortgage including at least the payment history, the current principal balance following the most recent payment, and the loan-to-value ratio based on the most recent operative valuation of the home residing on the housing instrument data blockchain (1408).

The housing instrument data blockchain system implements its access protocol to determine if the mortgage data engine has access to the requested data. After permission for access is verified, the mortgage data engine receives the relevant data via a receiving unit (1410), and a processing unit of the mortgage data engine organizes this mortgage-related data into a form suitable for website display, resulting in a package of displayable mortgage-related data (1412). Through a transmitting unit, the mortgage data engine sends the displayable mortgage-related data to a website accessible to the homeowner, the investor, and the mortgage/equity insurer where the mortgage-related data is updated using the displayable mortgage-related data received (1414). The mortgage data engine via a transmitting unit alerts the homeowner, the investor (or an artificial intelligence entity representing the investor), and the mortgage/equity insurer (or an artificial intelligence entity representing the mortgage/equity insurer), who may be offline, of the updated mortgage-related information via email or an SMS message through a mobile phone or other receiving device.

Referring to FIG. 7, a valuation engine, which is a data engine operating on a processing server controlled by the managing entity, creates and updates a time series of house values for the home that is subject to financing by writing to the housing instrument data blockchain. The valuation engine receives a data request corresponding to a home valuation request (702). The valuation engine through one or more receiving units collects third-party valuations via query (704). The valuation engine through a transmitting unit encodes these valuations in a database (706). Through a processing unit, the valuation engine generates, when applicable (708), one or more non-third-party valuations (710) and combines both the third-party valuations and the non-third-party valuations (712) using one or more statistical procedures into an operative valuation for use by the balancing engine and the contract engine. The valuation engine transmits through a transmitting unit a query of the housing instrument data blockchain system along with access authorization data to secure permission to write the valuation data onto the blockchain. The housing instrument data blockchain system implements its access protocol to verify that the valuation engine has the requisite permissions. After receiving confirmation of the verification through a receiving unit, the valuation engine, through a transmitting unit writes the operative valuation to the housing instrument data blockchain along with a timestamp and a record of the calculation (714) including at least the third-party and non-third-party valuations, the methodology used to compute the non-third-party valuations, and the methodology used to compute the operative valuation (716).

The valuation engine generates a data message (718) and sends via a transmitting unit (720), at least the new operative valuation along with the third-party and non-third-party valuations to a website accessible to the homeowner and the investor where these valuations are reported. The valuation engine via a transmitting unit alerts the homeowner and investor (or an artificial intelligence entity representing the investor), who may be offline, via email or an SMS message through a mobile phone or other receiving device of the new operative valuation if they have requested updates of the operative valuation generally or upon certain values being realized.

Other data elements including at least implicit rent, depreciation, and property tax liability are governed by other data engines operating in a manner similar to the valuation engine.

The managing entity maintains, on a least one processing server controlled by a managing entity, a contract engine embodied in at least one processing unit, at least one receiving unit, and at least one transmitting unit for purposes of initiating, implementing, enforcing, and updating the housing finance arrangement between at least a homeowner and an investor. Input data for the contract engine resides in a housing instrument data blockchain.

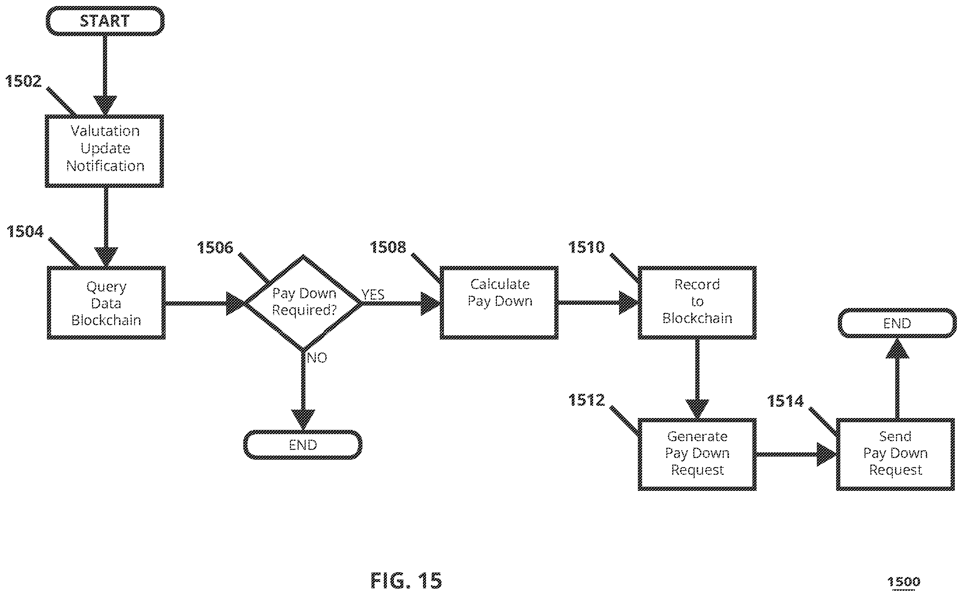

An embodiment can be understood with reference to FIG. 15, a flow diagram (1500) illustrating the process for requesting a valuation from the blockchain system and recording to the blockchain a paydown amount in accordance with exemplary embodiments. The valuation engine sends a message through a transmitting unit to a receiving unit of the contract engine, the message indicating that the operative valuation has been updated along with data including at least the new operative valuation (1502). The contract engine transmits through a transmitting unit a query of the housing instrument data blockchain system along with access authorization data to extract relevant data on the current mortgage principal balance and other elements, including the governing algorithm for determining whether a mortgage paydown by the investor is required and the amount of the required paydown (1504). The housing instrument data blockchain system implements its access protocol to determine if the contract engine has access to the requested data. After permission for access is verified, the contract engine receives this data through a receiving unit, and the processing unit associated with the contract engine determines whether a mortgage paydown by the investor is required (1506), and, if so, the required amount (1508). If the processing unit determines that a paydown is required, the contract engine transmits through a transmitting unit a query of the housing instrument data blockchain system along with access authorization data to secure permission to write paydown data onto the blockchain. The housing instrument data blockchain system implements its access protocol to verify that the contract engine has the requisite permissions. After receiving confirmation of the verification through a receiving unit, the contract engine, through a transmitting unit records its determination of whether an investor paydown is required along with information about the associated calculations on the housing instrument data blockchain (1510). The contract engine sends mortgage paydown data including at least the amount of paydown required and the deadline for payment to a receiving unit of a processing server of the investor (1512, 1514). The processing server of the investor through a transmitting unit sends a query of the housing instrument data blockchain system along with access authorization data to extract relevant data to verify the need for a paydown and the amount.

The housing instrument data blockchain system implements its access protocol to determine if the investor has access to the requested data. After permission for access is verified, the processing server of the investor receives the requested data through a receiving unit and through a processing unit verifies that a paydown is due. After verification, then in one embodiment, the processing server of the investor through a transmitting unit sends a payment request message to a receiving unit of a processing server of the mortgagee, the message including at least payment instructions specifying a source of investor funds, the amount of the payment, and the mortgage to which it is to be applied as an additional payment of principal. In a second embodiment, there is an intermediate step, approval by the investor. The processing server of the investor accesses a database to determine the appropriate person or artificial intelligence representative of the investor with the authority to grant or refuse approval. The processing server of the investor sends through a transmitting unit a request for approval or denial to a receiving unit of a specified processing server associated with such person or artificial intelligence representative and, in the case in which a person has decision authority, simultaneously via a transmitting unit sends the request for approval or denial to such person, who may be offline with respect to the specified processing server, by email, SMS message, or otherwise. The request for approval or denial includes at least: (i) the amount of the requested paydown; and (ii) in the case where a person has decision authority, a link to a website secured by password or other protections and operated by the specified processing server on which such person can indicate approval or denial. The specified processing server through a transmitting unit sends a message to a receiving unit of the processing server of the investor indicating approval or denial. In the case of approval, the processing server of the investor through a transmitting unit sends a payment request message to a receiving unit of a processing server of the mortgagee, the message including at least payment instructions specifying a source of investor funds, the amount of the payment, and the mortgage to which it is to be applied as an additional payment of principal. In the case of denial, the processing server of the investor through a transmitting unit sends a denial notice message to a receiving unit of the contract engine.

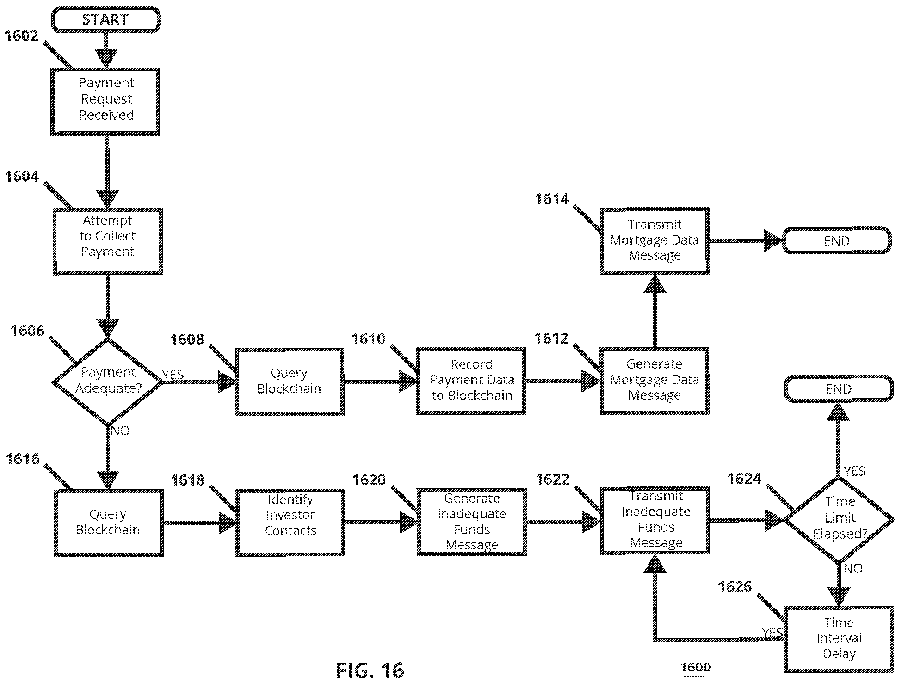

An embodiment can be understood with reference to FIG. 16, a flow diagram (1600) illustrating the process for recording payment data to the blockchain system or using the blockchain system to identify contract terms in accordance with exemplary embodiments. In the case of the first embodiment or the second embodiment when approval of the paydown has been indicated by the person or artificial intelligence representative who has authority to so approve, the processing server of the mortgagee will have received the payment request message (1602) and through methods that will be clear to those skilled in the art attempts to collect payment from the bank account of the investor specified in the payment instructions (1604). If funds are adequate (1606) to cover full payment and full payment is collected, after a processing unit of the processing server of the mortgagee appropriately updates the mortgagee's records held in a database or, after receiving the requisite permissions, written on a blockchain, a transmitting unit of a processing server of the mortgagee sends a paydown message to a receiving unit of a mortgage data engine operating on a processing server controlled by the managing entity. The paydown message contains paydown execution data including at least: (i) the amount of the paydown; (ii) the time and date of the payment; and (iii) the monthly payment amount after the paydown. A processing unit of the mortgage data engine changes this paydown execution data into a form suitable for the housing instrument data blockchain, and the mortgage data engine transmits through a transmitting unit a query of the housing instrument data blockchain system along with access authorization data to secure permission to write the paydown execution data onto the blockchain (1608).

The housing instrument data blockchain system implements its access protocol to verify that the contract engine has the requisite permissions. After receiving confirmation of the verification through a receiving unit, the mortgage data engine, through a transmitting unit writes the paydown execution data onto the housing instrument data blockchain (1610). The mortgage data engine transmits through a transmitting unit a query of the housing instrument data blockchain system along with access authorization data to extract data adequate to update the status of the mortgage including at least the payment history, the current principal balance and monthly payment amount following the paydown, and the loan-to-value ratio based on the most recent operative valuation of the home residing on the housing instrument data blockchain. The housing instrument data blockchain system implements its access protocol to determine if the mortgage data engine has access to the requested data. After permission for access is verified, the mortgage data engine receives this mortgage-related data through a receiving unit, and a processing unit of the mortgage data engine organizes this mortgage-related data into a form suitable for website display, resulting in a package of displayable mortgage-related data (1612). Through a transmitting unit, the mortgage data engine sends the displayable mortgage-related data to a website accessible to the homeowner, the investor, and the mortgage/equity insurer where the mortgage-related data is updated using the displayable mortgage-related data received (1614). The mortgage data engine via a transmitting unit alerts the homeowner, the investor (or an artificial intelligence entity representing the investor), and the mortgage/equity insurer (or an artificial intelligence entity representing the mortgage/equity insurer), who may be offline, of the updated mortgage-related information,via email or an SMS message through a mobile phone or other receiving device. The balancing mechanism embodied in the balancing engine ensures that the investor receives full economic compensation for the paydown on a risk-adjusted basis, and, in addition, the investor avoids loss of the position, which would occur if the investor failed to make the paydown. These two aspects facilitate the paydown transaction by creating strong incentives for the investor to make the paydown.

If the processing server of the mortgagee is unable to collect the paydown amount from the bank account of the investor specified in the paydown instructions because funds in the account are not adequate to cover the paydown fully or for any other reason (1606), the processing server of the mortgagee sends through a transmitting unit a notice of inadequate funds to a receiving unit of the contract engine. The contract engine transmits through a transmitting unit a query of the housing instrument data blockchain system along with access authorization data to extract relevant data on the contractual provisions that cover an inadequate funds situation, including time limits for investors to correct the situation (1616).

The housing instrument data blockchain system implements its access protocol to determine if the contract engine has access to the requested data. After permission for access is verified, the contract engine receives this data via a receiving unit, and the processing unit associated with the contract engine accesses a database to determine the personnel of the investor specified by the investor to receive a notice of inadequate funds (1618). The contract engine generates a notice of inadequate funds (1620) and sends the notice of inadequate funds through a transmitting unit to a receiving unit of the processing server of the investor and simultaneously via a transmitting unit sends a notice of inadequate funds to the specified personnel of the investor, who may be offline with respect to the processing server of the investor, by email, SMS message, or otherwise (1622). The notice of inadequate funds includes at least: (i) the amount due; (ii) the amount of available funds; (iii) any other issue that prevented collection of the paydown amount; and (iv) time limits for increasing the balance or specifying another source of funds. The contract engine periodically sends the same notice to the same parties, including the processing server of the investor, at periods set by the contractual provisions encoded on and accessed from the housing instrument data blockchain until either: (i) the contract engine receives a paydown notice; or (ii) the time limit for correcting the inadequate funds problem lapses (1624, 1626).

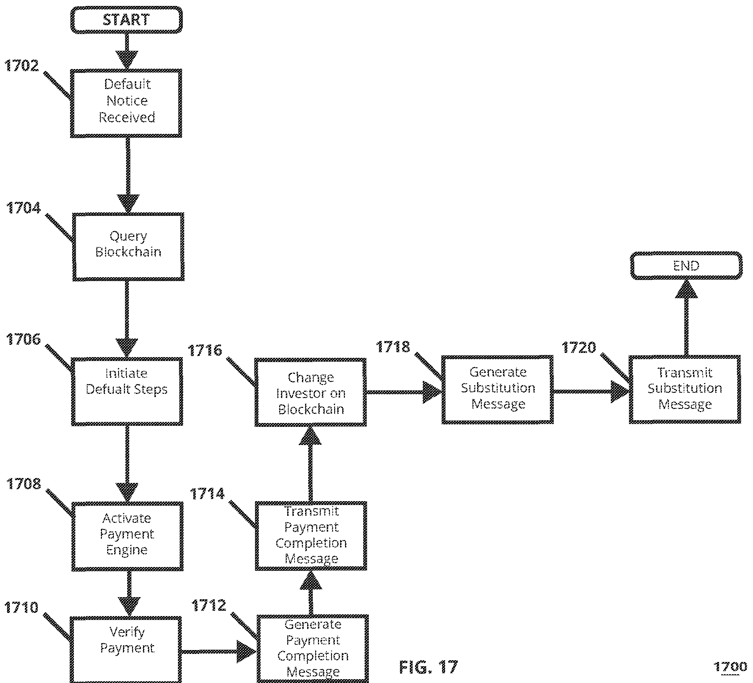

An embodiment can be understood with reference to FIG. 17, a flow diagram (1700) processing a received default notice (1702) using data obtained by the blockchain and determining and recording in the blockchain system a change in investor in accordance with exemplary embodiments. If the investor denied approval for the paydown or the time limit for rectifying an inadequate funds situation was reached, then the contract engine transmits through a transmitting unit a query of the housing instrument data blockchain system along with access authorization data to extract relevant contract data on steps to take when the investor has defaulted on its paydown obligations (1704).

The housing instrument data blockchain system implements its access protocol to determine if the contract engine has access to the requested data. After permission for access is verified, the contract engine receives this data via a receiving unit, and the contract engine sends via a transmitting unit a default notice to a receiving unit of a processing server operated by the mortgage/equity insurer (1706). The default notice contains default data including at least: (i) the identity of the defaulting investor; (ii) the amount of the required paydown; (iii) notice that the paydown is now the obligation of the mortgage/equity insurer; (iv) a request for such payment along with instructions on how to make a payment; (v) notice that the investor's DOOR instrument position will be transferred to the mortgage/equity insurer; (vi) access authorization data for the mortgage/equity insurer to gain access to appropriate data on the housing instrument data blockchain with respect to this position; and (vii) access to the managing entity website that displays information for investors. The contract engine enables a payment engine (1708), using methods that will be apparent to one skilled in the art, that monitors the status of the paydown obligation of the mortgage/equity insurer, sending the insurer appropriate periodic notices until the insurer makes the payment, verifying payment after it is made (1710), and then generating (1712) and sending (1714) through a transmitting unit a payment completion message to a receiving unit of the contract engine. The payment message contains data including at least: (i) the fact of payment; (ii) any relevant verification data; (iii) the amount of payment; (iv) the date and time of payment; (v) the change in the level of monthly mortgage payments, if any: and (vi) identifying information for the mortgage/equity insurer required for entering the insurer as an investor on the housing instrument data blockchain. After receiving the payment message, the contract engine transmits through a transmitting unit a query of the housing instrument data blockchain system along with access authorization data for permission to change investors for an instrument covered by the blockchain. The housing instrument data blockchain system implements its access protocol to verify that the contract engine has the required level of permission to make such a change. After verification, the contract engine writes on the blockchain, substituting the mortgage/equity insurer for the defaulting investor as owner of the applicable investment interest in the applicable instrument (1716). The contract engine generates a substitution message (1718) and sends the substitution message through a transmitting unit to a receiving unit of the processing server of the mortgage/equity insurer indicating the ownership replacement has been completed (1720).

Referring now to FIG. 14, through a transmitting unit, the contract engine sends a paydown message to a receiving unit of a mortgage data engine (1402). The paydown message contains paydown execution data including at least: (i) the amount of the paydown; (ii) the time and date of the payment; and (iii) the monthly payment amount after the paydown. A processing unit of the mortgage data engine changes this paydown execution data into a form suitable for the housing instrument data blockchain (1404), and a mortgage data engine transmits through a transmitting unit a query of the housing instrument data blockchain system along with access authorization data to secure permission to write the paydown execution data onto the blockchain.

The housing instrument data blockchain system implements its access protocol to verify that the contract engine has the requisite permissions. After receiving confirmation of the verification through a receiving unit, the mortgage data engine, through a transmitting unit writes the paydown execution data onto the housing instrument data blockchain (1406). The mortgage data engine transmits through a transmitting unit a query of the housing instrument data blockchain system along with access authorization data to extract data adequate to update the status of the mortgage including at least the payment history, the current principal balance and monthly payment amount following the paydown, and the loan-to-value ratio based on the most recent operative valuation of the home residing on the housing instrument data blockchain (1408).

The housing instrument data blockchain system implements its access protocol to determine if the mortgage data engine has access to the requested data. After permission for access is verified, the mortgage data engine receives this mortgage-related data through a receiving unit (1410), and a processing unit of the mortgage data engine organizes this mortgage-related data into a form suitable for website display, resulting in a package of displayable mortgage-related data (1412). Through a transmitting unit, the mortgage data engine sends the displayable mortgage-related data to a website accessible to the homeowner, the investor, and the mortgage/equity insurer where the mortgage-related data is updated using the displayable mortgage-related data received (1414). The mortgage data engine via a transmitting unit alerts the homeowner, the investor (or an artificial intelligence entity representing the investor), and the mortgage/equity insurer (or an artificial intelligence entity representing the mortgage/equity insurer), who may be offline, of the updated mortgage-related information via email or an SMS message through a mobile phone or other receiving device. The balancing mechanism embodied in the balancing engine ensures that the mortgage/equity insurer receives full economic compensation for the paydown on a risk-adjusted basis in place of the defaulting investor, and, in addition, the mortgage/equity insurer receives the defaulting investor's entire investment interest as a bonus. These two elements facilitate the paydown transaction by creating strong incentives for the mortgage/equity insurer to make the paydown.

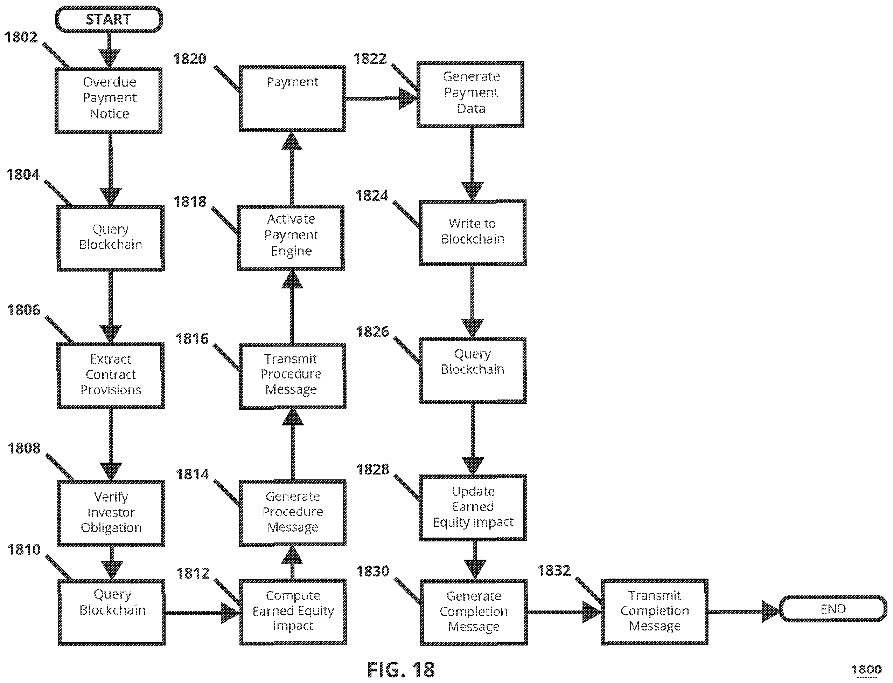

Referring to FIG. 18, a flow diagram (1800) illustrating the process for extracting contract provisions data from the blockchain system and for causing activation of a payment engine to generate and write payment data to the blockchain system. In one embodiment, failure of the homeowner to make a mortgage payment obligates the investor to make the payment instead if certain conditions including at least adequacy of the homeowner's earned equity position to provide surety for the homeowner's maintenance obligations are met. When a mortgage payment is overdue, the processing server of the mortgagee, through a transmitting unit, sends an overdue payment notice to a receiving unit of a processing server operated by the managing entity on which the contract engine resides (1802). Upon receiving the notice, the contract engine transmits through a transmitting unit a query of the housing instrument data blockchain system along with access authorization data to extract relevant data on the contractual provisions that cover investor obligations in an overdue payment situation, including time limits for investors to correct the situation (1804).

The housing instrument data blockchain system implements its access protocol to determine if the contract engine has access to the requested data. After verification that access is permitted, the contract engine receives this data via a receiving unit (1806). The contract engine uses this data to verify that the investor has an obligation to make the mortgage payment and the terms, conditions, and timing of that obligation (1808). The contract engine transmits through a transmitting unit a query of the housing instrument data blockchain system along with access authorization data to extract relevant data on the reduction in the homeowner's earned equity position that will result if the investor immediately makes the mortgage payment instead of the homeowner (1810). The housing instrument data blockchain system implements its access protocol to determine if the contract engine has access to the requested data. After verification that access is permitted, the contract engine receives this data via a receiving unit. A processing unit of the contract engine computes the earned equity impact if the investor made the payment immediately instead of the homeowner (1812) and then formulates an overdue payment procedure message (1814) that contains overdue payment procedure data including at least the following: (i) the amount of the mortgage payment; (ii) the fact that it is overdue; (iii) the obligation of the investor to make the payment if the homeowner fails to do so; (iv) the reduction in the homeowner's earned equity position that would result if the investor made the payment immediately instead of the homeowner; (v) the time limit for the homeowner to make the payment before the investor must do so; (vi) the fact that the homeowner may make future additional payments that offset the reduction in earned equity from missing this payment; (vii) the fact that such future additional payments most likely will be on different terms so that the amount needed to restore the homeowner's earned equity position to the level it would have had if the homeowner made the mortgage payment may be more or less than the omitted mortgage payment; (viii) a request that the homeowner inform the managing entity and the investor if the homeowner intends not to make the payment by the time limit, which will obviate any future communications; and (ix) an invitation to the homeowner to discuss with the managing entity whether the homeowner's financial situation will make it difficult to make mortgage payments following the overdue one, enabling the managing entity, investor, and homeowner to come up with a plan to address the situation, a plan that might include the investor making the mortgage payments instead of the homeowner for an extended period of time.

The processing unit further formulates three web displayable versions of the overdue payment procedure data, suitable for the homeowner, the investor, and the mortgage/equity insurer respectively (1814). Through a transmitting unit, the contract engine sends the three displayable versions to a website operated by the managing entity, making each version accessible to the corresponding party: the homeowner, the investor, and the mortgage/equity insurer (1816). The contract engine via a transmitting unit alerts the homeowner, the investor (or an artificial intelligence entity representing the investor), and the mortgage/equity insurer (or an artificial intelligence entity representing the mortgage/equity insurer), who may be offline, of the data in the version appropriate to each party via email or an SMS message through a mobile phone or other receiving device.

The contract engine enables a payment engine (1818), using methods that will be apparent to one skilled in the art, that monitors the status of the overdue mortgage payment, informs the investor if the homeowner indicates an intention not to make the payment by the time limit, sends the homeowner and investor appropriate periodic notices until one of them makes the payment (1820), and then generates a payment completion message (1822) which it sends through a transmitting unit to a receiving unit of the contract engine. The payment completion message contains payment data including at least: (i) the fact of payment; (ii) any relevant verification data; (iii) the amount of payment; (iv) the date and time of payment; and (v) the identity of the payer. After receiving the payment message, the contract engine transmits through a transmitting unit a query of the housing instrument data blockchain system along with access authorization data for permission to write the payment data on the blockchain.

The housing instrument data blockchain system implements its access protocol to verify that the contract engine has the required level of permission to write such data on the blockchain. After verification, a processing unit of the contract engine reformulates the relevant payment data and through a transmitting unit writes it on the housing instrument data blockchain (1824). The contract engine transmits through a transmitting unit a query of the housing instrument data blockchain system along with access authorization data to extract relevant data on the impact on the earned equity position of the homeowner arising from the investor versus the homeowner making the mortgage payment (1826). The housing instrument data blockchain system implements its access protocol to determine if the contract engine has access to the requested data. After verifying that access is permitted, the contract engine receives this data via a receiving unit, and the processing unit associated with the contract engine computes the impact on the homeowner's earned equity position of the investor versus the homeowner making the payment (1828). After completing that computation, the contract engine, through a processing unit, formulates payment completion data that includes at least: (i) the amount of the mortgage payment; (ii) the identity of the payer; (iii) the impact on the homeowner's earned equity payment from the homeowner making or forgoing the payment; (iv) if the homeowner did not make the payment, the fact that the homeowner may make future additional payments that offset the reduction in earned equity from missing this payment; and (v) the fact that such future additional payments most likely will be on different terms so that the amount needed to restore the homeowner's earned equity position to the level it would have had if the homeowner made the mortgage payment may be more or less than the omitted mortgage payment (1830). The processing unit further formulates three web displayable versions of the payment completion data, suitable for the homeowner, the investor, and the mortgage/equity insurer respectively. Through a transmitting unit, the contract engine sends the three displayable versions to a website operated by the managing entity, making each version accessible to the corresponding party: the homeowner, the investor, and the mortgage/equity insurer (1832). The contract engine via a transmitting unit alerts the homeowner, the investor (or an artificial intelligence entity representing the investor), and the mortgage/equity insurer (or an artificial intelligence entity representing the mortgage/equity insurer), who may be offline, of the data in the version appropriate to each party via email or an SMS message through a mobile phone or other receiving device.

Referring now to FIG. 14, through a transmitting unit, the contract engine sends a payment completion message to a receiving unit of a mortgage data engine, the message including the fact that the contract engine already wrote the mortgage payment data onto the housing instrument data blockchain. The mortgage data engine transmits through a transmitting unit a query of the housing instrument data blockchain system along with access authorization data to extract data adequate to update the status of the mortgage including at least the payment history, the current principal balance and monthly payment amount following the mortgage payment, and the loan-to-value ratio based on the most recent operative valuation of the home residing on the housing instrument data blockchain (1408).

The housing instrument data blockchain system implements its access protocol to determine if the mortgage data engine has access to the requested data. After verifying that access is permitted, the mortgage data engine receives this data via a receiving unit (1410), and a processing unit of the mortgage data engine organizes this mortgage-related data into a form suitable for website display, resulting in a package of displayable mortgage-related data (1412). Through a transmitting unit, the mortgage data engine sends the displayable mortgage-related data to a website accessible to the homeowner, the investor, and the mortgage/equity insurer where the mortgage-related data is updated using the displayable mortgage-related data received (1414). The mortgage data engine via a transmitting unit alerts the homeowner, the investor (or an artificial intelligence entity representing the investor), and the mortgage/equity insurer (or an artificial intelligence entity representing the mortgage/equity insurer), who may be offline, of the updated mortgage-related information via email or an SMS message through a mobile phone or other receiving device. The balancing mechanism embodied in the balancing engine ensures that the investor receives full economic compensation if the investor is obligated to make the mortgage payment omitted by the homeowner because the homeowner's earned equity position, itself a future obligation of the investor, will be reduced by the appropriate amount. This element facilitates the mortgage payment by creating appropriate incentives for the investor to make the payment.

The embodiments of MM-1 housing arrangements just described illustrate that even in an environment with multiple third parties (versus the homeowner and investor) engaged in complex transactions, the computer technology comprising the invention enables the homeowner to access a single website and various GUI-based pages in order to engage in a large number of functions at low cost and nearly instantaneously: monitoring earned equity levels and current data about the governing housing instrument, monitoring the status of an underlying mortgage, addressing a missed payment, and more generally obtaining relief from payments during a stretch of financial difficulty. The embodiments

33

illustrate how the computer technology comprising the invention facilitates the complex interactions involving the third-parties (in the specific example above, a mortgage/equity insurer and a mortgagee) as well as the homeowner and investor in a way that at the same time enables a low-cost integrated presentation on a single website. The invention enables the web presentation for homeownership that parallels the scope of the presentation on investment services websites in which complex auxiliary functions involving third parties operate effectively but invisibly.

It should be appreciated that the invention enables many other tasks for MM-1 arrangements and other arrangements involving third parties that go beyond the ones presented in the examples above. For instance, according to one or more embodiments, in the case of MM-1 arrangements the computer technology that comprises the invention can ensure a low-cost, integrated website presentation while at the same time enabling the tasks described above with respect to MM-0 including at least: (i) "refinancing" by changing the level of payments; (ii) reducing the level of financing by paying down the equity held by the investor; and (iii) increasing the level of financing on current market terms by selling earned equity back to the investor. The fragmentation, high cost, and lack of coordination that characterizes current technology applicable to housing finance is cured by this system in the case of MM-1 housing arrangements and similar arrangements involving third parties as well as in the case of MM-0. Both MM-0 and MM-1 arrangements are direct arrangements that can be implemented directly from the output of a balancing engine that incorporates a balancing mechanism which achieves neutrality. But the invention is more general as indicated by the next two sections.

*A Scheduled Earned Equity Housing Finance Arrangement*

MM-0 and MM-1 arrangements both leave the earned equity outcome for the homeowner uncertain. For example, as is evident from equations (1), (2), (4) and (5), if the implicit rent for the home increases relative to the home price, then the homeowner will accrue a lower amount of earned equity in percentage terms. An alternative approach is to fix the schedule for the accrual of earned equity in advance. However, unless another residual account such as payments picks up the uncertainty, e.g. by varying payments from the homeowner to the investor to produce the desired schedule of accrual of earned equity, then the housing finance arrangement will be non-neutral. Suppose, for example, that the fixed accrual schedule for earned equity is based on assumed values for the net contribution elements and that all of the elements except for the rent-price ratio meet the assumptions over time. If the rent-price ratio rises above the assumed ratio, then the arrangement favors the homeowner. If the rent-price ratio falls below the assumed ratio, then the arrangement favors the investor. In the first case, the homeowner has an incentive to stay in the home and keep the now better-than-market deal. In the second case, the homeowner has an incentive to refinance, obtaining, for example, a new fixed earned equity accrual schedule that is more favorable.

This asymmetry problem, caused by the homeowner's prepayment option, means that the investor must charge a premium up front or an exit fee to take into account that the homeowner has an incentive to dump the arrangement if it favors the investor but to retain it if it favors the homeowner. The homeowner must monitor the situation and refinance when conditions swing in favor of the investor. Neutrality is lost because market fluctuations cause the arrangement to favor either the homeowner or the investor with the ensuing consequence that the option to prepay becomes an important factor. Nonetheless, for some risk-averse homeowners, the benefits of lowering risk by fixing the earned equity accrual schedule will outweigh the added complexities and any associated restrictions or charges that are required to address the asymmetry problem.

Because this arrangement is not neutral, it cannot be implemented as a direct arrangement using a neutral balancing engine that generates the outcomes of the arrangement as is the case with direct arrangements such as those in the MM-0 or MM-1 class. Nonetheless the computer technology comprising the invention can use a suitable neutral balancing mechanism to create the same low-cost, integrated website presentation as it can for MM-0 and MM-1 housing finance arrangements.

Consider a particular housing finance arrangement that meets all the criteria of an MM-0 housing finance arrangement except that the accrual of earned equity received by the homeowner is scheduled, fixed in advance. When the house is sold and the arrangement terminates, this scheduled outcome almost always deviates from what would have been the unscheduled outcome for the homeowner under MM-0. Suppose that the arrangement includes a third party that agrees to take on a position that has a payoff equal to what the homeowner would have received as the unscheduled amount minus the scheduled amount that the homeowner actually received. In general this position might be called a "residual balancing position" or "RBP" for short because it covers the gap between the unscheduled residual amount and the scheduled fixed amount for the homeowner. Here we call it an "equity balancing position" or "EBP" for short since the residual account in this arrangement is earned equity, which is unleveraged equity in the home. The third-party holding the EBP absorbs the risk in the residual earned equity account that otherwise would be borne by the homeowner. We therefore refer to this arrangement as an "EBP arrangement."

To illustrate the EBP arrangement, suppose that the homeowner sells the home for $100,000 after seven years at which time the scheduled amount of earned equity accrued by the homeowner is 25% versus the unscheduled amount that would have been 30%. The EBP is credited with the 5% difference. The homeowner emerges with $25,000, the investor with $70,000, and the third party that holds the EBP with $5,000. If the unscheduled amount is 23% instead of 30%, then the homeowner emerges with $25,000, the investor receives $75,000 from the sales proceeds, and the third party that holds the EBP pays the investor an additional $2,000, bring the investor up to $77,000. In this case, the third party holding the EBP suffers a $2,000 loss.

The EBP arrangement is defined by the following properties:

(1) **Unscheduled Earned Equity Outcomes are MM-0 Outcomes.** The unscheduled earned equity outcomes are those that would have occurred under an MM-0 housing finance arrangement.

(2) **The Homeowner's Earned Equity Outcome is Scheduled.** The homeowner receives a percentage of earned equity according to a schedule based on the holding period. The schedule determines the outcome absent any changes such as changing the level of payments between the homeowner and investor, a purchase by the homeowner of additional equity from the investor, or a sale by the homeowner of earned equity to the investor.

(3) **The EBP Outcome is the Hypothetical Unscheduled Earned Equity Outcome for the Homeowner minus the Actual Scheduled Outcome.** If the unscheduled outcome would have been $U$ and the scheduled outcome was $S$ in percentage points, then the outcome for the third party holding the EBP is $U - S$ in percentage points. If the outcome is a negative, the third party holding the EBP pays the corresponding percentage of home value to the investor at sale. If the outcome is positive, the third party holding the EBP receives the corresponding percentage of the sales proceeds.

(4) **The Investor Always Receives an Amount Equal to the MM-0 (Unscheduled) Outcome.** If the EBP is positive at sale, the investor receives a share of the sale proceeds equal to what the investor would have received under an MM-0 arrangement, and the third party holding the EBP splits with the homeowner what would have been the homeowner's share under the MM-0 arrangement. If the EBP is negative at sale, the homeowner receives more than what would have been the unscheduled amount of earned equity, and the rest of the sales proceeds go to the investor. The EBP pays the investor an amount equal to the excess received by the homeowner over the unscheduled amount the homeowner would have received under the MM-0 arrangement. This payment when combined with the investor's share of the sales proceeds results in the investor receiving in total exactly what the investor would have received under the MM-0 arrangement. This property is very important if the investor's goal is a portfolio of raw owner-occupied real estate returns, home appreciation plus net rent; because that is what the investor's position yields in the MM-0 arrangement.

Because the EBP arrangement is not neutral, embodiments of the arrangement typically will work best with some restrictions or charges that mitigate the asymmetry problem, the fact that the homeowner has an incentive to refinance out of situations in which market fluctuations make the arrangement more favorable to the investor and to hold onto the arrangement, perhaps longer than otherwise, if it favors the homeowner. The third party holding the EBP is taking on two risks. First, there is the "prepayment risk" that arises from the asymmetry problem: The homeowner may prepay and refinance the arrangement if market conditions result in the fixed earned equity accrual favoring the EBP holder. Second, even assuming no prepayments, the EBP shifts the risk associated with fluctuations in the rate of earned equity accrual from the homeowner to the third-party holder of the EBP. Under the arrangement, the homeowner secures a fixed schedule of earned equity accumulation and the EBP precisely absorbs what otherwise would have been the fluctuations of the accrual rate, an "investment risk." This investment risk may require a premium in some form for the EBP to be viable if the shifted risk is positively correlated with systematic risk in the economy, but the direction and size of the correlation is unclear.

The asymmetry problem creates several issues with respect to various actions that the homeowner might take. Refinancing is an obvious one. In the EBP arrangement refinancing is equivalent to buying out the investor's equity position and then financing the buyout amount with a new EBP arrangement, a conventional mortgage, or otherwise. The low-cost, nearly instantaneous refinance of the EBP made possible by the computer technology that comprises the invention worsens the asymmetry problem by making refinance so easy and cheap that the homeowner can avoid continuing in EBP arrangements that favor the investor even slightly while hanging onto EBP arrangements that favor the homeowner. The homeowner also may choose to replace an unfavorable EBP arrangement with a financing method other than another EBP arrangement. For example, the homeowner may shift to an MM-0 arrangement or even simply hold all the equity in the home after buying out the investor's equity, in effect, self-financing.

Refinancing is not the only transaction that is impacted by the asymmetry problem. Any action that alters the original envisioned pattern of homeowner contributions undermines the original EBP arrangement because the fixed schedule of earned equity accrual assumes the envisioned pattern. For example, if the homeowner elects to reduce the level of the payments to the investor, there needs to be a downward adjustment in the accrual rate of earned equity. The existing fixed schedule must be replaced. One approach would be to simply close the existing EBP arrangement and create an entirely new one based on current market conditions. However, if market parameters have caused the old arrangement to favor the investor, the shift is equivalent to refinancing strategically to get out of the old arrangement. A second example is purchase by the homeowner of additional equity from the investor. This action both negates the applicability of the existing fixed schedule of earned equity accrual and amounts to a partial replacement of the EBP arrangement with self-financing, which permits a partial escape for the homeowner from an EBP that becomes favorable to the investor.

There are many ways to address the asymmetry problem and adjust the EBP arrangement terms to compensate the EBP holder for prepayment risk and investment risk that will be clear to a person skilled in the art. One embodiment, detailed in the next section, uses two methods that may be employed separately or in conjunction. First, some actions by the homeowner result in an adjustment charge, which can be in the form of a certain amount of earned equity or cash. For example, cashing out, refinancing, or adjusting the EBP position before sale of the home might result in an adjustment charge in the form of transferring some of the homeowner's earned equity to the EBP holder as part of completing the action. The amount of the charge may depend on factors such as the particular homeowner action, the time since the EBP was originated, and the degree to which the EBP is favorable to the EBP holder. With respect to the third factor, the adjustment fee may be set so that the homeowner compensates the EBP holder for part or all of the benefit that the EBP holder loses when the homeowner action results in termination of an EBP arrangement that has become favorable to the investor. Setting the adjustment fee in this way may eliminate much of the asymmetry problem along with the corresponding prepayment risk for the EBP holder.

A second method is to adjust the fixed schedule for accrual of earned equity itself. This method has particular value in addressing the investment risk that the EBP holder faces from taking on the uncertainty with respect to the accrual rate of earned equity that the homeowner would have faced without a fixed schedule. If the investment risk is positively correlated with systematic risks in the economy, it is priced in the market and requires a premium for the EBP investor. One way to create a premium is to reduce the scheduled rate of earned equity accrual. This reduction increases the EBP holder's expected return because the EBP holder realizes amounts equal to the unscheduled outcome minus the scheduled outcome, and now the scheduled outcomes are lower. The reduction in the scheduled rate may be set so that the increase in expected return exactly covers the market price of the investment risk.

Best practice, even when it is not required by regulation, is to disclose the potential adjustment charges along with how they are calculated and the method of setting the fixed schedule for homeowner accrual of earned equity as part of the initial contractual provisions that establish the EBP arrangement. In the embodiment detailed below, data for these elements are recorded on a blockchain to facilitate the operation of the computer technology that comprises the invention.

*Implementation of an EBP Housing Finance Arrangement with Scheduled Earned Equity Accrual*

To describe how the invention implements an embodiment of an EBP housing finance arrangement, we focus on the simple case of a homeowner, a single investor, and a single third-party that holds the EBP. At the core of the implementation of the invention is a balancing engine embodied in a processing unit, at least one receiving unit, and at least one transmitting unit operated on a processing server by the managing entity. The balancing engine assesses over time the ongoing contributions of the homeowner and investor, considering the housing arrangement between them as a joint venture. In one embodiment, the investor initially finances the entire home, the homeowner makes payments to the investor, the homeowner makes property tax payments, the homeowner maintains the home, and the homeowner lives in the home.

In this embodiment, the homeowner's net contribution equals (i) the homeowner's payments to the investor, (ii) the property tax payments, (iii) the maintenance, and (iv) other obligations such as insurance, less (v) what would be charged as rent (the "implicit rent"), which is the value of living in the home. The balancing mechanism requires a residual account to reconcile the interests of the homeowner, investor, and EBP holder. This embodiment employs a balancing mechanism appropriate for an MM-0 housing finance arrangement in which the residual account consists of earned equity, an unleveraged interest in the home, which the investor in an MM-0 arrangement would pay the homeowner upon sale of the home or termination of the financing arrangement, and the payments are set so that the homeowner's net contribution is positive. This embodiment, however, is not an MM-0 housing finance arrangement. Instead, the homeowner accrues earned equity under a schedule that is fixed in advance. The outcome for the homeowner is the "scheduled outcome," a certain number of percentage points representing the homeowner's share of the home sale proceeds. The balancing engine result is an "unscheduled outcome" in percentage points that would be the actual outcome for the homeowner in an MM-0 housing finance arrangement. Unlike the scheduled outcome, the unscheduled outcome is not known in advance but depends on the values of various economic parameters during the period of the arrangement. In this embodiment the unscheduled outcome is an accounting quantity used to compute returns for the EBP holder. At sale, the EBP holder receives proceeds from the housing sale equal in percentage points to the unscheduled outcome minus the scheduled outcome if it is greater than or equal to zero. If, instead, the scheduled outcome is greater than the unscheduled outcome, then the EBP pays the investor in cash a percentage of the sales proceeds equal in percentage points to the scheduled outcome minus the unscheduled outcome.

The embodiment includes a transition agreement between the three parties: homeowner, investor, and EBP holder. The transition agreement goes into effect when the homeowner initiates certain changes including at least: (i) changing the level of payments made by the homeowner to the investor; (ii) buying equity from the investor; (iii) selling equity to the investor; (iv) refinancing the EBP arrangement by terminating the old arrangement and associated fixed schedule of homeowner earned equity accruals in favor of a new EBP arrangement on market terms that includes a new and different fixed schedule of homeowner earned equity accruals; or (v) refinancing the EBP agreement by terminating the old arrangement and the associated fixed schedule of homeowner earned equity accruals in favor of an MM-0 housing finance arrangement in which the schedule of homeowner earned equity accruals is not fixed but equals what would be the unscheduled outcome under an EBP arrangement. These changes typically require terminating the existing EBP arrangement, adjusting equity shares as if the home were sold, and then a cash transaction that closes equity credits or debits held by the EBP holder, creating corresponding equity adjustments for the investor and homeowner. If the EBP holder has an equity credit, the EBP holder sells the corresponding equity position to the investor at the operative valuation for the home. If the EBP holder has an equity debit, then the EBP holder owes equity to the homeowner. In that case, the EBP holder buys the requisite equity share from the investor at the operative valuation of the home for purposes of the transition agreement and then transfers that requisite equity share to the homeowner. The equity shares that emerge from this process for the homeowner and investor become the baseline equity shares for the new EBP or MM-0 arrangement that replaces the existing EBP arrangement. The transition agreement obligates the parties to engage in the required transitional cash and equity transfers. The embodiment includes computer technology that facilitates the cash and equity transfers with the goal that they will be nearly instantaneous.

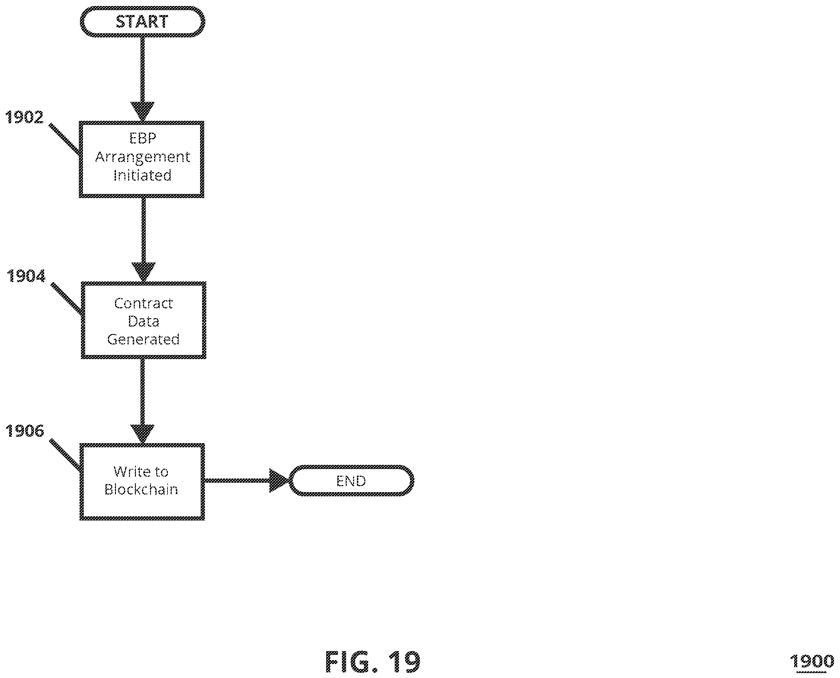

Referring to FIG. 19, a flow diagram (1900) illustrating the process for updating the blockchain system in relation to an initiated EBP arrangement. In the embodiment, a contract engine operating on a processing server controlled by the managing entity initiates, implements, enforces, and updates the housing finance arrangement between at least a homeowner, an investor, and an EBP holder, functions that include creating, updating, and accessing contractual information that governs the EBP housing finance arrangement. The contract engine is embodied in at least one processing unit, at least one receiving unit, and at least one transmitting unit. Input data for the contract engine resides in a housing instrument data blockchain including at least the data that encodes the contractual provisions that govern the EBP housing finance arrangement. When the EBP housing arrangement is initiated (1902), the managing entity causes initial contract data to be sent to a receiving unit of the contract engine processing server. This initial contract data includes at least: (i) the names, addresses, and contact information for the initial parties to the contract; (ii) all of the contractual terms; and (iii) information about purchase or ownership of the house including at least the title and evidence of title insurance.

The contractual terms include at least: (i) the initial fixed schedule of earned equity accruals in favor of the homeowner; (ii) the initial equity holdings of the homeowner and investor; and (iii) any adjustment charges that apply if the homeowner takes actions that include at least refinancing the arrangement, changing the level of payments to the investor, or buying some of the investor's equity. The contract engine through a processing unit formats the initial contract data into a form suitable for writing onto the housing instrument data blockchain (1904). The contract engine transmits through a transmitting unit a query of the housing instrument data blockchain system along with access authorization data to secure permission to write the formatted contract data onto the blockchain. The housing instrument data blockchain system implements its access protocol to verify that the contract engine has the requisite permissions. After receiving confirmation of the verification through a receiving unit, the contract engine, through a transmitting unit writes the initial contract data onto the blockchain, creating a record of the new housing finance arrangement on the blockchain (1906).

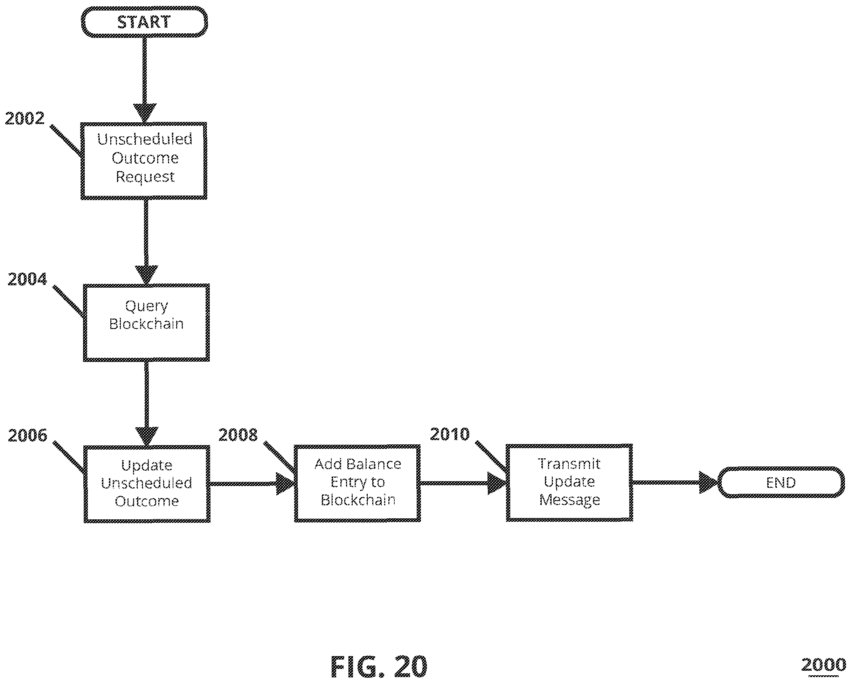

Referring to FIG. 20, a flow diagram (2000) illustrating the process for adding balance entry data to the blockchain system in relation to unscheduled outcomes. In the embodiment, a balancing engine residing on a processing unit controlled by the managing entity creates and updates a time series of hypothetical unscheduled outcomes, the earned equity accumulation of the homeowner under an MM-0 housing arrangement. The data for input into the balancing engine resides in a housing instrument data blockchain. The data includes a time series of all the contribution elements including at least homeowner payments to the investor. Periodically, the managing entity or an artificial intelligence entity representing it, sends a message to a receiving unit of the balancing engine initiating a balancing entry of the current hypothetical unscheduled outcome onto the housing instrument data blockchain (2002). The balancing engine transmits through a transmitting unit a query of the housing instrument data blockchain system along with access authorization data to extract relevant data on contributions and other elements, including the governing algorithm for computing earned equity under the hypothetical MM-0 housing finance arrangement, itself encoded on the housing instrument data blockchain (2004).

The housing instrument data blockchain system implements its access protocol to verify that the balancing engine has access to the requested data. After verification, the balancing engine receives the requested data via a receiving unit, and the processing unit associated with the balancing engine updates the unscheduled outcome, a hypothetical earned equity balance for the homeowner, along with associated quantities that use the unscheduled outcome as inputs including at least the percentage shares and amounts that the homeowner, investor, and EBP holder would realize or pay if the home were sold at the current operative valuation recorded on the housing instrument data blockchain (2006). The balancing engine transmits through a transmitting unit a query of the housing instrument data blockchain system along with access authorization data to secure permission to write the updated unscheduled outcome and associated quantities on the blockchain.

The housing instrument data blockchain system implements its access protocol to verify that the balancing engine has the requisite permissions. After verification, the balancing engine through a transmitting unit writes the updated unscheduled outcome and associated quantities on the housing instrument data blockchain (2008). The balancing engine sends via a transmitting unit, the updated unscheduled outcome and associated quantities to a website controlled by the managing entity and accessible to the homeowner, the investor, and the EBP holder where the updated value along with the associated quantities are reported (2010). The balancing engine via a transmitting unit alerts the homeowner, the investor (or an artificial intelligence entity representing the investor), and the EBP holder (or an artificial intelligence entity representing the EBP holder), who may be offline, of the updated unscheduled outcome and associated quantities via email or an SMS message through a mobile phone or other receiving device.

An embodiment can be understood with reference to FIG. 7. The input data for the balancing operation that underlies creation of the time series of unscheduled outcomes resides on the housing instrument data blockchain and is generated and updated by multiple data engines residing on one or more servers controlled by the managing entity, each data engine including at least one processing unit, at least one receiving unit, at least one transmitting unit, and at least one database. Each data engine operates for the purposes of creating, gathering, updating, processing, storing, and communicating at least one time series of at least one data parameter. A valuation engine, a data engine operating on a processing server controlled by the managing entity, creates and updates a time series of house values for the home that is subject to financing by writing to the housing instrument data blockchain. The valuation engine receives a data request corresponding to a home valuation request (702). The valuation engine through one or more receiving units collects third-party valuations via a query (704). The valuation engine through a transmitting unit encodes these valuations in a database (706). Through a processing unit, the valuation engine generates, when applicable (708), one or more non-third-party valuations (710) and combines both the third-party valuations and the non-third-party valuations (712) using one or more statistical procedures into an operative valuation for use by the balancing engine and the contract engine. Through a transmitting unit, the valuation engine transmits a query of the housing instrument data blockchain system along with access authorization data to secure permission to write the updated operative valuation, the calculation methodology, and other updated valuation data on the blockchain.

The housing instrument data blockchain system implements its access protocol to verify that the balancing engine has the requisite permissions. After verification, the valuation engine through a transmitting unit writes the updated operative valuation along with a timestamp and a record of the calculation (714) including at least the third-party and non-third-party valuations, the methodology used to compute the non-third-party valuations, and the methodology used to compute the updated operative valuation and other valuations on the housing instrument data blockchain (716). The valuation engine generates a data message (718) and sends via a transmitting unit (720), at least the new operative valuation along with the third-party and non-third-party valuations to a website controlled by the managing entity and accessible to the homeowner, the investor, and the EBP holder where these valuations are reported. The valuation engine via a transmitting unit alerts the homeowner, the investor (or an artificial intelligence entity representing the investor), and the EBP holder (or an artificial intelligence entity representing the EBP holder), who may be offline, via email or an SMS message through a mobile phone or other receiving device of the new operative valuation if they have requested updates of the operative valuation generally or upon certain values being realized.

Other data elements including at least implicit rent, depreciation, and property tax liability are governed by other data engines operating in a manner similar to the valuation engine.

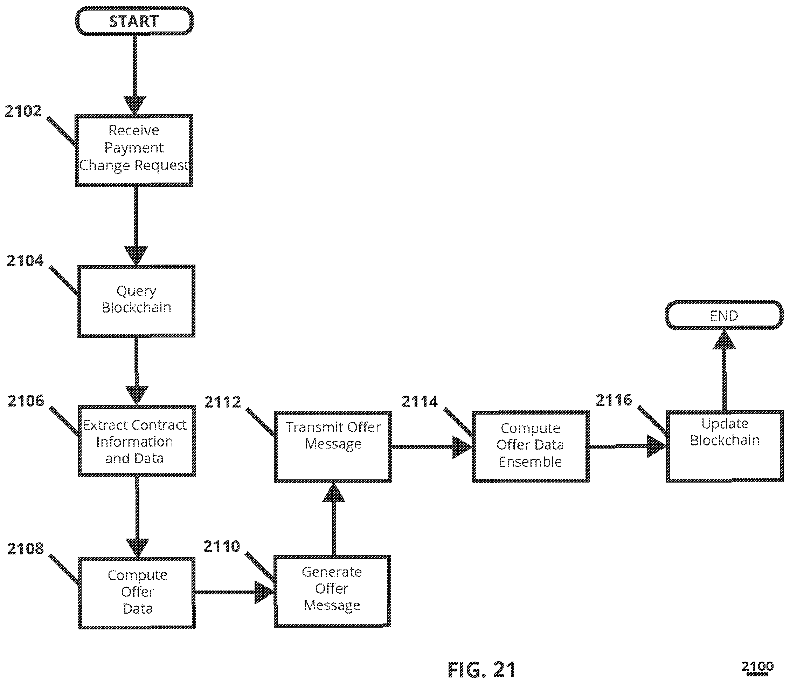

An embodiment can be understood with reference to FIG. 21, a flow diagram (2100) illustrating the process for extracting contract data from the blockchain system, computing an offer data ensemble, and writing the offer data ensemble to the blockchain system in relation to a payment change request in accordance with exemplary embodiments. The homeowner may want to change the level of payments to the investor, effectively refinancing the home finance arrangement. The homeowner accesses the website operated by the managing entity and requests a change in the level of the payment, specifying one or more potential new payment levels, generating a message, comprising at least the request and the potential new levels, sent through a transmitting unit to the receiving unit of a contract engine controlled by the managing entity (2102). The contract engine processing unit sends through a transmitting unit a query of the housing instrument data blockchain system along with access authorization data to extract relevant underlying data for generating offers to the homeowner associated with each new payment level of interest to the homeowner (2104). The relevant underlying data includes at least the necessary contract information and the most up-to-date values of the unscheduled outcome, of the scheduled outcome, of the operative valuation of the home, and of the parameters that go into the balancing calculation to update the unscheduled outcome. The necessary contract information includes at least the rules and algorithms needed to compute a new fixed schedule of homeowner earned equity accrual and the value of any adjustment charges associated with each potential new payment level submitted by the homeowner.

The housing instrument data blockchain system implements its access protocol to verify that the contract engine has access to the requested data. After verification, the contract engine receives this data via a receiving unit (2106), and the processing unit associated with the contract engine uses the contract rules and algorithms to compute offer data consisting of: for each proposed new payment level, at least the new fixed schedule of homeowner earned equity accrual and any adjustment charges and also any adjustment charge for a shift from the current EBP arrangement to an MM-0 arrangement along with the change in payment level (2108). The contract engine generates an offer message (2110) containing at least the offer data and a request for a homeowner response (2110) and through a transmitting unit sends the offer message to a website controlled by the managing entity and accessible to the homeowner where the offer data is displayed (2112). The request for a response indicates the deadline for the homeowner to respond to the offered terms. The contract engine via a transmitting unit alerts the homeowner, who may be offline, of the offers and request for response, including the deadline for responding, via email or an SMS message through a mobile phone or other receiving device. The contract engine, through a processing unit, computes an offer data ensemble (2114) suitable for writing on the housing instrument data blockchain consisting of at least: (i) the offer data; (ii) the underlying data extracted from the housing instrument data blockchain as a first step in the process of generating offers; (iii) a date and time indicating when the offers were first promulgated; and (iv) an indication of the stated deadline for responding to the offers. Through a transmitting unit, the contract engine transmits a query of the housing instrument data blockchain system along with access authorization data to secure permission to write the offer data ensemble on the blockchain. The housing instrument data blockchain system implements its access protocol to verify that the contract engine has the requisite permissions. After verification, the contract engine through a transmitting unit writes the offer data ensemble on the housing instrument data blockchain (2116).

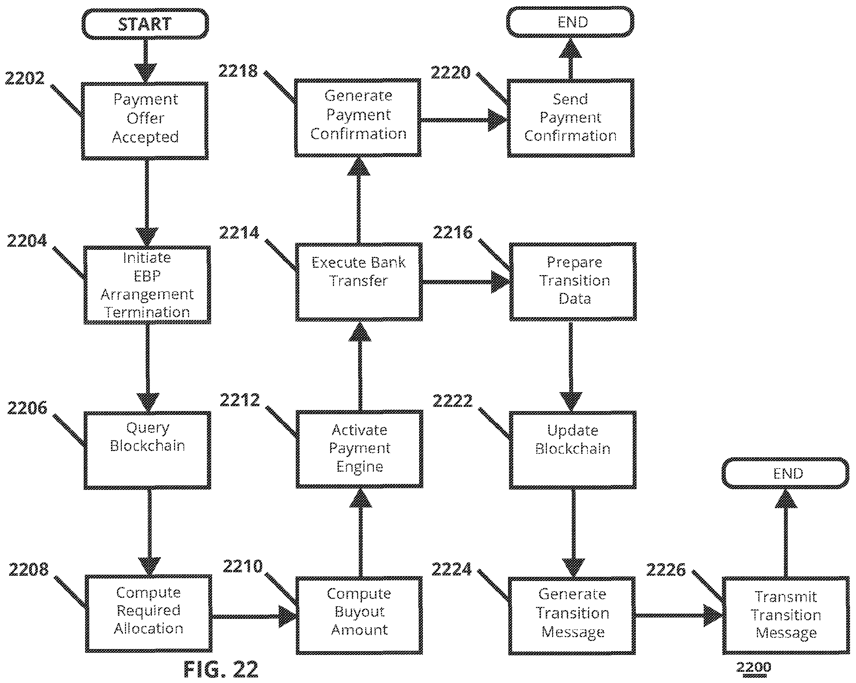

An embodiment can be understood with reference to FIG. 22, a flow diagram (2200) illustrating the process for computing a required allocation, causing a bank transfer to execute, and updating the blockchain system in relation to an accepted payment offer in accordance with exemplary embodiments. If the homeowner wishes to accept one of the offers, the homeowner accesses the website operated by the managing entity and indicates the homeowner's choice of the desired offer and goes through a security protocol that verifies the identity of the homeowner, generating a message, comprising at least an indication of acceptance of the desired choice, confirmation of the verification of identity, and the terms of the accepted offer, sent through a transmitting unit to the receiving unit of the contract engine (2202). The contract engine through a processing unit initiates a termination process for the existing EBP arrangement (2204). As a first step, the contract engine processing unit sends through a transmitting unit a query of the housing instrument data blockchain system along with access authorization data to extract the offer data ensemble from the blockchain (2206).

The housing instrument data blockchain system implements its access protocol to verify that the contract engine has access to the requested data. After verification, the contract engine receives the offer data ensemble via a receiving unit. The offer data ensemble includes the most up-to-date values of variables as of the time of the offer, and in this embodiment these values determine the implementation of the accepted offer.

In the embodiment, the termination process closes the EBP arrangement, with the contract engine, through a processing unit, computing allocations as if the home were sold (2208). The contract engine computes the equity credits or debits of the EBP holder through several steps based on an imaginary sale using parameter values from the offer data ensemble. First, the contract engine compares the values of the scheduled outcome and the unscheduled outcome from the offer data ensemble. If the unscheduled outcome is greater than the scheduled outcome, the difference is the "EBP excess," the number of percentage points that represents the EBP holder's share of the proceeds if the home were sold. If the scheduled outcome is greater than the unscheduled outcome, then the difference, a positive number, is the "EBP deficit," the number of percentage points that represents the EBP holder's equity obligation to the homeowner. There also possibly is an adjustment charge, a number of percentage points that represents an equity share owed by the homeowner to the EBP holder. If there is an EBP excess, then the EBP excess plus the adjustment charge is equal to the "EBP equity credit." If there is an EBP deficit but it is less than the adjustment charge, then the adjustment charge minus the EBP deficit equals the EBP equity credit. If there is an EBP deficit that exceeds the adjustment charge, then the EBP deficit minus the adjustment charge equals the "EBP equity debit," a positive number.

The new starting equity positions that emerge from the termination process are: (i) for the homeowner, a number of percentage points equal to the scheduled outcome from the offer data ensemble minus the adjustment charge from the offer data ensemble; and (ii) for the investor, a number of percentage points equal to 100 minus the homeowner's percentage point share. To reach this allocation it is necessary to settle any EBP equity credit or EBP equity debit in cash.

If there is an EBP equity credit, then the contract engine through a processing unit computes the buyout amount the investor will need to pay the EBP holder to close out the EBP equity credit by buying the associated equity at the operative home valuation recorded in the offer data ensemble (2210). The contract engine creates an investor buyout demand message that contains buyout demand data including at least: (i) the percentage share of home equity that the investor is buying; (ii) the operative valuation at which the home is valued; (iii) the buyout amount; and (iv) instructions for making payment to the EBP holder. The contract engine, through a transmitting unit, sends the investor buyout demand message to a receiving unit of a payment engine specified in advance by the investor (2212). The payment engine creates a bank transfer from the investor to the account of the EBP equity holder (2214) and, through a transmitting unit, generates a payment confirmation message (2218) and sends the payment confirmation message to a receiving unit of the contract engine (2220), the payment confirmation message including at least data sufficient for the contract engine to confirm that payment has been made through procedures familiar to those skilled in the art. The contract engine through a processing unit prepares a package of transition data (2216) which contains at least: (i) the EBP equity credit amount along with the data and methodology used to compute it; (ii) the fact and confirmation of payment by the investor to the EBP holder; (iii) the new starting equity positions for the investor and homeowner emerging from the termination process; (iv) the fact that the existing EBP arrangement is terminated and a new EBP arrangement or new MM-0 arrangement is initiated; (v) the date and time of the transition; and (vi) the specifications of the new arrangement, including a new fixed schedule of homeowner earned equity accruals if the new arrangement is an EBP arrangement, with the specifications of the new arrangement matching the corresponding offer as described in the offer data ensemble. The contract engine, through a transmitting unit, transmits a query to the housing instrument data blockchain system along with access authorization data to secure permission to effect the arrangement shift and write the transition data on the blockchain.

The housing instrument data blockchain system implements its access protocol to verify that the contract engine has the requisite permissions. After verification, the contract engine through a transmitting unit writes the transition data on the housing instrument data blockchain (2222), effecting the shift to the new arrangement. The contract engine formulates three web displayable versions of the transition data, suitable for the homeowner, the investor, and the EBP holder respectively (2224). Through a transmitting unit, the contract engine sends the three displayable versions to a website operated by the managing entity, making each version accessible to the corresponding party: the homeowner, the investor, and the EBP holder (2226). The contract engine via a transmitting unit alerts the homeowner, the investor (or an artificial intelligence entity representing the investor), and the EBP holder (or an artificial intelligence entity representing the EBP holder), who may be offline, of the data in the version appropriate to each party via email or an SMS message through a mobile phone or other receiving device. The contract engine, through a transmitting unit, sends the transition data to a website controlled by the managing entity and accessible to the homeowner, the investor, and the EBP holder along with instructions causing the website to update both the commonly accessible areas and limited access areas of the website to display the new arrangement based on the details of the new arrangement encoded in the transition data.

If there is an EBP equity debit, then the contract engine through a processing unit computes the buyout amount the EBP holder will need to pay the investor to close out the EBP equity debit by buying the associated equity from the investor at the operative home valuation recorded in the offer data ensemble and transferring it to the homeowner (2210). The contract engine creates an EBP buyout demand message that contains buyout demand data including at least: (i) the percentage share of home equity that the EBP holder is buying; (ii) the operative valuation at which the home is valued; (iii) the buyout amount; and (iv) instructions for making payment to the investor. The contract engine, through a transmitting unit, sends the EBP buyout demand message to a receiving unit of a payment engine specified in advance by the EBP holder (2212). The payment engine creates a bank transfer from the EBP holder to the account of the investor (2214), generates a payment confirmation message (2218), and then sends the payment confirmation message through a transmitting unit to a receiving unit of the contract engine (2220), the payment confirmation message including at least data sufficient for the contract engine to confirm that payment has been made through procedures familiar to those skilled in the art. The contract engine through a processing unit prepares a package of transition data (2216) which contains at least: (i) the EBP equity debit amount along with the data and methodology used to compute it; (ii) the fact and confirmation of payment by the EBP holder to the investor; (iii) the new starting equity positions for the investor and homeowner emerging from the termination process; (iv) the fact that the existing EBP arrangement is terminated and a new EBP arrangement or new MM-0 arrangement is initiated; (v) the date and time of the transition; and (vi) the specifications of the new arrangement, including a new fixed schedule of homeowner earned equity accruals if the new arrangement is an EBP arrangement, with the specifications of the new arrangement matching the corresponding offer as described in the offer data ensemble. The contract engine, through a transmitting unit, transmits a query to the housing instrument data blockchain system along with access authorization data to secure permission to effect the arrangement shift and write the transition data on the blockchain.

The housing instrument data blockchain system implements its access protocol to verify that the contract engine has the requisite permissions. After verification, the contract engine through a transmitting unit writes the transition data on the housing instrument data blockchain (2222), effecting the shift to the new arrangement. The contract engine formulates three web displayable versions of the transition data, suitable for the homeowner, the investor, and the EBP holder respectively (2224). Through a transmitting unit, the contract engine sends the three displayable versions to a website operated by the managing entity, making each version accessible to the corresponding party: the homeowner, the investor, and the EBP holder (2226). The contract engine via a transmitting unit alerts the homeowner, the investor (or an artificial intelligence entity representing the investor), and the EBP holder (or an artificial intelligence entity representing the EBP holder), who may be offline, of the data in the version appropriate to each party via email or an SMS message through a mobile phone or other receiving device. The contract engine, through a transmitting unit, sends the transition data to a website controlled by the managing entity and accessible to the homeowner, the investor, and the EBP holder along with instructions causing the website to update both the commonly accessible areas and limited access areas of the website to display the new arrangement based on the details of the new arrangement encoded in the transition data.

In one or more embodiments, a similar process involving termination of an existing EBP arrangement and a suitable transition agreement between the three parties (homeowner, investor, and EBP holder) may be used to effect homeowner initiated changes other than modifying the level of payments made by the homeowner to the investor including at least: (i) buying equity from the investor; (ii) selling equity to the investor; (iii) refinancing the EBP arrangement by terminating the old arrangement and associated fixed schedule of homeowner earned equity accruals in favor of a new EBP arrangement on market terms that includes a new and different fixed schedule of homeowner earned equity accruals; or (iv) refinancing the EBP agreement by terminating the old arrangement and the associated fixed schedule of homeowner earned equity accruals in favor of an MM-0 housing finance arrangement in which the schedule of homeowner earned equity accruals is not fixed but equals what would be the unscheduled outcome under EBP arrangements. In an embodiment, these changes will require the same steps of terminating the existing EBP arrangement, adjusting equity shares as if the home were sold, and then cash transactions that close equity credits or debits held by the EBP holder, creating corresponding equity adjustments for the investor and homeowner, with the equity shares that emerge from this process for the homeowner and investor becoming the baseline equity shares for the new EBP or MM-0 arrangement that replaces the existing EBP arrangement.

The embodiments of EBP housing arrangements just described illustrate that even in the case of a housing finance that is not neutral, the computer technology comprising the invention enables the homeowner to access a single website and various GUI-based pages in order to engage in a large number of functions at low cost and nearly instantaneously including at least: (i) monitoring earned equity levels and viewing the fixed schedule that governs future accruals of earned equity; (ii) monitoring parameters such as home valuation in real time; (iii) inquiring about and viewing the terms and outcomes of changing the level of payments to the investor; (iv) effecting such a change if desired; (v) inquiring about and viewing the terms and outcomes of making other changes including at least: (a) buying equity from the investor; (b) selling equity to the investor; (c) refinancing the EBP arrangement by terminating the old arrangement and associated fixed schedule of homeowner earned equity accruals in favor of a new EBP arrangement on market terms that includes a new and different fixed schedule of homeowner earned equity accruals; or (d) refinancing the EBP agreement by terminating the old arrangement and the associated fixed schedule of homeowner earned equity accruals in favor of an MM-0 housing finance arrangement in which the schedule of homeowner earned equity accruals is not fixed but equals what would be the unscheduled outcome under EBP arrangements; and (vi) effecting any such change if desired. The embodiments illustrate how the computer technology comprising the invention facilitates the complex interactions involving at least one third party (in the specific example above, an EBP holder) as well as the homeowner and investor in a way that at the same time enables a low-cost integrated presentation on a single website. The invention enables the web presentation for homeownership that parallels the scope of the presentation on investment services websites in which complex auxiliary functions involving third parties operate "under the hood." The invention does so in a way that is similar to its implementation for MM-0 and MM-1 arrangements even though the EBP arrangements are not neutral and are not direct arrangements in which the balancing mechanism directly creates the allocation between homeowners, investors, and third parties participating in the housing arrangement. It will be clear to one skilled in the art that the computer technology that comprises the invention can achieve the same result for a wide variety of other housing arrangements that are not direct arrangements and may not be neutral.

*Transactions Between Investors*

In one embodiment, the title to the underlying homes is held by homeowners, by a partnership, or in another form in which investors are not on title but have a contractual position. In this embodiment the contractual rights can be set up so that investors can buy, sell, and exchange their positions with each other without necessitating a transfer of the property itself. In addition to simple transfers of investor interests, this ability allows certain portfolio balancing transactions between portfolio funds as investors to take place more easily. Whether or not the investors are portfolio funds, the computer technology comprising the invention can enable low-cost and efficient transfers between investors without requiring substantial involvement by homeowners who experience no interruption in the access provided by the computer technology comprising the invention to a single website and various GUI-based pages that enable the homeowner to engage in a large number of monitoring and action functions at low cost and nearly instantaneously.

*Investor Transaction Platform*

To describe how the invention implements an embodiment of an investor transaction platform, we limit the possible housing finance arrangements for each home to MM-0 housing finance arrangements in which there is a single homeowner and a single investor, each holding unleveraged equity interests, and no third-party participation in the form of a mortgage or otherwise. The innovation includes one or more embodiments where the investor transaction platform operates for housing finance arrangements other than MM-0 arrangements and for which there are multiple homeowners for a single home, multiple investors in a single home, or third parties who hold interests such as a mortgage or an EBP.

In one embodiment, the data describing homes and the applicable DOOR instrument housing arrangements resides in a housing instrument data blockchain. The data includes at least: (i) the characteristics of each home including at least the address and a systematic description of the physical properties of the home suitable for a real estate listing; (ii) the current contractual terms of the DOOR instrument housing finance arrangement along with the current values of quantitative elements that govern the arrangement including at least the level of payments from the homeowner to the investor; (iii) the current operative valuation of the home, the current operative imputed rental rate, and the current operative value of all other parameters that serve as inputs for the balancing mechanism that implements the DOOR instrument housing finance arrangement applicable to the home; (iv) the current equity stake of the investor in the home; (v) the complete history of the evolution of values and stakes for the DOOR instrument housing finance arrangement; (vi) whether the investor is currently offering part or all of the investor's stake for sale, in which case there is an "active sale offer"; and (vii) whether, in the absence of an active sale offer, the investor is open to unsolicited offers to buy part or all of the investor's equity stake, in which case, the investor's stake is "open to offers to buy."

In this embodiment, the title to the underlying homes is held by homeowners, by a partnership, or in another form in which investors are not on title but have a contractual position, the contractual rights in the DOOR instrument housing finance arrangements are set up so that investors can buy, sell, and exchange their positions with each other without necessitating a transfer of the property itself, and all of the DOOR instrument housing finance arrangements are MM-0 investment compatible.

An investor transaction website operated by the managing entity allows approved existing investors and pre-approved potential investors, collectively "approved investors," to engage in offers for purchase or sale of investor stakes in DOOR instrument housing finance arrangements through a transaction platform and to consummate the purchases or sales if the offers are accepted. The transaction platform portion of the website and the ability to transact on it is only accessible to approved investors who have been accepted as such and whose approved status is current under procedures that will be clear to one skilled in the art, that may involve both online and offline steps, and the outcomes and current status of which will be written on the housing instrument data blockchain. An approved investor accesses the transaction platform on the website through a password or other protocol that will be familiar to one skilled in the art. The transaction platform allows access to a listing portion of the website that presents active sales offers of investor stakes and the details of investor stakes for which the investor interest is open to offers to buy. The listing portion is organized and presented in a manner similar to real estate listing websites. If the approved investor is interested in a particular investor stake, the transaction platform facilitates both online and offline communication between the approved investor and the investor who is actively offering an investment stake or is open to offers to buy.

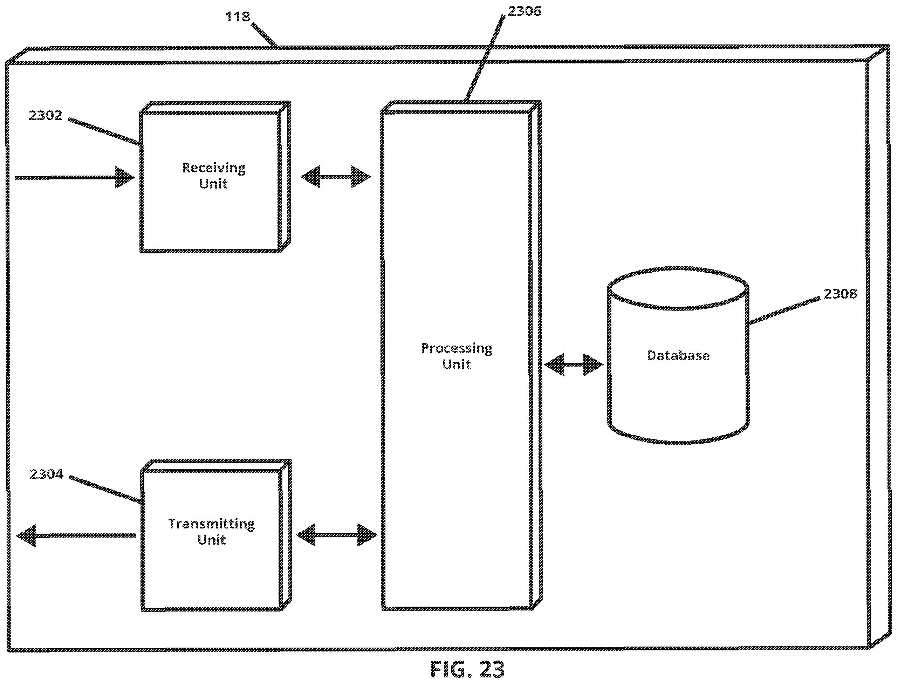

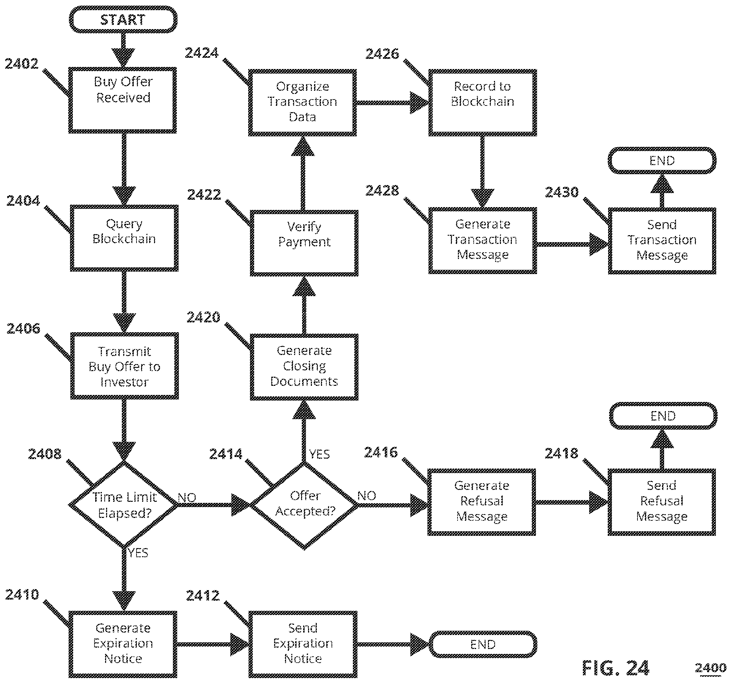

An embodiment can be understood with reference to FIG. 24, a flow diagram (2400) illustrating a buy offer process and an update to the blockchain system in relation to an accepted buy offer in accordance with exemplary embodiments. If the approved investor and an investor holding an investor stake in a DOOR instrument (the "target investor" for the offer) reach an agreement in principle to consummate a transaction, then the approved investor accesses the transaction platform website, identifies the investor stake of interest, and states the offering terms using electronic forms provided by the website on one or more GUI-based pages. The website, through a transmitting unit sends a buy offer message to a receiving unit of a transaction engine **118** operated by the managing entity (2402). An embodiment of the transaction engine can be understood with reference to FIG. 23, as it is a trading engine of FIG. 1. One exemplary embodiment of a transaction engine **118** has a receiving unit **2302** that receives data over one or more networks, a transmitting unit **2304** that transmits over one or more networks, a processing unit **2306** with the computer architecture to execute the exemplary embodiments, and a database **2308** for storing data. The buy offer message at least: (i) identifies the investor stake of interest; (ii) specifies the terms of the buy offer and the deadline for accepting the offer; and (iii) includes security information suitable to identify the approved investor as the sender of the message. The transaction engine sends through a transmitting unit a query of the housing instrument data blockchain system along with access authorization data to extract relevant data related to the buy offer message including at least data with respect to the identity of the investor holding the investor stake of interest, whether the stake is subject to an active sell offer or is open to offers to buy, and the identity and approval status of the approved investor sending the buy offer message (2404).

The housing instrument data blockchain system implements its access protocol to determine if the transaction engine has access to the requested data. After verifying permission for access, the transaction engine receives the relevant data from the housing instrument data blockchain via a receiving unit, and the processing unit associated with the transaction engine checks the approval status of the approved investor and matches the target investor with the investor stake of interest. If the approved status is current, the transaction engine through a transmitting unit sends a buy offer notice to a receiving unit of the target investor (2406) containing buy offer data including at least: (i) the identity and approved status of the approved investor making the offer; (ii) the terms of the offer; (iii) a deadline for accepting the offer after which it will expire; and (iv) a method of accepting or refusing the offer by conveying the offer or refusal to a receiving unit of the transaction engine. The transaction engine via a transmitting unit alerts the target investor (or an artificial intelligence entity representing the investor), who may be offline, via email or an SMS message through a mobile phone or other receiving device of the buy offer and the buy offer data. If the transaction engine, through a receiving unit, receives a message from the target investor refusing the offer (2414), then the transaction engine generates a refusal notice (2416), and, through a transmitting unit, sends the refusal notice to a receiving unit of the approved investor making the offer (2418) and alerts the approved investor, who may be offline, via email or an SMS message through a mobile phone or other receiving device of the refusal. If the offer expires because the target investor did not accept it by the deadline (2408), then the transaction engine generates an offer expiration notice (2410), and, through a transmitting unit sends the offer expiration notice both to a receiving unit of the approved investor making the offer and to a receiving unit of the target investor (2412) and also alerts the parties, one or both of whom may be offline, via email or an SMS message through a mobile phone or other receiving device of the expiration of the offer.

If the transaction engine, through a receiving unit, receives a message from the target investor accepting the offer (2414), then the transaction engine, through a transmitting unit sends an acceptance notice to a receiving unit of the approved investor making the offer and alerts the approved investor, who may be offline, via email or an SMS message through a mobile phone or other receiving device of the acceptance. The transaction engine through a processing unit prepares a set of requisite closing documents (2420), tailored to the particular approved investor, the particular target investor, and the particular investor stake. The transaction engine, through a transmitting unit, makes these forms accessible on the transaction platform website with access limited to the purchasing and selling investors through password protocols or other devices familiar to one skilled in the art. The transaction engine through a transmission engine sends an execution procedure notice to receiving units of the purchasing and selling investors and also alerts both investors, one or both of whom may be offline, via email or an SMS message through a mobile phone or other receiving device of the need to complete the closing documents online and make the required payment arrangements. After the documents are completed by both parties online and verified as complete in all respects by the transaction engine through its processing unit and payment is verified (2422), the transaction engine creates and organizes a transaction data package (2424) in a form suitable for writing on the housing instrument data blockchain. The transaction data package contains at least: (i) the parties to the transaction; (ii) the terms of the transaction; (iii) the date and time the transaction became effective; and (iv) a complete set of closing documents. The transaction engine transmits through a transmitting unit a query of the housing instrument data blockchain system along with access authorization data to secure permission to write the transaction data package onto the blockchain.

The housing instrument data blockchain system implements its access protocol to verify that the contract engine has the requisite permissions. After receiving confirmation of the verification through a receiving unit, the transaction engine, through a transmitting unit writes the transaction data package onto the blockchain (2426), creating a record of the transaction on the blockchain, and effectuating the transfer. The transaction engine generates a transaction message (2428) and sends, via a transmitting unit, the relevant portions of the transaction data package as well as notice that the transaction is complete to the portion of the transaction platform website accessible only to the purchasing and selling investors (2430). The transaction engine via a transmitting unit alerts the purchasing and selling investors, who may be offline, via email or an SMS message through a mobile phone or other receiving device that the transaction is completed and that the relevant completion data is available on the transaction platform website along with instructions to access the part of the website where that data resides.

The embodiment of the investor trading platform just described illustrates that the computer technology created by the invention allows investor transactions with respect to investor stakes in DOOR instrument housing finance arrangements to take place entirely in the background as far as homeowners are concerned. The homeowner's ability to access a single website and various GUI-based pages in order to engage in a large number of monitoring and action functions at low cost and nearly instantaneously created by the computer technology that comprises the invention is not affected. The homeowner does not even have to switch websites for purposes of making payments or receiving information, as is the case, for example, in some instances when mortgagee interests are transferred from one mortgagee to another under existing technology.

*Coordination of Investor Transactions with Portfolio Balancing*

In one embodiment, the managing entity operates one or more real estate portfolios as investor, and these portfolios have goals or targets including at least replicating municipal, regional, or national housing indices as closely as possible. Balancing such portfolios requires purchase and sales activity by the managing entity as investor to keep the portfolios on track versus the target in face of portfolio turnover including at least: home sales, homeowner accrual of earned equity, homeowner purchase of investor equity, or homeowner sale of earned equity to the investor under the terms of the governing housing finance arrangement.

Several of the DOOR instruments embodying housing finance arrangements described so far create a position for the investor equivalent to an MM-0 housing finance arrangement in which the position consists of unleveraged equity that earns the raw return on owner-occupied housing, which equals home appreciation plus imputed rent net of expenses. Although these "MM-0 investment compatible instruments" may differ with respect to the treatment of third parties or the homeowner, all of them are suitable for inclusion in portfolios designed to track or create housing indices. As a result, these portfolios have the full class of MM-0 investment compatible instruments available for inclusion, not just instruments that implement MM-0 arrangements directly. For example, the class of DOOR instrument implementations of the EBP arrangements described above consists of MM-0 investment compatible instruments because of the property that investor outcomes are the same as under MM-0 arrangements.

In an embodiment, a straightforward modification of the investor trading platform to at least restrict the scope to MM-0 housing finance arrangements and simplify the trading steps based on common management of the different portfolio funds can facilitate portfolio balancing purchases and sales between housing index portfolio funds in a way that requires no substantial participation by homeowners, who, as a consequence, will experience no interruption in the access provided by the computer technology comprising the invention to a single website and various GUI-based pages that enable homeowners to engage in a large number of monitoring and action functions at low cost and nearly instantaneously. The facilitation of portfolio balancing purchases and sales will be particularly valuable for portfolio funds that are embodied in cryptocurrencies as discussed above.

*Integration of Purchase, Origination, and Sales Elements*

The embodiments above describe how the computer technology comprising the invention makes it possible for homeowners and other interested parties to access a single website and various GUI-based pages in order to engage in a large number of functions at low cost and nearly instantaneously. Several of the embodiments indicate how the computer technology comprising the invention facilitates the complex interactions involving third-parties either among themselves or with the homeowner and investor in ways that at the same time continue to support a low-cost integrated presentation on a single website. The invention enables a web presentation for homeownership that parallels the broad scope of the presentation and functionality on investment services websites in which many complex auxiliary tasks involving third parties operate in a way that is not visible and that does not interrupt the functionality of the website for users.

Most of the embodiments above involved functions during the period of ownership such as changing the terms of the underlying housing finance agreement or the positions of the parties. In one or more embodiments, many purchase, origination, and sales elements may be integrated into the single website as well. The elements that can be integrated include at least: (i) online application by the homeowner for a DOOR instrument housing finance arrangement; (ii) underwriting and credit analysis with respect to that application; (iii) consumer education and disclosures with respect to the housing finance arrangement; (iv) the promulgation of documents, including closing documents; (v) escrow services; (vi) closing functions; (vii) the management of functions that cannot be performed online through communication with the relevant parties; and (viii) recording the transaction and archiving the relevant documents on one or more blockchains including at least a housing instrument data blockchain. Certain investors including at least one or more cryptocurrency-based housing portfolios operated by the managing entity may offer homes on the market in conjunction with DOOR instrument housing finance or may offer to buy out homeowners currently in DOOR instrument housing finance arrangements who wish to sell their homes. These "in system" sales and purchases through the single website create further scope for economizing on sale and purchase costs and for streamlining the required tasks.

*An Exemplary Embodiment*

In accordance with an embodiment, a computer technology system for real time, dynamic management of a real estate finance, services, and reporting comprises:

maintaining, on a website controlled by a managing entity and accessible to at least a homeowner and an investor, a display of the terms, parameter values, and upcoming required actions under a housing finance arrangement;

storing, in at least one blockchain system containing at least a housing instrument data blockchain, the system containing at least: contractual information specifying at least one housing finance arrangement between at least one homeowner and at least one investor financing a particular home, a time series of economic parameters relevant to dynamic management of at least one housing finance arrangement, a record of current and past ownership of the financing debt or equity, a record of transactions including at least payments by the homeowner to investors, a record of any adjustments to or changes in the housing finance arrangement, specification of at least one balancing mechanism designed to track at least the homeowner's and investor's net contributions considering the housing finance arrangement between them as a joint venture and to adjust at least one residual account to reflect the net contributions of the parties, a record of the data and calculations of a balancing engine operating continuously based on one or more balancing mechanisms along with the resulting adjustments of at least one residual account, an access protocol defining various levels of access to data in the blockchain system as well as levels of permission to write new data onto the blockchain system, and data describing the homes that are the subject of the housing finance arrangements;

maintaining, on at least one processing server controlled by a managing entity, a balancing engine embodied in at least one processing unit, at least one receiving unit, and at least one transmitting unit for purposes of implementing adjustments under a balancing mechanism;

receiving, periodically through a receiving unit of the balancing engine, a message from the managing entity or an artificial intelligence entity representing it, initiating a balancing entry onto the housing instrument data blockchain; transmitting, through a transmitting unit of the balancing engine, a query of the blockchain system for data relevant to a balancing calculation; receiving said data through a receiving unit of the balancing engine;

in a direct arrangement, determining through a processing unit of the balancing engine an updated balance in at least one residual account; writing, through a transmitting unit of the balancing engine, the updated residual account balance along with details of the computation on the housing instrument data blockchain; modifying, through a processing unit and a transmitting unit of the balancing engine, a website accessible at least to a homeowner and an investor to display the updated residual account balance and then, through a transmitting unit of the balancing engine, alerting at least a homeowner and an investor, who may be offline, of the updated residual account balance through a mobile phone or other receiving device;

or in an arrangement that is not a direct arrangement, determining through a processing unit of the balancing engine an updated unscheduled outcome and associated quantities that use the unscheduled outcome as an input; writing, through a transmitting unit of the balancing engine, the updated unscheduled outcome and associated quantities along with details of the computation on the housing instrument data blockchain; modifying, through a processing unit and a transmitting unit of the balancing engine, a website accessible to at least a homeowner, an investor, and a residual balancing position holder to display the updated unscheduled outcome and associated quantities and then, through a transmitting unit of the balancing engine, alerting at least a homeowner, an investor, and a residual balancing position holder, who may be offline, of the updated unscheduled outcome and associated quantities through a mobile phone or other receiving device;

maintaining, on at least one processing server controlled by a managing entity, at least one data engine embodied in at least one processing unit, at least one receiving unit, at least one transmitting unit, and at least one database for purposes of creating, gathering, updating, processing, storing, and communicating at least one time series of at least one data parameter;

receiving, on a receiving unit of at least one data engine, third-party data comprising input data for computing at least one data parameter generated by the data engine; formatting, through a processing unit of the data engine, the added data and then modifying, through the same processing unit of the data engine, a database to incorporate the added data; computing, through a processing unit of the data engine, at least one non-third-party version of the data parameter if desired; computing, through a processing unit of the data engine, a single operative value of the data parameter using the third-party and non-third-party valuations; writing, through a transmitting unit of the data engine, the updated operative value of the data parameter along with a record of the calculation including at least a time and date stamp of the calculation, the third-party and non-third-party values, and the methodology used to compute the operative value onto a housing instrument data blockchain; modifying, through a processing unit and a transmitting unit of the data engine, a website accessible at least to a homeowner and an investor to display the updated operative value of the data parameter and then, through a transmitting unit of the data engine, alerting at least a homeowner and an investor, who may be offline, of the updated operative value through a mobile phone or other receiving device if either party requested updates of the operative value generally or upon certain values of the data parameter being realized;

maintaining, on at least one processing server controlled by a managing entity, at least one third-party data engine embodied in at least one processing unit, at least one receiving unit, at least one transmitting unit, and at least one database for the purposes of creating, gathering, updating, processing, storing, and communicating at least one time series of at least one data parameter that emerges from at least one third-party finance arrangement;

receiving, on a receiving unit of at least one third-party data engine operating on a processing server controlled by the managing entity, data with respect to at least one third-party finance arrangement; identifying, through a processing unit of the third-party data engine, the elements of the data that need to be recorded on a housing instrument data blockchain and modifying the data that needs to be recorded into a suitable format;

writing, through a transmitting unit of the third-party data engine, the necessary data elements along with a record of any associated calculations on a housing instrument data blockchain; extracting from the housing instrument data blockchain, through a receiving unit of the third-party data engine, data adequate to describe the current status and relevant history of the third-party finance arrangement; organizing, through a processing unit of the third-party data engine, this data into a form suitable for website display; modifying, through a processing unit and a transmitting unit of the third-party data engine, a website accessible at least to a homeowner and an investor to display the updated data for the third-party finance arrangement, and then, through a transmitting unit of the third-party data engine, alerting at least a homeowner and an investor, who may be offline, of the updated data through a mobile phone or other receiving device if either party requested such updated data generally or upon certain values of the certain data parameters being realized;

maintaining, on a least one processing server controlled by a managing entity, a contract engine embodied in at least one processing unit, at least one receiving unit, and at least one transmitting unit for purposes of initiating, implementing, enforcing, and updating the housing finance arrangement between at least a homeowner and an investor;

receiving, through a receiving unit of a contract engine operating on a processing server controlled by a managing entity, initial contract data describing a housing finance arrangement; identifying, through a processing unit, the elements of the initial contract data that need to be recorded on a housing instrument data blockchain; organizing and modifying, through a processing unit of the contract engine, the data that needs to be recorded into a suitable format; writing through a transmitting unit of the contract engine the necessary data elements on a housing instrument data blockchain;

receiving, on a website or other input device controlled by a managing entity, a request from the homeowner to alter at least one term in a housing finance arrangement specifying at least one option for a new term; transmitting, through a transmitting unit of a server controlled by the managing entity, the request to a receiving unit of a contract engine operating through a processing unit controlled by the managing entity;

in the case of a direct arrangement, extracting, from the housing instrument data blockchain through a receiving unit of the contract engine, necessary contract provisions governing the requested change in terms for each option along with other relevant data; determining, through a processing unit of the contract engine, if the requested change in terms for each option is permitted under the housing finance arrangement contract and, if so, whether any approvals by parties other than the homeowner are required; if the change in terms under at least one option is otherwise permissible, seeking, through a transmitting unit of the contract engine, any required approvals for each option by alerting at least one relevant party through at least one receiving device of said party of the need to approve or deny approval of each option that requires approval; after receiving a response or after the deadline for a response lapses, determining, through a processing unit of the contract engine, whether each option proposed by the homeowner is approved or denied; modifying, through a transmitting unit of the contract engine, a website accessible to the homeowner to inform the homeowner of whether each option is authorized or denied, and, in the case that at least one option is authorized, requesting the homeowner to confirm acceptance of one of the options or to reject all of them, and then via a transmitting unit of the data engine alerting at least the homeowner, who may be offline, through a mobile phone or other receiving device of the authorized or denied options, and, if at least one option is authorized, the need to confirm one option or reject them all; if the homeowner confirms an option, writing, through a transmitting unit of the contract engine, the change in terms along with associated data comprising the accepted option including at least the effective date and time of the change in terms onto the housing instrument data blockchain; modifying, through a processing unit and a transmitting unit of the contract engine, a website accessible at least to a homeowner and an investor to confirm that the change is in effect, to display the effective time and date of the change, and to display the new housing finance arrangement terms, and then, through a transmitting unit of the contract engine alerting at least a homeowner and an investor, who may be offline, that the change is in effect along with the effective time and date of the change through a mobile phone or other receiving device;

or in an arrangement that is not a direct arrangement, extracting, from the housing instrument data blockchain, through a receiving unit of the third-party data engine, necessary contract provisions governing the requested change in terms along with other relevant data including at least data sufficient to generate offers to the homeowner with respect to each option, the offers containing changes in terms of the housing finance arrangement other than the terms that are the subject of the request; computing, through a processing unit of the contract engine, at least one offer for each change-in-terms option specified by the homeowner; modifying, through a transmitting unit of the contract engine, a website accessible to the homeowner to inform the homeowner of the offers and requesting the homeowner to confirm acceptance of one of the offers or to confirm rejection of all of the offers, and then, through a transmitting unit of the contract engine alerting at least the homeowner, who may be offline, through a mobile phone or other receiving device of the offers and the need to accept one or turn them all down; creating, through a processing unit of the contract engine, an offer data ensemble including at least the content of the offers and the values of the governing data parameters at the time of the offers, values that govern the offer terms; writing, through a transmitting unit of the contract engine, the offer data ensemble onto the housing instrument data blockchain; if the homeowner accepts an offer, extracting, through a receiving unit of the contract engine, the offer data ensemble from the housing instrument data blockchain; computing, through a processing unit of the contract engine using the offer data ensemble , the adjustments between at least a homeowner, an investor, and a residual balancing position holder required to close out the existing housing finance arrangement and replace it with a new one embodying the terms specified in the accepted offer; transmitting through a transmitting unit of the contract engine, a message informing the relevant parties of the required steps; receiving, through a receiving unit of the contract engine, verification that the required steps, including any required payments between parties, have been completed; compiling, through a processing unit of the contract engine, a transition data package including at least the adjustments made to close the existing housing finance arrangement, the terms of the new housing finance arrangement along with the starting residual account positions of the parties, and the date and time the new arrangement went into effect; writing, through a transmitting unit of the contract engine, the transition data onto the housing instrument data blockchain, thereby effecting the shift to the new housing finance arrangement; creating, through a processing unit of the contract engine, separate displayable versions of the transition data appropriate for each relevant party; modifying, through a processing unit and a transmitting unit of the contract engine, a website accessible to the relevant parties to display the transition data in separate versions on separate portions of the website to each separate party as well as to display the new arrangement in commonly accessible areas of the website, and, through a transmitting unit of the contract engine, alerting each of the relevant parties, who may be offline, of the transition data relevant to that party as well as of the common data describing the new housing finance arrangement;

receiving, on a website or other input device controlled by a managing entity, a request from a homeowner to sell a residual account position to at least one investor or to buy a residual account position from at least one investor; transmitting, through a transmitting unit of a server controlled by the managing entity, the sell or buy request to a receiving unit of a contract engine operating through a processing unit controlled by the managing entity;

in the case of a direct arrangement, extracting, from the housing instrument data blockchain through a receiving unit of the contract engine, necessary contract provisions governing the requested sale or purchase along with other relevant data including at least the data required to determine the terms of the sale or purchase; determining, through a processing unit of the contract engine, if the requested sale or purchase is permitted under the housing finance arrangement contract and, if so, whether approval by the investors on the other side of the transaction is required; determining, through a processing unit of the contract engine, the applicable terms of the purchase or sale; and if the sale or purchase is otherwise permissible, seeking, through a transmitting unit of the contract engine, investor approvals, if required, based on the computed terms by alerting the investors through at least one receiving device of each said investor of the terms and the need to approve or deny approval; after receiving a response or after the deadline for a response lapses, determining, through a processing unit of the contract engine, whether the sale or purchase on the computed terms is authorized or denied; modifying, through a transmitting unit of the contract engine, a website accessible to the homeowner to inform the homeowner of authorization or denial, and, in the case of authorization, requesting the homeowner to confirm acceptance or rejection on the basis of the computed terms, and then, through a transmitting unit of the contract engine, alerting the homeowner, who may be offline, through a mobile phone or other receiving device of the authorization or denial, and, in the case of authorization, requesting the homeowner to confirm acceptance or rejection of the transaction on the basis of the computed terms; if the homeowner confirms the transaction, transmitting, through a transmitting unit of the contract engine, a message informing the relevant party or parties of the required steps; receiving, through a receiving unit of the contract engine, verification that the required steps, including any required payments between the parties, have been completed; compiling, through a processing unit of the contract engine, a transaction data package including at least the confirmation of the transaction, the terms of the transaction, the date and time the transaction was effective, and the new residual account positions of the parties as of that date and time; writing, through a transmitting unit of the contract engine, after suitable formatting through a processing unit of the contract engine, the transaction data onto the housing instrument data blockchain; modifying, through a processing unit and a transmitting unit of the contract engine, a website accessible at least to a homeowner and an investor to display the relevant portions of the transaction data, and then, through a transmitting unit of the contract engine alerting at least a homeowner and an investor, who may be offline, of the relevant portions of the transaction data through a mobile phone or other receiving device;

or in an arrangement that is not a direct arrangement, extracting from the housing instrument data blockchain, through a receiving unit of the third-party data engine, necessary contract provisions governing the requested sale or purchase along with other relevant data including at least data sufficient to generate offers to the homeowner with respect to the proposed sale or purchase, each offer containing changes in the terms of the housing finance arrangement accompanying the proposed sale or purchase;

computing, through a processing unit of the contract engine, at least one offer with respect to the sale or purchase proposed by the homeowner; determining, through a processing unit of the contract engine, if the requested sale or purchase is permitted under the housing finance arrangement contract and, if so, whether approval by the investors on the other side of the transaction is required; determining, through a processing unit of the contract engine, the applicable terms of the purchase or sale and the terms of each offer; and if the sale or purchase is otherwise permissible, seeking, through a transmitting unit, investor approvals with respect to each offer, if required, based on the computed terms by alerting the investors through at least one receiving device of each said investor of the offers, and the need to approve or deny approval of each offer; after receiving a response or after the deadline for a response lapses, determining, through a processing unit of the contract engine, whether each offer is authorized or denied; modifying, through a transmitting unit of the contract engine, a website accessible to the homeowner to inform the homeowner of authorization or denial of each offer, and, in the case of authorization of at least one offer, requesting the homeowner to confirm acceptance of one offer along with the sale or purchase terms or to reject them all, and then, through a transmitting unit of the contract engine, alerting the homeowner, who may be offline, through a mobile phone or other receiving device of the authorization or denial of each offer, and, in the case of authorization of at least one offer, requesting the homeowner to confirm acceptance of one offer along with the sale or purchase terms or to reject them all; creating, through a processing unit of the contract engine, an offer data ensemble including at least the content of the offers, the sale or purchase terms, and the values of the governing data parameters at the time of the offers, values that govern the offer terms; writing, through a transmitting unit of the contract engine, the offer data ensemble onto the housing instrument data blockchain; if the homeowner accepts an offer along with the sale or purchase terms, extracting, through a receiving unit of the contract engine, the offer data ensemble from the housing instrument data blockchain; computing, through a processing unit of the contract engine using the offer data ensemble, the adjustments between at least a homeowner, an investor, and a residual balancing position holder required to close out the existing housing finance arrangement and replace it with a new one embodying the terms specified in the accepted offer; transmitting, through a transmitting unit of the contract engine, a message informing the relevant parties of the required steps; receiving, through a receiving unit of the contract engine, verification that the required steps, including any required payments between parties, have been completed; compiling, through a processing unit of the contract engine, a transition data package including at least the adjustments made to close the existing housing finance arrangement, the terms of the sale or purchase, the terms of the new housing finance arrangement along with the starting residual account positions of the parties, and the date and time the new arrangement went into effect; writing, through a transmitting unit of the contract engine, the transition data onto the housing instrument data blockchain, effecting the shift to the new housing finance arrangement; creating, through a processing unit of the contract engine, separate displayable versions of the transition data appropriate for each relevant party; modifying, through a processing unit and a transmitting unit of the contract engine, a website accessible to the relevant parties to display the transition data in separate versions on separate portions of the website to each separate party as well as to display the new arrangement in commonly accessible areas of the website, and then, through a transmitting unit of the contract engine, alerting each of the relevant parties, who may be offline, of the transition data relevant to that party as well as the common data describing the new housing finance arrangement.

*Computer System*

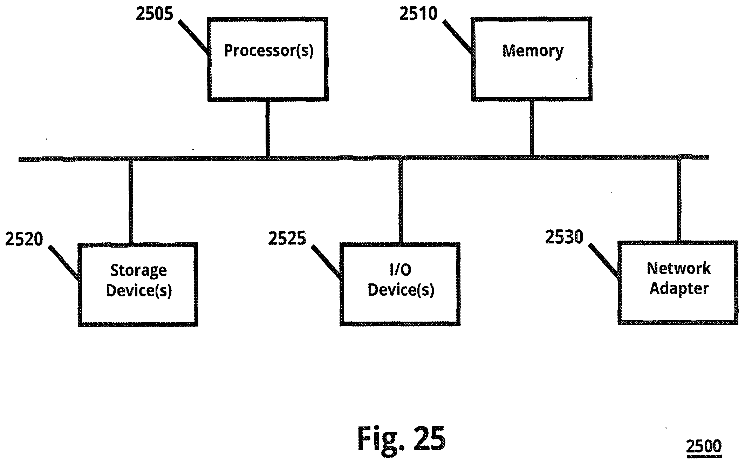

FIG. 25 is a block diagram of a computer system as may be used to implement certain features of some of the embodiments. The computer system may be a server computer, a client computer, a personal computer (PC), a user device, a tablet PC, a laptop computer, a personal digital assistant (PDA), a cellular telephone, an iPhone, an iPad, a Blackberry, a processor, a telephone, a web appliance, a network router, switch or bridge, a console, a hand-held console, a (hand-held) gaming device, a music player, any portable, mobile, hand-held device, wearable device, or any machine capable of executing a set of instructions (sequential or otherwise) that specify actions to be taken by that machine.

The computing system (2500) may include one or more central processing units ("processors") (2505), memory (2510), input/output devices (2525), e.g. keyboard and pointing devices, touch devices, or display devices, storage devices (2520), e.g. disk drives, and network adapters (2530), e.g. network interfaces, that are connected to an interconnect (2515). The interconnect (2515) is illustrated as an abstraction that represents any one or more separate physical buses, point to point connections, or both, connected by appropriate bridges, adapters, or controllers. The interconnect (2515), therefore, may include, for example, a system bus, a Peripheral Component Interconnect (PCI) bus or PCI-Express bus, a HyperTransport or industry standard architecture (ISA) bus, a small computer system interface (SCSI) bus, a universal serial bus (USB), IIC (12C) bus, or an Institute of Electrical and Electronics Engineers (IEEE) standard 1394 bus, also called Firewire.

The memory (2510) and storage devices (2520) are computer-readable storage media that may store instructions that implement at least portions of the various embodiments. In addition, the data structures and message structures may be stored or transmitted via a data transmission medium, e.g. a signal on a communications link. Various communications links may be used, e.g. the Internet, a local area network, a wide area network, or a point-to-point dial-up connection. Thus, computer-readable media can include computer-readable storage media, e.g. non-transitory media, and computer-readable transmission media.

The instructions stored in memory (2510) can be implemented as software and/or firmware to program the processor (2505) to carry out actions described above. In some embodiments, such software or firmware may be initially provided to the processing system (2500) by downloading it from a remote system through the computing system (2500), e.g. via network adapter (2530).

The various embodiments introduced herein can be implemented by, for example, programmable circuitry, e.g. one or more microprocessors, programmed with software and/or firmware, or entirely in special-purpose hardwired (non-programmable) circuitry, or in a combination of such forms. Special-purpose hardwired circuitry may be in the form of, for example, one or more ASICs, PLDs, FPGAs, *etc.*

While various exemplary embodiments of the disclosed system and method have been described above it should be understood that they have been presented for purposes of example only, not limitations. It is not exhaustive and does not limit the disclosure to the precise form disclosed. Modifications and variations are possible in light of the above teachings or may be acquired from practicing of the disclosure, without departing from the breadth or scope. Accordingly, the invention should only be limited by the claims included below.

**Claims**

1. A computer implemented method for real time, dynamic management of a real estate finance, services, and reporting, comprising:

maintaining, by a processor, on a website controlled by a managing entity and accessible to at least a homeowner, any holder of a residual balancing position, and an investor, a display of the terms, parameter values, and upcoming required actions under a housing finance arrangement;
storing, by said processor, in at least one blockchain system containing at least a housing instrument data blockchain confidential data;
maintaining, by said processor, on at least one server controlled by a managing entity, a balancing engine embodied in at least one processing unit, at least one receiving unit, and at least one transmitting unit for purposes of implementing adjustments under a balancing mechanism;
periodically through a receiving unit of the balancing engine, receiving a message from the managing entity or an artificial intelligence entity representing it, initiating a balancing entry onto the housing instrument data blockchain;
transmitting, through a transmitting unit of the balancing engine, a query of the blockchain system for data relevant to a balancing calculation, wherein the data resides in the housing instrument data blockchain and includes a time series of all the contribution elements including at least homeowner payments to the investor, wherein the balancing mechanism enables the balancing engine to adjust a residual account, for each of multiple time periods, based on the homeowner's net contribution and the home value during each time period, in accordance with a purchase parity accumulation algorithm and wherein a time series of home values is written to the housing instrument data blockchain for use by the balancing engine;
receiving said data through a receiving unit of the balancing engine;
when in a direct arrangement, determining through a processing unit of the balancing engine an updated balance in at least one residual account;

writing, through a transmitting unit of the balancing engine, the updated residual account balance along with details of the computation on the housing instrument data blockchain;
modifying the website through a processing unit and a transmitting unit of the balancing engine to display the updated residual account balance; and

through a transmitting unit of the balancing engine, alerting at least a homeowner and an investor, who may be offline, of the updated residual account balance through a mobile phone or other receiving device; and

when in an arrangement that is not a direct arrangement, determining through a processing unit of the balancing engine an updated unscheduled outcome and associated quantities that use the unscheduled outcome as an input;

writing, through a transmitting unit of the balancing engine, the updated unscheduled outcome and associated quantities along with details of the computation on the housing instrument data blockchain; modifying the website, through a processing unit and a transmitting unit of the balancing engine, to display the updated unscheduled outcome and associated quantities; and through a transmitting unit of the balancing engine, alerting at least a homeowner, an investor, and a residual balancing position holder, who may be offline, of the updated unscheduled outcome and associated quantities through a mobile phone or other receiving device.

2. The method of Claim 1, further comprising:
maintaining, on at least one processing server controlled by a managing entity, at least one data engine embodied in at least one processing unit, at least one receiving unit, at least one transmitting unit, and at least one database, said processing server creating, gathering, updating, processing, storing, and communicating at least one time series of at least one data parameter.

3. The method of Claim 1, further comprising:

receiving, on a receiving unit of at least one data engine, third-party data comprising input data for computing at least one data parameter generated by the data engine;
formatting, through a processing unit of the data engine, the added data and then modifying, through the same processing unit of the data engine, a database to incorporate the added data;
computing, through a processing unit of the data engine, at least one non-third party version of the data parameter;
computing, through a processing unit of the data engine, a single operative value of the data parameter using the third-party and non-third party valuations;
writing, through a transmitting unit of the data engine, the updated operative value of the data parameter along with a record of a the calculation including at least a time and date stamp of the calculation, the third-party and non-third party values, and the methodology used to compute the operative value onto a housing instrument data blockchain; and
modifying the website through a processing unit and a transmitting unit of the data engine to display the updated operative value of the data parameter and then, through a transmitting unit of the data engine, alerting at least a homeowner and an investor, who may be offline, of the updated operative value through a mobile phone or other receiving device when either party requested updates of the operative value generally or upon certain values of the data parameter being realized.

4. The method of Claim 1, further comprising:
maintaining, on at least one processing server controlled by a managing entity, at least one third-party data engine embodied in at least one processing unit, at least one receiving unit, at least one transmitting unit, and at least one database for the purposes of creating, gathering, updating, processing, storing, and communicating at least one time series of at least one data parameter that emerges from at least one third-party finance arrangement.

5. The method of Claim 1, further comprising:

receiving, on a receiving unit of at least one third-party data engine operating on a processing server controlled by the managing entity, data with respect to at least one third-party finance arrangement;
identifying, through a processing unit of the third-party data engine, elements of data to be recorded on a housing instrument data blockchain;
modifying the data to be recorded into a suitable format;
writing, through a transmitting unit of the third-party data engine, data elements along with a record of any associated calculations on a housing instrument data blockchain;
extracting from the housing instrument data blockchain, through a receiving unit of the third-party data engine, data to describe the current status and relevant history of the third-party finance arrangement;

organizing, through a processing unit of the third-party data engine, said data for website display;

modifying the website through a processing unit and a transmitting unit of the third-party data engine to display the updated data for the third-party finance arrangement; and

through a transmitting unit of the third-party data engine, alerting at least a homeowner and an investor, who may be offline, of the updated data through a mobile phone or other receiving device if either party requested such updated data generally or upon certain values of the certain data parameters being realized.

6. The method of Claim 1, further comprising:

maintaining, on a least one processing server controlled by a managing entity, a contract engine embodied in at least one processing unit, at least one receiving unit, and at least one transmitting unit to initiate, implement, enforce, and update the housing finance arrangement between at least one homeowner and an investor.

7. The method of Claim 1, further comprising:

receiving, through a receiving unit of a contract engine operating on a processing server controlled by a managing entity, initial contract data describing a housing finance arrangement;

identifying through a processing unit elements of the initial contract data to be recorded on a housing instrument data blockchain;

organizing and modifying, through a processing unit of the contract engine, the data to be recorded into a suitable format; and

writing through a transmitting unit of the contract engine the necessary data elements on a housing instrument data blockchain.

8. The method of Claim 1, further comprising:

receiving, on the website or other input device controlled by a managing entity, a request from the homeowner to alter at least one term in a housing finance arrangement specifying at least one option for a new term; and

transmitting, through a transmitting unit of a server controlled by the managing entity, the request to a receiving unit of a contract engine operating through a processing unit controlled by the managing entity.

9. The method of Claim 1, further comprising:

in a direct arrangement, extracting, from the housing instrument data blockchain through a receiving unit of the contract engine, necessary contract provisions governing the requested change in terms for each option along with other relevant data;

determining, through a processing unit of the contract engine, if the requested change in terms for each option is permitted under the housing finance arrangement contract;

when a change of terms is permitted, determining whether any approvals by parties other than the homeowner are required;

when the change in terms under at least one option is otherwise permissible, seeking, through a transmitting unit of the contract engine, any required approvals for each option by alerting at least one relevant party through at least one receiving device of said party of the need to approve or deny approval of each option that requires approval;

after receiving a response or after a deadline for a response lapses, determining, through a processing unit of the contract engine, whether each option proposed by the homeowner is approved or denied;

modifying the website, through at transmitting unit of the contract engine to inform the homeowner of whether each option is authorized or denied and, when at least one option is authorized, requesting the homeowner to confirm acceptance of one of the options or to reject all of them;

via a transmitting unit of the data engine alerting at least the homeowner, who may be offline, through a mobile phone or other receiving device of the authorized or denied options and, when at least one option is authorized, requesting the homeowner to confirm one option or reject them all;

when the homeowner confirms an option, writing, through a transmitting unit of the contract engine, a change in terms along with associated data comprising the accepted option, including at least an effective date and time of the change in terms onto the housing instrument data blockchain;

modifying the website through a processing unit and a transmitting unit of the contract engine to confirm that the change is in effect, to display the effective time and date of the change, and to display the new housing finance arrangement terms; and

through a transmitting unit of the contract engine alerting at least a homeowner and an investor, who may be offline, that the change is in effect along with the effective time and date of the change through a mobile phone or other receiving device;

**10.** The method of Claim 1, further comprising:

in an arrangement that is not a direct arrangement, extracting from the housing instrument data blockchain, through a receiving unit of the third-party data engine, necessary contract provisions governing a requested change in terms along with other relevant data including, at least, data to generate offers to the homeowner with respect to each option, the offers containing changes in terms of the housing finance arrangement other than the terms that are the subject of the request;

computing, through a processing unit of the contract engine, at least one offer for each change in terms option specified by the homeowner;

modifying the website through at transmitting unit of the contract engine to inform the homeowner of the offers;

requesting the homeowner to confirm acceptance of one of the offers or to confirm rejection of all of the offers;

through a transmitting unit of the contract engine alerting at least the homeowner, who may be offline, through a mobile phone or other receiving device of the offers and the need to accept one offer or to turn all of the offers down;

creating, through a processing unit of the contract engine, an offer data ensemble including at least the content of the offers and the values of the governing data parameters at the time of the offers, values that govern the offer terms;

writing, through a transmitting unit of the contract engine, the offer data ensemble onto the housing instrument data blockchain;

when the homeowner accepts an offer, extracting, through a receiving unit of the contract engine, the offer data ensemble from the housing instrument data blockchain;

computing, through a processing unit of the contract engine using the offer ensemble data, the adjustments between at least a homeowner, the investor, and a residual balancing position holder required to close out the existing housing finance arrangement and replace it with a new housing finance arrangement embodying the terms specified in the accepted offer;

transmitting through a transmitting unit of the contract engine, a message informing the relevant parties of required steps;

receiving, through a receiving unit of the contract engine, verification that the required steps, including any required payments between parties, have been completed;

compiling, through a processing unit of the contract engine, a transition data package including at least the adjustments made to close the existing housing finance arrangement, the terms of the new housing finance arrangement along with the starting residual account positions of the parties, and the date and time the new arrangement goes into effect;

writing, through a transmitting unit of the contract engine, the transition data onto the housing instrument data blockchain to effect a shift to the new housing finance arrangement;

creating, through a processing unit of the contract engine, separate displayable versions of the transition data appropriate for each relevant party;

modifying the website through a processing unit and a transmitting unit of the contract engine to display the transition data in separate versions on separate portions of the website to each separate party, as well as to display in commonly accessible areas of the website the new arrangement; and

through a transmitting unit of the contract engine, alerting each of the relevant parties, who may be offline, of the transition data relevant to that party as well as of the common data describing the new housing finance arrangement.

**11.** The method of Claim 1, further comprising:

receiving, on the website or other input device controlled by a managing entity, a request from a homeowner to sell a residual account position to at least one investor or to buy a residual account position from at least one investor; and

transmitting, through a transmitting unit of a server controlled by the managing entity, the sell or buy request to a receiving unit of a contract engine operating through a processing unit controlled by the managing entity.

**12.** The method of Claim 1, further comprising:

for a direct arrangement, extracting from the housing instrument data blockchain through a receiving unit of the contract engine, necessary contract provisions governing a requested sale or purchase along with other relevant data including, at least, data required to determine the terms of the sale or purchase;

determining, through a processing unit of the contract engine, if the requested sale or purchase is permitted under the housing finance arrangement contract;

when the requested sale or purchase is permitted under the housing finance arrangement contract determining whether approval by the investors on the other side of the transaction is required;

determining, through a processing unit of the contract engine, applicable terms of the purchase or sale;

when the sale or purchase is otherwise permissible seeking, through a transmitting unit of the contract engine, investor approvals, as required, based on the computed terms by alerting the investors through at least one receiving device of each said investor of the terms and the need to approve or deny approval;

after receiving a response or after a deadline for a response lapses, determining, through a processing unit of the contract engine, whether the sale or purchase on the computed terms is authorized or denied;

modifying the website, through at transmitting unit of the contract engine to inform the homeowner of authorization or denial;

for authorization, requesting the homeowner to confirm acceptance or rejection on the basis of the computed terms;

through a transmitting unit of the contract engine, alerting the homeowner, who may be offline, through a mobile phone or other receiving device of the authorization or denial;

for authorization, requesting the homeowner to confirm acceptance or rejection of the transaction on the basis of the computed terms;

when the homeowner confirms the transaction, transmitting, through a transmitting unit of the contract engine, a message informing the relevant party or parties of required steps;

receiving, through a receiving unit of the contract engine, verification that the required steps, including any required payments between the parties, have been completed;

compiling, through a processing unit of the contract engine, a transaction data package including at least the confirmation of the transaction, the terms of the transaction, the date and time the transaction was effective, and the new residual account positions of the parties as of that date and time;

writing, through a transmitting unit of the contract engine, after formatting through a processing unit of the contract engine, the transaction data onto the housing instrument data blockchain;

modifying the website, through a processing unit and a transmitting unit of the contract engine to display the relevant portions of the transaction data; and

through a transmitting unit of the contract engine alerting at least a homeowner and an investor, who may be offline, of the relevant portions of the transaction data through a mobile phone or other receiving device.

**13.** The method of Claim 1, further comprising:

in an arrangement that is not a direct arrangement, extracting from the housing instrument data blockchain, through a receiving unit of the third-party data engine, necessary contract provisions governing a requested sale or purchase along with other relevant data including, at least, data sufficient to generate offers to the homeowner with respect to the proposed sale or purchase, each offer containing changes in the terms of the housing finance arrangement accompanying the proposed sale or purchase;

computing, through a processing unit of the contract engine, at least one offer with respect to the sale or purchase proposed by the homeowner;

determining, through a processing unit of the contract engine, if the requested sale or purchase is permitted under the housing finance arrangement contract;

when the requested sale or purchase is permitted under the housing finance arrangement contract determining whether approval by the investors on the other side of the transaction is required;

determining, through a processing unit of the contract engine, the applicable terms of the purchase or sale and the terms of each offer;

when the sale or purchase is otherwise permissible, seeking, through a transmitting unit, investor approvals with respect to each offer, as required, based on the computed terms by alerting the investors through at least one receiving device of each said investor of the offers, and the need to approve or deny approval each offer;

after receiving a response or after the deadline for a response lapses, determining, through a processing unit of the contract engine, whether each offer is authorized or denied;

modifying the website through a transmitting unit of the contract engine to inform the homeowner of authorization or denial of each offer;

for authorization of at least one offer, requesting the homeowner to confirm acceptance of one offer along with the sale or purchase terms or to reject them all;

through a transmitting unit of the contract engine, alerting the homeowner, who may be offline, through a mobile phone or other receiving device of the authorization or denial of each offer;

for authorization of at least one offer, requesting the homeowner to confirm acceptance of one offer along with the sale or purchase terms or to reject them all;

creating, through a processing unit of the contract engine, an offer data ensemble including at least the content of the offers, the sale or purchase terms, and the values of the governing data parameters at the time of the offers, values that govern the offer terms;

writing, through a transmitting unit of the contract engine, the offer data ensemble onto the housing instrument data blockchain;

when the homeowner accepts an offer along with the sale or purchase terms, extracting, through a receiving unit of the contract engine, the offer data ensemble from the housing instrument data blockchain;

computing, through a processing unit of the contract engine using the offer ensemble data, adjustments between at least a homeowner, an investor, and a residual balancing position holder required to close out the existing housing finance arrangement and replace it with a new housing finance arrangement embodying the terms specified in the accepted offer;

transmitting, through a transmitting unit of the contract engine, a message informing the relevant parties of required steps;

receiving, through a receiving unit of the contract engine, verification that the required steps, including any required payments between parties, have been completed;

compiling, through a processing unit of the contract engine, a transition data package including at least the adjustments made to close the existing housing finance arrangement, the terms of the sale or purchase, the terms of the new housing finance arrangement along with the starting residual account positions of the parties, and the date and time the new arrangement went into effect;

writing, through a transmitting unit of the contract engine, the transition data onto the housing instrument data blockchain,

effecting a shift to the new housing finance arrangement;

creating, through a processing unit of the contract engine, separate displayable versions of the transition data appropriate for each relevant party;

modifying the website through a processing unit and a transmitting unit of the contract engine to display the transition data in separate versions on separate portions of the website to each separate party, as well as to display in commonly accessible areas of the website the new arrangement; and

through a transmitting unit of the contract engine, alerting each of the relevant parties, who may be offline, of the transition data relevant to that party as well as the common data describing the new housing finance arrangement.

**14.** The method of Claim 1, wherein said blockchain system comprises:

contractual information specifying at least one housing finance arrangement between at least one homeowner and at least one investor financing a particular home;

a time series of economic parameters relevant to dynamic management of at least one housing finance arrangement;

a record of current and past ownership of the financing debt or equity;

a record of transactions including at least payments by the homeowner to investors;

a record of any adjustments to or changes in the housing finance arrangement;

specification of at least one balancing mechanism for tracking at least the homeowner's and investor's net contributions, considering the housing finance arrangement between them as a joint venture and to adjust at least one residual account to reflect the net contributions of the parties;

a record of data and calculations of a balancing engine operating continuously based on one or more balancing mechanisms along with resulting adjustments of at least one residual account;

an access protocol defining various levels of access to data in the blockchain system, as well as levels of permission to write new data onto the blockchain system; and

data describing homes that are the subject of the housing finance arrangements.

**15.** A system for facilitating transaction data in a transaction, comprising

a computing device of a homeowner, having a user interface, for facilitating the transaction data, with the homeowner being a first party to the transaction;

a computing device of an investor, having a user interface, for facilitating the transaction data, with the investor being a second party to the transaction; and

a managing entity device having a computer interface, the managing entity managing:

at least one balancing engine device for implementing adjustments under a balancing mechanism based on the transaction data, wherein the balancing mechanism is configured to enable the balancing engine to adjust a residual account, for each of multiple time periods, based on the homeowner's net contribution and the home value during each time period, in accordance with a purchase parity accumulation algorithm; at least one data engine device for creating, gathering, updating, processing, storing, and communicating at least one time series based on the transaction data; and at least one contract engine device for initiating, implementing, enforcing, and updating a housing finance arrangement between at least the homeowner and the investor based on the transaction data;

a plurality of third party devices having associated computer interfaces providing relevant third party finance data based on the transaction data; a central trading engine database for allowing the computing device of the homeowner or the computing device of the investor to transmit a buy offer message based on the transaction data; a distributed blockchain system containing at least a housing instrument data blockchain for securely storing confidential data that is used in facilitating the transaction data; and an application layer that receives, processes, and transmits data between the computing device of the homeowner, the computing device of an investor, the central trading engine database, the plurality of third party devices, the distributed blockchain system, and the managing entity device; in response to the transaction data, said application layer modifying a website accessible to the homeowner and investor; and said application layer alerting the homeowner and investor of the transaction through a mobile device, and wherein the balancing engine is configured to transmit, through a transmitting unit of the balancing engine, a query of the blockchain system for data relevant to a balancing calculation, wherein the data resides in the housing instrument data blockchain and includes a time series of all the contribution elements including at least homeowner payments to the investor and wherein a time series of home values is written to the housing instrument data blockchain for use by the balancing engine.

**Patentansprüche**

1. Computerimplementiertes Verfahren zur dynamischen Echtzeit-Verwaltung von Immobilien-Finanzen, -Dienstleistungen und -Berichterstattung, das folgende Schritte aufweist:

Pflegen, durch einen Prozessor, auf einer Website, die von einer Verwaltungseinheit gesteuert wird und für mindestens einen Heimbesitzer, einen beliebigen Inhaber einer Restbilanzierungsposition und einen Anleger zugänglich ist, einer Anzeige der Konditionen, Parameterwerte und bevorstehender erforderlicher Aktionen unter einer Wohnbaufinanzierungsvereinbarung; Speichern, durch den Prozessor, von vertraulichen Daten in zumindest einem Blockchain-System, das zumindest eine Wohnbauinstrumentendaten-Blockchain enthält; Pflegen, durch den Prozessor, auf zumindest einem Server, der von einer Verwaltungseinheit gesteuert wird, einer Bilanzierungsmaschine, die in zumindest einer Verarbeitungseinheit, zumindest einer Empfangseinheit und zumindest einer Sendeeinheit ausgeführt ist, zum Zwecke eines Implementierens von Anpassungen unter einem Bilanzierungsmechanismus; periodisches Empfangen, durch eine Empfangseinheit der Bilanzierungsmaschine, einer Nachricht von der Verwaltungseinheit oder einer künstlichen Intelligenzeinheit, die sie repräsentiert, Initiieren eines Bilanzierungseintrags in die Wohnbauinstrumentendaten-Blockchain; Senden, durch eine Sendeeinheit der Bilanzierungsmaschine, einer Abfrage des Blockchain-Systems nach Daten, die für eine Bilanzierungsberechnung relevant sind, wobei sich die Daten in der Wohnbauinstrumentendaten-Blockchain befinden und eine Zeitreihe aller Beitragselemente einschließlich zumindest Heimbesitzerzahlungen an den Anleger enthalten, wobei der Bilanzierungsmechanismus es der Bilanzierungsmaschine ermöglicht, ein Restkonto für jeden von mehreren Zeiträumen basierend auf dem Nettobeitrag des Heimbesitzers und dem Heimwert während jedes Zeitraums gemäß einem Kaufparitätsakkumulationsalgorithmus anzupassen, und wobei eine Zeitreihe von Heimwerten in die Wohnbauinstrumentendaten-Blockchain zur Verwendung durch die Bilanzierungsmaschine geschrieben wird; Empfangen der Daten durch eine Empfangseinheit der Bilanzierungsmaschine; wenn in einer direkten Anordnung, Bestimmen, durch eine Verarbeitungseinheit der Bilanzierungsmaschine, eines aktualisierten Saldos in zumindest einem Restkonto;

Schreiben, durch eine Sendeeinheit der Bilanzierungsmaschine, des aktualisierten Restkontosaldos zusammen mit Einzelheiten der Berechnung auf die Wohnbauinstrumentendaten-Blockchain;

Modifizieren der Website durch eine Verarbeitungseinheit und eine Sendeeinheit der Bilanzierungsmaschine, um den aktualisierten Restkontosaldo anzuzeigen; und

durch eine Sendeeinheit der Bilanzierungsmaschine, Alarmieren zumindest eines Heimbesitzers und eines Anlegers, die offline sein können, über den aktualisierten Restkontosaldo durch ein Mobiltelefon oder eine andere Empfangsvorrichtung; und

wenn in einer Anordnung, die keine direkte Anordnung ist, Bestimmen, durch eine Verarbeitungseinheit der Bilanzierungsmaschine, eines aktualisierten ungeplanten Ergebnisses und zugehöriger Größen, die das ungeplante Ergebnis als eine Eingabe verwenden;

Schreiben, durch eine Sendeeinheit der Bilanzierungsmaschine, des aktualisierten ungeplanten Ergebnisses und zugehöriger Größen zusammen mit Einzelheiten der Berechnung auf die Wohnbauinstrumentendaten-Blockchain;

Modifizieren der Website durch eine Verarbeitungseinheit und eine Sendeeinheit der Bilanzierungsmaschine, um das aktualisierte ungeplante Ergebnis und zugehörige Größen anzuzeigen; und

durch eine Sendeeinheit der Bilanzierungsmaschine, Alarmieren zumindest eines Heimbesitzers, eines Anlegers und eines Inhabers einer Restbilanzierungsposition, die offline sein können, über das aktualisierte ungeplante Ergebnis und zugehörige Größen durch ein Mobiltelefon oder eine andere Empfangsvorrichtung.

2. Verfahren gemäß Anspruch 1, das ferner folgenden Schritt aufweist:
Pflegen, auf zumindest einem Verarbeitungsserver, der von einer Verwaltungseinheit gesteuert wird, zumindest einer Datenmaschine, die in zumindest einer Verarbeitungseinheit, zumindest einer Empfangseinheit, zumindest einer Sendeeinheit und zumindest einer Datenbank ausgeführt ist, wobei der Verarbeitungsserver zumindest eine Zeitreihe von zumindest einem Datenparameter erzeugt, sammelt, aktualisiert, verarbeitet, speichert und kommuniziert.

3. Verfahren gemäß Anspruch 1, das ferner folgende Schritte aufweist:

Empfangen, auf einer Empfangseinheit von zumindest einer Datenmaschine, von Drittparteidaten, die Eingabedaten zum Berechnen zumindest eines Datenparameters aufweisen, der von der Datenmaschine erzeugt wird;

Formatieren, durch eine Verarbeitungseinheit der Datenmaschine, der hinzugefügten Daten und dann Modifizieren, durch die gleiche Verarbeitungseinheit der Datenmaschine, einer Datenbank, um die hinzugefügten Daten aufzunehmen;

Berechnen, durch eine Verarbeitungseinheit der Datenmaschine, zumindest einer Nicht-Drittparteiversion des Datenparameters;

Berechnen, durch eine Verarbeitungseinheit der Datenmaschine, eines einzelnen operativen Werts des Datenparameters unter Verwendung der Drittpartei- und Nicht-Drittpartei-Bewertungen;

Schreiben, durch eine Sendeeinheit der Datenmaschine, des aktualisierten operativen Werts des Datenparameters zusammen mit einer Aufzeichnung einer Berechnung, die zumindest einen Zeit- und Datumsstempel der Berechnung, die Drittpartei- und Nicht-Drittparteiwerte und die Methodik, die zum Berechnen des operativen Werts verwendet wird, enthält, auf eine Wohnbauinstrumentendaten-Blockchain; und

Modifizieren der Website durch eine Verarbeitungseinheit und eine Sendeeinheit der Datenmaschine, um den aktualisierten operativen Wert des Datenparameters anzuzeigen, und dann, durch eine Sendeeinheit der Datenmaschine, Alarmieren zumindest eines Heimbesitzers und eines Anlegers, die offline sein können, über den aktualisierten operativen Wert durch ein Mobiltelefon oder eine andere Empfangsvorrichtung, wenn eine Partei Aktualisierungen des operativen Werts allgemein angefordert hat oder wenn bestimmte Werte des Datenparameters realisiert werden.

4. Verfahren gemäß Anspruch 1, das ferner folgenden Schritt aufweist:
Pflegen, auf zumindest einem Verarbeitungsserver, der von einer Verwaltungseinheit gesteuert wird, zumindest einer Drittpartei-Datenmaschine, die in zumindest einer Verarbeitungseinheit, zumindest einer Empfangseinheit, zumindest einer Sendeeinheit und zumindest einer Datenbank ausgeführt ist, zum Zwecke eines Erzeugens, Sammelns, Aktualisierens, Verarbeitens, Speicherns und Kommunizierens zumindest einer Zeitreihe von zumindest einem Datenparameter, der aus zumindest einer Drittpartei-Finanzierungsvereinbarung hervorgeht.

**5.** Verfahren gemäß Anspruch 1, das ferner folgende Schritte aufweist:

Empfangen, auf einer Empfangseinheit von zumindest einer Drittpartei-Datenmaschine, die auf einem Verarbeitungsserver arbeitet, der von der Verwaltungseinheit gesteuert wird, von Daten in Bezug auf zumindest eine Drittpartei-Finanzierungsvereinbarung;
Identifizieren, durch eine Verarbeitungseinheit der Drittpartei-Datenmaschine, von Elementen von Daten, die auf einer Wohnbauinstrumentendaten-Blockchain aufgezeichnet werden sollen;
Modifizieren der Daten, die aufgezeichnet werden sollen, in ein geeignetes Format;
Schreiben, durch eine Sendeeinheit der Drittpartei-Datenmaschine, von Datenelementen zusammen mit einer Aufzeichnung zugehöriger Berechnungen auf eine Wohnbauinstrumentendaten-Blockchain;
Extrahieren, aus der Wohnbauinstrumentendaten-Blockchain, durch eine Empfangseinheit der Drittpartei-Datenmaschine, von Daten, um den aktuellen Status und die relevante Historie der Drittpartei-Finanzierungsvereinbarung zu beschreiben;
Organisieren, durch eine Verarbeitungseinheit der Drittpartei-Datenmaschine, der Daten zur Website-Anzeige;
Modifizieren der Website durch eine Verarbeitungseinheit und eine Sendeeinheit der Drittpartei-Datenmaschine, um die aktualisierten Daten für die Drittpartei-Finanzierungsvereinbarung anzuzeigen; und
durch eine Sendeeinheit der Drittpartei-Datenmaschine, Alarmieren zumindest eines Heimbesitzers und eines Anlegers, die offline sein können, über die aktualisierten Daten durch ein Mobiltelefon oder eine andere Empfangsvorrichtung, wenn eine Partei derartige aktualisierte Daten allgemein angefordert hat oder wenn bestimmte Werte der bestimmten Datenparameter realisiert werden.

**6.** Verfahren gemäß Anspruch 1, das ferner folgenden Schritt aufweist:
Pflegen, auf zumindest einem Verarbeitungsserver, der von einer Verwaltungseinheit gesteuert wird, einer Vertragsmaschine, die in zumindest einer Verarbeitungseinheit, zumindest einer Empfangseinheit und zumindest einer Sendeeinheit ausgeführt ist, zum Initiieren, Implementieren, Durchsetzen und Aktualisieren der Wohnbaufinanzierungsvereinbarung zwischen zumindest einem Heimbesitzer und einem Anleger.

**7.** Verfahren gemäß Anspruch 1, das ferner folgende Schritte aufweist:

Empfangen, durch eine Empfangseinheit einer Vertragsmaschine, die auf einem Verarbeitungsserver arbeitet, der von einer Verwaltungseinheit gesteuert wird, von Anfangsvertragsdaten, die eine Wohnbaufinanzierungsvereinbarung beschreiben;
Identifizieren, durch eine Verarbeitungseinheit, von Elementen der Anfangsvertragsdaten, die auf einer Wohnbauinstrumentendaten-Blockchain aufgezeichnet werden sollen;
Organisieren und Modifizieren, durch eine Verarbeitungseinheit der Vertragsmaschine, der Daten, die aufgezeichnet werden sollen, in ein geeignetes Format; und
Schreiben, durch eine Sendeeinheit der Vertragsmaschine, der notwendigen Datenelemente auf eine Wohnbauinstrumentendaten-Blockchain.

**8.** Verfahren gemäß Anspruch 1, das ferner folgende Schritte aufweist:

Empfangen, auf der Website oder einer anderen Eingabevorrichtung, die von einer Verwaltungseinheit gesteuert wird, einer Anforderung von dem Heimbesitzer, zumindest eine Kondition in einer Wohnbaufinanzierungsvereinbarung zu ändern, die zumindest eine Option für eine neue Kondition spezifiziert; und
Senden, durch eine Sendeeinheit eines Servers, der von der Verwaltungseinheit gesteuert wird, der Anforderung an eine Empfangseinheit einer Vertragsmaschine, die durch eine Verarbeitungseinheit arbeitet, die von der Verwaltungseinheit gesteuert wird.

**9.** Verfahren gemäß Anspruch 1, das ferner folgende Schritte aufweist:

in einer direkten Anordnung, Extrahieren, aus der Wohnbauinstrumentendaten-Blockchain durch eine Empfangseinheit der Vertragsmaschine, von notwendigen Vertragsbestimmungen, die die angeforderte Änderung der Konditionen für jede Option regeln, zusammen mit anderen relevanten Daten;
Bestimmen, durch eine Verarbeitungseinheit der Vertragsmaschine, ob die angeforderte Änderung der Konditionen für jede Option unter dem Wohnbaufinanzierungsvereinbarungsvertrag erlaubt ist;
wenn eine Änderung der Konditionen erlaubt ist, Bestimmen, ob Genehmigungen durch andere Parteien als den Heimbesitzer erforderlich sind;

wenn die Änderung der Konditionen unter zumindest einer Option ansonsten zulässig ist, Ersuchen, durch eine Sendeeinheit der Vertragsmaschine, von erforderlichen Genehmigungen für jede Option durch Alarmieren zumindest einer relevanten Partei durch zumindest eine Empfangsvorrichtung der Partei über die Notwendigkeit, eine Genehmigung für jede Option, die eine Genehmigung erfordert, zu genehmigen oder abzulehnen;

nach dem Empfangen einer Antwort oder nachdem eine Frist für eine Antwort abgelaufen ist, Bestimmen, durch eine Verarbeitungseinheit der Vertragsmaschine, ob jede Option, die von dem Heimbesitzer vorgeschlagen wird, genehmigt oder abgelehnt wird;

Modifizieren der Website, durch eine Sendeeinheit der Vertragsmaschine, um den Heimbesitzer darüber zu informieren, ob jede Option autorisiert oder abgelehnt wird, und, wenn zumindest eine Option autorisiert ist, Auffordern des Heimbesitzers, die Annahme einer der Optionen zu bestätigen oder alle von ihnen abzulehnen;

über eine Sendeeinheit der Datenmaschine, Alarmieren zumindest des Heimbesitzers, der offline sein kann, durch ein Mobiltelefon oder eine andere Empfangsvorrichtung über die autorisierten oder abgelehnten Optionen und, wenn zumindest eine Option autorisiert ist, Auffordern des Heimbesitzers, eine Option zu bestätigen oder alle von ihnen abzulehnen;

wenn der Heimbesitzer eine Option bestätigt, Schreiben, durch eine Sendeeinheit der Vertragsmaschine, einer Änderung der Konditionen zusammen mit zugehörigen Daten, die die angenommene Option umfassen, die zumindest ein effektives Datum und eine effektive Zeit der Änderung der Konditionen enthält, auf die Wohnbauinstrumentendaten-Blockchain;

Modifizieren der Website durch eine Verarbeitungseinheit und eine Sendeeinheit der Vertragsmaschine, um zu bestätigen, dass die Änderung in Kraft ist, um die effektive Zeit und das effektive Datum der Änderung anzuzeigen und die neuen Wohnbaufinanzierungsvereinbarungskonditionen anzuzeigen; und

durch eine Sendeeinheit der Vertragsmaschine, Alarmieren zumindest eines Heimbesitzers und eines Anlegers, die offline sein können, dass die Änderung in Kraft ist, zusammen mit der effektiven Zeit und dem effektiven Datum der Änderung durch ein Mobiltelefon oder eine andere Empfangsvorrichtung.

10. Verfahren gemäß Anspruch 1, das ferner folgende Schritte aufweist:

in einer Anordnung, die keine direkte Anordnung ist, Extrahieren, aus der Wohnbauinstrumentendaten-Blockchain, durch eine Empfangseinheit der Drittpartei-Datenmaschine, von notwendigen Vertragsbestimmungen, die eine angeforderte Änderung der Konditionen regeln, zusammen mit anderen relevanten Daten, die zumindest Daten zum Erzeugen von Angeboten an den Heimbesitzer in Bezug auf jede Option enthalten, wobei die Angebote Änderungen der Konditionen der Wohnbaufinanzierungsvereinbarung enthalten, die sich von den Konditionen unterscheiden, die Gegenstand der Anforderung sind;

Berechnen, durch eine Verarbeitungseinheit der Vertragsmaschine, zumindest eines Angebots für jede von dem Heimbesitzer spezifizierte Option der Änderung der Konditionen;

Modifizieren der Website durch eine Sendeeinheit der Vertragsmaschine, um den Heimbesitzer über die Angebote zu informieren;

Auffordern des Heimbesitzers, die Annahme eines der Angebote zu bestätigen oder die Ablehnung aller der Angebote zu bestätigen;

durch eine Sendeeinheit der Vertragsmaschine, Alarmieren zumindest des Heimbesitzers, der offline sein kann, durch ein Mobiltelefon oder eine andere Empfangsvorrichtung über die Angebote und die Notwendigkeit, ein Angebot anzunehmen oder alle der Angebote abzulehnen;

Erzeugen, durch eine Verarbeitungseinheit der Vertragsmaschine, eines Angebotsdatenensembles, das zumindest den Inhalt der Angebote und die Werte der regelnden Datenparameter zum Zeitpunkt der Angebote, Werte, die die Angebotskonditionen regeln, enthält;

Schreiben, durch eine Sendeeinheit der Vertragsmaschine, des Angebotsdatenensembles auf die Wohnbauinstrumentendaten-Blockchain;

wenn der Heimbesitzer ein Angebot annimmt, Extrahieren, durch eine Empfangseinheit der Vertragsmaschine, des Angebotsdatenensembles aus der Wohnbauinstrumentendaten-Blockchain;

Berechnen, durch eine Verarbeitungseinheit der Vertragsmaschine unter Verwendung der Angebotsensembledaten, der Anpassungen zwischen zumindest einem Heimbesitzer, dem Anleger und einem Inhaber einer Restbilanzierungsposition, die erforderlich sind, um die bestehende Wohnbaufinanzierungsvereinbarung zu schließen und sie durch eine neue Wohnbaufinanzierungsvereinbarung zu ersetzen, die die Konditionen, die in dem angenommenen Angebot spezifiziert sind, beinhaltet;

Senden, durch eine Sendeeinheit der Vertragsmaschine, einer Nachricht, die die relevanten Parteien über erforderliche Schritte informiert;

Empfangen, durch eine Empfangseinheit der Vertragsmaschine, einer Verifizierung, dass die erforderlichen Schritte, einschließlich erforderlicher Zahlungen zwischen Parteien, abgeschlossen wurden;

Zusammenstellen, durch eine Verarbeitungseinheit der Vertragsmaschine, eines Übergangsdatenpakets, das zumindest die Anpassungen, die vorgenommen wurden, um die bestehende Wohnbaufinanzierungsvereinbarung zu schließen, die Konditionen der neuen Wohnbaufinanzierungsvereinbarung zusammen mit den Anfangsrestkontopositionen der Parteien und das Datum und die Zeit, zu der die neue Anordnung in Kraft tritt, enthält;

Schreiben, durch eine Sendeeinheit der Vertragsmaschine, der Übergangsdaten auf die Wohnbauinstrumentendaten-Blockchain, um einen Wechsel zu der neuen Wohnbaufinanzierungsvereinbarung zu bewirken;

Erzeugen, durch eine Verarbeitungseinheit der Vertragsmaschine, separater anzeigbarer Versionen der Übergangsdaten, die für jede relevante Partei geeignet sind;

Modifizieren der Website durch eine Verarbeitungseinheit und eine Sendeeinheit der Vertragsmaschine, um die Übergangsdaten in separaten Versionen auf separaten Abschnitten der Website für jede separate Partei anzuzeigen, sowie um in allgemein zugänglichen Bereichen der Website die neue Anordnung anzuzeigen; und durch eine Sendeeinheit der Vertragsmaschine, Benachrichtigen jeder der relevanten Parteien, die offline sein können, über die Übergangsdaten, die für diese Partei relevant sind, sowie über die allgemeinen Daten, die die neue Wohnbaufinanzierungsvereinbarung beschreiben.

11. Verfahren gemäß Anspruch 1, das ferner folgende Schritte aufweist:

Empfangen, auf der Website oder einer anderen Eingabevorrichtung, die von einer Verwaltungseinheit gesteuert wird, einer Anforderung von einem Heimbesitzer, eine Restkontoposition an mindestens einen Anleger zu verkaufen oder eine Restkontoposition von mindestens einem Anleger zu kaufen; und

Senden, durch eine Sendeeinheit eines Servers, der von der Verwaltungseinheit gesteuert wird, der Verkaufs- oder Kaufanforderung an eine Empfangseinheit einer Vertragsmaschine, die durch eine Verarbeitungseinheit arbeitet, die von der Verwaltungseinheit gesteuert wird.

12. Verfahren gemäß Anspruch 1, das ferner folgende Schritte aufweist:

für eine direkte Anordnung, Extrahieren, aus der Wohnbauinstrumentendaten-Blockchain durch eine Empfangseinheit der Vertragsmaschine, von notwendigen Vertragsbestimmungen, die einen angeforderten Verkauf oder Kauf regeln, zusammen mit anderen relevanten Daten, die zumindest Daten enthalten, die erforderlich sind, um die Konditionen des Verkaufs oder Kaufs zu bestimmen;

Bestimmen, durch eine Verarbeitungseinheit der Vertragsmaschine, ob der angeforderte Verkauf oder Kauf unter dem Wohnbaufinanzierungsvereinbarungsvertrag erlaubt ist;

wenn der angeforderte Verkauf oder Kauf unter dem Wohnbaufinanzierungsvereinbarungsvertrag erlaubt ist, Bestimmen, ob eine Genehmigung durch die Anleger auf der anderen Seite der Transaktion erforderlich ist;

Bestimmen, durch eine Verarbeitungseinheit der Vertragsmaschine, von zutreffenden Konditionen des Kaufs oder Verkaufs;

wenn der Verkauf oder Kauf ansonsten zulässig ist, Ersuchen, durch eine Sendeeinheit der Vertragsmaschine, von Anlegergenehmigungen, wie erforderlich, basierend auf den berechneten Konditionen durch Alarmieren der Anleger durch zumindest eine Empfangsvorrichtung jedes Anlegers über die Konditionen und die Notwendigkeit, eine Genehmigung zu genehmigen oder abzulehnen;

nach dem Empfangen einer Antwort oder nachdem eine Frist für eine Antwort abgelaufen ist, Bestimmen, durch eine Verarbeitungseinheit der Vertragsmaschine, ob der Verkauf oder Kauf unter den berechneten Konditionen autorisiert oder abgelehnt wird;

Modifizieren der Website, durch eine Sendeeinheit der Vertragsmaschine, um den Heimbesitzer über eine Autorisierung oder Ablehnung zu informieren;

zur Autorisierung, Auffordern des Heimbesitzers, die Annahme oder Ablehnung auf der Basis der berechneten Konditionen zu bestätigen;

durch eine Sendeeinheit der Vertragsmaschine, Alarmieren des Heimbesitzers, der offline sein kann, durch ein Mobiltelefon oder eine andere Empfangsvorrichtung über die Autorisierung oder Ablehnung;

zur Autorisierung, Auffordern des Heimbesitzers, die Annahme oder Ablehnung der Transaktion auf der Basis der berechneten Konditionen zu bestätigen;

wenn der Heimbesitzer die Transaktion bestätigt, Senden, durch eine Sendeeinheit der Vertragsmaschine, einer Nachricht, die die relevante Partei oder Parteien über erforderliche Schritte informiert;

Empfangen, durch eine Empfangseinheit der Vertragsmaschine, einer Verifizierung, dass die erforderlichen Schritte, einschließlich erforderlicher Zahlungen zwischen den Parteien, abgeschlossen wurden;

Zusammenstellen, durch eine Verarbeitungseinheit der Vertragsmaschine, eines Transaktionsdatenpakets, das zumindest die Bestätigung der Transaktion, die Konditionen der Transaktion, das Datum und die Zeit, zu der die Transaktion wirksam war, und die neuen Restkontopositionen der Parteien ab diesem Datum und dieser Zeit enthält;

Schreiben, durch eine Sendeeinheit der Vertragsmaschine, nach dem Formatieren durch eine Verarbeitungseinheit der Vertragsmaschine, der Transaktionsdaten auf die Wohnbauinstrumentendaten-Blockchain;

Modifizieren der Website durch eine Verarbeitungseinheit und eine Sendeeinheit der Vertragsmaschine, um die relevanten Abschnitte der Transaktionsdaten anzuzeigen; und

durch eine Sendeeinheit der Vertragsmaschine, Alarmieren zumindest eines Heimbesitzers und eines Anlegers, die offline sein können, über die relevanten Abschnitte der Transaktionsdaten durch ein Mobiltelefon oder eine andere Empfangsvorrichtung.

**13.** Verfahren gemäß Anspruch 1, das ferner folgende Schritte aufweist:

in einer Anordnung, die keine direkte Anordnung ist, Extrahieren, aus der Wohnbauinstrumentendaten-Blockchain, durch eine Empfangseinheit der Drittpartei-Datenmaschine, von notwendigen Vertragsbestimmungen, die einen angeforderten Verkauf oder Kauf regeln, zusammen mit anderen relevanten Daten, die zumindest Daten enthalten, die ausreichend sind, um Angebote an den Heimbesitzer in Bezug auf den vorgeschlagenen Verkauf oder Kauf zu erzeugen, wobei jedes Angebot Änderungen der Konditionen der Wohnbaufinanzierungsvereinbarung enthält, die den vorgeschlagenen Verkauf oder Kauf begleiten;

Berechnen, durch eine Verarbeitungseinheit der Vertragsmaschine, zumindest eines Angebots in Bezug auf den Verkauf oder Kauf, der von dem Heimbesitzer vorgeschlagen wird;

Bestimmen, durch eine Verarbeitungseinheit der Vertragsmaschine, ob der angeforderte Verkauf oder Kauf unter dem Wohnbaufinanzierungsvereinbarungsvertrag erlaubt ist;

wenn der angeforderte Verkauf oder Kauf unter dem Wohnbaufinanzierungsvereinbarungsvertrag erlaubt ist, Bestimmen, ob eine Genehmigung durch die Anleger auf der anderen Seite der Transaktion erforderlich ist;

Bestimmen, durch eine Verarbeitungseinheit der Vertragsmaschine, der zutreffenden Konditionen des Kaufs oder Verkaufs und der Konditionen jedes Angebots;

wenn der Verkauf oder Kauf ansonsten zulässig ist, Ersuchen, durch eine Sendeeinheit, von Anlergergenehmigungen in Bezug auf jedes Angebot, wie erforderlich, basierend auf den berechneten Konditionen durch Alarmieren der Anleger durch zumindest eine Empfangsvorrichtung jedes Anlegers über die Angebote und die Notwendigkeit, eine Genehmigung für jedes Angebot zu genehmigen oder abzulehnen;

nach dem Empfangen einer Antwort oder nachdem die Frist für eine Antwort abgelaufen ist, Bestimmen, durch eine Verarbeitungseinheit der Vertragsmaschine, ob jedes Angebot autorisiert oder abgelehnt wird;

Modifizieren der Website durch eine Sendeeinheit der Vertragsmaschine, um den Heimbesitzer über eine Autorisierung oder Ablehnung jedes Angebots zu informieren;

zur Autorisierung von zumindest einem Angebot, Auffordern des Heimbesitzers, die Annahme eines Angebots zusammen mit den Verkaufs- oder Kaufkonditionen zu bestätigen oder alle von ihnen abzulehnen;

durch eine Sendeeinheit der Vertragsmaschine, Alarmieren des Heimbesitzers, der offline sein kann, durch ein Mobiltelefon oder eine andere Empfangsvorrichtung über die Autorisierung oder Ablehnung jedes Angebots;

zur Autorisierung von zumindest einem Angebot, Auffordern des Heimbesitzers, die Annahme eines Angebots zusammen mit den Verkaufs- oder Kaufkonditionen zu bestätigen oder alle von ihnen abzulehnen;

Erzeugen, durch eine Verarbeitungseinheit der Vertragsmaschine, eines Angebotsdatenensembles, das zumindest den Inhalt der Angebote, die Verkaufs- oder Kaufkonditionen und die Werte der regelnden Datenparameter zum Zeitpunkt der Angebote, Werte, die die Angebotskonditionen regeln, enthält;

Schreiben, durch eine Sendeeinheit der Vertragsmaschine, des Angebotsdatenensembles auf die Wohnbauinstrumentendaten-Blockchain;

wenn der Heimbesitzer ein Angebot zusammen mit den Verkaufs- oder Kaufkonditionen annimmt, Extrahieren, durch eine Empfangseinheit der Vertragsmaschine, des Angebotsdatenensembles aus der Wohnbauinstrumentendaten-Blockchain;

Berechnen, durch eine Verarbeitungseinheit der Vertragsmaschine unter Verwendung der Angebotsensembledaten, von Anpassungen zwischen zumindest einem Heimbesitzer, einem Anleger und einem Inhaber einer Restbilanzierungsposition, die erforderlich sind, um die bestehende Wohnbaufinanzierungsvereinbarung zu schließen und sie durch eine neue Wohnbaufinanzierungsvereinbarung zu ersetzen, die die Konditionen, die in dem angenommenen Angebot spezifiziert sind, beinhaltet;

Senden, durch eine Sendeeinheit der Vertragsmaschine, einer Nachricht, die die relevanten Parteien über erforderliche Schritte informiert;

Empfangen, durch eine Empfangseinheit der Vertragsmaschine, einer Verifizierung, dass die erforderlichen Schritte, einschließlich erforderlicher Zahlungen zwischen Parteien, abgeschlossen wurden;

Zusammenstellen, durch eine Verarbeitungseinheit der Vertragsmaschine, eines Übergangsdatenpakets, das zumindest die Anpassungen, die vorgenommen wurden, um die bestehende Wohnbaufinanzierungsvereinbarung zu schließen, die Konditionen des Verkaufs oder Kaufs, die Konditionen der neuen Wohnbaufinanzierungsvereinbarung zusammen mit den Anfangsrestkontopositionen der Parteien und das Datum und die Zeit, zu der die neue Anordnung in Kraft trat, enthält;

Schreiben, durch eine Sendeeinheit der Vertragsmaschine, der Übergangsdaten auf die Wohnbauinstrumentendaten-Blockchain,

Bewirken eines Wechsels zu der neuen Wohnbaufinanzierungsvereinbarung;

Erzeugen, durch eine Verarbeitungseinheit der Vertragsmaschine, separater anzeigbarer Versionen der Übergangsdaten, die für jede relevante Partei geeignet sind;

Modifizieren der Website durch eine Verarbeitungseinheit und eine Sendeeinheit der Vertragsmaschine, um die Übergangsdaten in separaten Versionen auf separaten Abschnitten der Website für jede separate Partei anzuzeigen, sowie um in allgemein zugänglichen Bereichen der Website die neue Anordnung anzuzeigen; und durch eine Sendeeinheit der Vertragsmaschine, Alarmieren jeder der relevanten Parteien, die offline sein können, über die Übergangsdaten, die für diese Partei relevant sind, sowie über die allgemeinen Daten, die die neue Wohnbaufinanzierungsvereinbarung beschreiben.

**14.** Verfahren gemäß Anspruch 1, wobei das Blockchain-System folgende Merkmale aufweist:

Vertragsinformationen, die zumindest eine Wohnbaufinanzierungsvereinbarung zwischen zumindest einem Heimbesitzer und zumindest einem Anleger spezifizieren, der ein bestimmtes Heim finanziert;

eine Zeitreihe von wirtschaftlichen Parametern, die für die dynamische Verwaltung von zumindest einer Wohnbaufinanzierungsvereinbarung relevant sind;

eine Aufzeichnung des aktuellen und früheren Eigentums an der Finanzierungsschuld oder dem Finanzierungskapital;

eine Aufzeichnung von Transaktionen, einschließlich zumindest von Zahlungen durch den Heimbesitzer an Anleger;

eine Aufzeichnung von allen Anpassungen an oder Änderungen in der Wohnbaufinanzierungsvereinbarung;

eine Spezifikation von zumindest einem Bilanzierungsmechanismus zum Verfolgen von zumindest den Nettobeiträgen des Heimbesitzers und des Anlegers, wobei die Wohnbaufinanzierungsvereinbarung zwischen ihnen als ein Gemeinschaftsunternehmen betrachtet wird, und zum Anpassen von zumindest einem Restkonto, um die Nettobeiträge der Parteien widerzuspiegeln;

eine Aufzeichnung von Daten und Berechnungen einer Bilanzierungsmaschine, die kontinuierlich arbeitet, basierend auf einem oder mehreren Bilanzierungsmechanismen zusammen mit resultierenden Anpassungen von zumindest einem Restkonto;

ein Zugriffsprotokoll, das verschiedene Ebenen des Zugriffs auf Daten in dem Blockchain-System definiert, sowie Ebenen der Erlaubnis, neue Daten auf das Blockchain-System zu schreiben; und

Daten, die Heime beschreiben, die Gegenstand der Wohnbaufinanzierungsvereinbarungen sind.

**15.** System zum Erleichtern von Transaktionsdaten in einer Transaktion, das folgende Merkmale aufweist:

eine Rechenvorrichtung eines Heimbesitzers mit einer Benutzerschnittstelle zum Erleichtern der Transaktionsdaten, wobei der Heimbesitzer eine erste Partei an der Transaktion ist;

eine Rechenvorrichtung eines Anlegers mit einer Benutzerschnittstelle zum Erleichtern der Transaktionsdaten, wobei der Anleger eine zweite Partei an der Transaktion ist; und

eine Verwaltungseinheitsvorrichtung mit einer Computerschnittstelle, wobei die Verwaltungseinheit Folgendes verwaltet:

zumindest eine Bilanzierungsmaschinenvorrichtung zum Implementieren von Anpassungen unter einem Bilanzierungsmechanismus basierend auf den Transaktionsdaten, wobei der Bilanzierungsmechanismus dazu konfiguriert ist, es der Bilanzierungsmaschine zu ermöglichen, ein Restkonto für jeden von mehreren Zeiträumen basierend auf dem Nettobeitrag des Heimbesitzers und dem Heimwert während jedes Zeitraums gemäß einem Kaufparitätsakkumulationsalgorithmus anzupassen;

zumindest eine Datenmaschinenvorrichtung zum Erzeugen, Sammeln, Aktualisieren, Verarbeiten, Speichern und Kommunizieren zumindest einer Zeitreihe basierend auf den Transaktionsdaten; und

zumindest eine Vertragsmaschinenvorrichtung zum Initiieren, Implementieren, Durchsetzen und Aktualisieren einer Wohnbaufinanzierungsvereinbarung zwischen zumindest dem Heimbesitzer und dem Anleger basierend auf den Transaktionsdaten;

eine Mehrzahl von Drittparteivorrichtungen mit zugehörigen Computerschnittstellen, die relevante Drittpartei-Finanzierungsdaten basierend auf den Transaktionsdaten bereitstellen;

eine zentrale Handelsmaschinendatenbank, um es der Rechenvorrichtung des Heimbesitzers oder der Rechenvorrichtung des Anlegers zu ermöglichen, eine Kaufangebotsnachricht basierend auf den Transaktionsdaten zu senden;

ein verteiltes Blockchain-System, das zumindest eine Wohnbauinstrumentendaten-Blockchain zum sicheren Speichern vertraulicher Daten enthält, die beim Erleichtern der Transaktionsdaten verwendet werden; und

eine Anwendungsschicht, die Daten zwischen der Rechenvorrichtung des Heimbesitzers, der Rechenvorrichtung eines Anlegers, der zentralen Handelsmaschinendatenbank, der Mehrzahl von Drittparteivorrichtungen, dem verteilten Blockchain-System und der Verwaltungseinheitsvorrichtung empfängt, verarbeitet und sendet;

wobei die Anwendungsschicht als Reaktion auf die Transaktionsdaten eine Website modifiziert, die für den Heimbesitzer und den Anleger zugänglich ist; und

wobei die Anwendungsschicht den Heimbesitzer und den Anleger über die Transaktion durch ein Mobilgerät alarmiert; und wobei die Bilanzierungsmaschine dazu konfiguriert ist, durch eine Sendeeinheit der Bilanzierungsmaschine eine Abfrage des Blockchain-Systems nach Daten zu senden, die für eine Bilanzierungsberechnung relevant sind, wobei sich die Daten in der Wohnbauinstrumentendaten-Blockchain befinden und eine Zeitreihe aller Beitragselemente einschließlich zumindest Heimbesitzerzahlungen an den Anleger enthalten, und wobei eine Zeitreihe von Heimwerten in die Wohnbauinstrumentendaten-Blockchain zur Verwendung durch die Bilanzierungsmaschine geschrieben wird.

## Revendications

1. Procédé mis en œuvre par ordinateur pour la gestion dynamique en temps réel de finances, services et rapports sur des biens immobiliers, comprenant le fait de :

maintenir, par un processeur, sur un site web commandé par une entité de gestion et accessible à au moins un propriétaire, tout détenteur d'une position d'équilibrage résiduel et un investisseur, un affichage des termes, valeurs de paramètres et actions requises à venir dans le cadre d'un accord de financement immobilier ;

stocker, par ledit processeur, dans au moins un système de chaînes de blocs contenant au moins une chaîne de blocs de données d'instrument immobilier, des données confidentielles ;

maintenir, par ledit processeur, sur au moins un serveur commandé par une entité de gestion, un moteur d'équilibrage incorporé dans au moins une unité de traitement, au moins une unité de réception et au moins une unité de transmission dans le but de mettre en œuvre des ajustements dans un mécanisme d'équilibrage ;

périodiquement par le biais d'une unité de réception du moteur d'équilibrage, recevoir un message provenant de l'entité de gestion ou d'une entité d'intelligence artificielle la représentant, initiant une entrée d'équilibrage sur la chaîne de blocs de données d'instrument immobilier ;

transmettre, par le biais d'une unité de transmission du moteur d'équilibrage, une demande du système de chaînes de blocs pour des données pertinentes à un calcul d'équilibrage, dans lequel les données résident dans la chaîne de blocs de données d'instrument immobilier et incluent une série chronologique de tous les éléments de contribution incluant au moins des paiements de propriétaire à l'investisseur, dans lequel le mécanisme d'équilibrage permet au moteur d'équilibrage d'ajuster un compte résiduel, pour chacune de multiples périodes de temps, sur la base de la contribution nette du propriétaire et de la valeur immobilière pendant chaque période de temps, conformément à un algorithme d'accumulation de parité d'achat et dans lequel une série chronologique de valeurs immobilières est écrite sur la chaîne de blocs de données d'instrument immobilier pour une utilisation par le moteur d'équilibrage ;

recevoir lesdites données par le biais de l'unité de réception du moteur d'équilibrage ;

lors d'un accord direct, déterminer, par le biais d'une unité de traitement du moteur d'équilibrage, un solde mis à jour dans au moins un compte résiduel ;

écrire, par le biais d'une unité de transmission du moteur d'équilibrage, le solde de compte résiduel mis à jour avec les détails du calcul sur la chaîne de blocs de données d'instrument immobilier ;

modifier le site web par le biais d'une unité de traitement et d'une unité de transmission du moteur d'équilibrage pour afficher le solde de compte résiduel mis à jour ; et

par le biais d'une unité de transmission du moteur d'équilibrage, alerter au moins un propriétaire et un investisseur, qui peuvent être hors ligne, du solde de compte résiduel mis à jour par le biais d'un téléphone mobile ou autre dispositif de réception ; et

lors d'un accord qui n'est pas un accord direct, déterminer, par le biais d'une unité de traitement du moteur d'équilibrage, un résultat non planifié mis à jour et des quantités associées qui utilisent le résultat non planifié comme entrée ;

écrire, par le biais d'une unité de transmission du moteur d'équilibrage, le résultat non planifié mis à jour et des quantités associées avec les détails du calcul sur la chaîne de blocs de données d'instrument immobilier ; modifier le site web, par le biais d'une unité de traitement et d'une unité de transmission du moteur d'équilibrage, pour afficher le résultat non planifié mis à jour et les quantités associées ; et par le biais d'une unité de transmission du moteur d'équilibrage, alerter au moins un propriétaire, un investisseur et un détenteur de position d'équilibrage résiduel, qui peuvent être hors ligne, du résultat non planifié mis à de compte et des quantités associées par le biais d'un téléphone mobile ou autre dispositif de réception.

2. Procédé selon la revendication 1, comprenant en outre le fait de :
maintenir, sur au moins un serveur de traitement commandé par une entité de gestion, au moins un moteur de données incorporé dans au moins une unité de traitement, au moins une unité de réception, au moins une unité de transmission et au moins une base de données, ledit serveur de traitement créant, regroupant, mettant à jour, traitant, stockant et communiquant au moins une série chronologique d'au moins un paramètre de données.

3. Procédé selon la revendication 1, comprenant en outre le fait de :

recevoir, sur une unité de réception d'au moins un moteur de données, des données de tiers comprenant des données d'entrée pour calculer au moins un paramètre de données généré par le moteur de données ; formatter, par le biais d'une unité de traitement du moteur de données, les données ajoutées puis modifier, par le biais de la même unité de traitement du moteur de données, une base de données pour incorporer les données ajoutées ; calculer, par le biais d'une unité de traitement du moteur de données, au moins une version de non-tiers du paramètre de donnés ; calculer, par le biais d'une unité de traitement du moteur de données, une valeur fonctionnelle unique du paramètre de données en utilisant les évaluations de tiers et de non-tiers ; écrire, par le biais d'une unité de transmission du moteur de données, la valeur fonctionnelle mise à jour du paramètre de données avec un enregistrement du calcul incluant au moins une estampille d'heure et de date du calcul, les valeurs de tiers et de non-tiers, et la méthodologie utilisée pour calculer la valeur fonctionnelle sur la chaîne de blocs de données d'instrument immobilier ; et modifier le site web par le biais d'une unité de traitement et d'une unité de transmission du moteur de données pour afficher la valeur fonctionnelle mise à jour du paramètre de données puis, par le biais d'une unité de transmission du moteur de données, alerter au moins un propriétaire et un investisseur, qui peuvent être hors ligne, de la valeur fonctionnelle mise à jour par le biais d'un téléphone mobile ou autre dispositif de réception lorsque chaque tiers a demandé des mises à jours de la valeur fonctionnelle de manière générale ou lorsque certaines valeurs du paramètre de données sont réalisées.

4. Procédé selon la revendication 1, comprenant en outre le fait de :
maintenir, sur au moins un serveur de traitement commandé par une entité de gestion, au moins un moteur de données de tiers incorporé dans au moins une unité de traitement, au moins une unité de réception, au moins une unité de transmission et au moins une base de données dans le but de créer, regrouper, mettre à jour, traiter, stocker et communiquer au moins une série chronologique d'au moins un paramètre de données qui émerge d'au moins un accord de financement de tiers.

5. Procédé selon la revendication 1, comprenant en outre le fait de :

recevoir, sur une unité de réception d'au moins un moteur de données de tiers fonctionnant sur un serveur de traitement commandé par l'entité de gestion, des données par rapport à au moins un accord de financement de tiers ; identifier, par le biais d'une unité de traitement du moteur de données de tiers, des éléments de données à enregistrer sur une chaîne de blocs de données d'instrument immobilier ; modifier les données à enregistrer dans un format approprié ; écrire, par le biais d'une unité de transmission du moteur de données de tiers, des éléments de données avec un enregistrement de tout calcul associé sur une chaîne de blocs de données d'instrument immobilier ;

extraire de la chaîne de blocs de données d'instrument immobilier, par le biais d'une unité de réception du moteur de données de tiers, des données pour décrire l'état actuel et l'historique pertinent de l'accord de financement de tiers ;

organiser, par le biais d'une unité de traitement du moteur de données de tiers, lesdites données pour affichage de site web ;

modifier le site web par le biais d'une unité de traitement et d'une unité de transmission du moteur de données de tiers pour afficher les données mises à jour de l'accord de financement de tiers ; et

par le biais d'une unité de transmission du moteur de données de tiers, alerter au moins un propriétaire et un investisseur, qui peuvent être hors ligne, des données mises à jour par le biais d'un téléphone mobile ou autre dispositif de réception si chaque tiers a demandé de telles données mises à jour de manière générale ou lorsque certaines valeurs des certains paramètres de données sont réalisées.

6. Procédé selon la revendication 1, comprenant en outre le fait de :

maintenir, sur au moins un serveur de traitement commandé par une entité de gestion, un moteur de contrat incorporé dans au moins une unité de traitement, au moins une unité de réception et au moins une unité de transmission pour initier, mettre en oeuvre, appliquer et mettre à jour l'accord de financement immobilier entre au moins un propriétaire et un investisseur.

7. Procédé selon la revendication 1, comprenant en outre le fait de :

recevoir, par le biais d'une unité de réception d'un moteur de contrat fonctionnant sur un serveur de traitement commandé par une entité de gestion, des données de contrat initiales décrivant un accord de financement immobilier ;

identifier, par le biais d'une unité de traitement, des éléments des données de contrat initiales à enregistrer sur une chaîne de blocs de données d'instrument immobilier ;

organiser et modifier, par le biais d'une unité de traitement du moteur de contrat, les données à enregistrer dans un format approprié ; et

écrire, par le biais d'une unité de transmission du moteur de contrat, les éléments de données nécessaires sur une chaîne de blocs de données d'instrument immobilier.

8. Procédé selon la revendication 1, comprenant en outre le fait de :

recevoir, sur le site web ou autre dispositif d'entrée commandé par une entité de gestion, une demande du propriétaire de modifier au moins un terme d'un accord de financement immobilier spécifiant au moins une option pour un nouveau terme ; et

transmettre, par le biais d'une unité de transmission d'un serveur commandé par l'entité de gestion, la demande à une unité de réception d'un moteur de contrat fonctionnant par le biais d'une unité de traitement commandée par l'entité de gestion.

9. Procédé selon la revendication 1, comprenant en outre le fait de :

dans un accord direct, extraire, de la chaîne de blocs de données d'instrument immobilier, par le biais d'une unité de réception du moteur de contrat, des provisions de contrat nécessaires gouvernant le changement demandé de termes pour chaque option avec d'autres données pertinentes ;

déterminer, par le biais d'une unité de traitement du moteur de contrat, si le changement demandé de termes pour chaque option est autorisé dans le cadre du contrat d'accord de financement immobilier ;

lorsqu'un changement de termes est autorisé, déterminer si toute approbation par des parties autres que le propriétaires est nécessaire ;

lorsqu'un changement de termes dans au moins une option est par ailleurs admissible, rechercher, par le biais d'une unité de transmission du moteur de contrat, toute approbation nécessaire pour chaque option en alertant au moins une partie pertinente par le biais d'au moins un dispositif de réception de ladite partie du besoin d'approuver ou de refuser l'approbation de chaque option qui nécessite une approbation ;

après réception d'une réponse ou après qu'un délai de réponse s'est écoulé, déterminer, par le biais d'une unité de traitement du moteur de contrat, si chaque option proposée par le propriétaire est approuvée ou refusée ;

modifier le site web, par le biais d'une unité de transmission du moteur de contrat, pour informer le propriétaire si chaque option est autorisée ou refusée et, lorsqu'au moins une option est autorisée, demander au propriétaire de confirmer l'acceptation de l'une des options ou de toutes les refuser ;

via une unité de transmission du moteur de données, alerter au moins le propriétaire, qui peut être hors ligne, par le biais d'un téléphone mobile ou autre dispositif de réception des options autorisées ou refusées et, lorsqu'au moins une option est autorisée, demander au propriétaire de confirmer une option ou de toutes les refuser ;

lorsque le propriétaire confirme une option, écrire, par le biais d'une unité de transmission du moteur de contrat, un changement de termes avec des données associées comprenant l'option acceptée, incluant au moins une date et une heure effectives du changement de termes sur la chaîne de blocs de données d'instrument immobilier ;

modifier le site web par le biais d'une unité de traitement et d'une unité de transmission du moteur de contrat pour confirmer que le changement est en vigueur, pour afficher l'heure et la date effectives du changement, et pour afficher les nouveaux termes d'accord de financement immobilier ; et

par le biais d'une unité de transmission du moteur de contrat, alerter au moins un propriétaire et un investisseur, qui peuvent être hors ligne, que le changement est en vigueur avec l'heure et la date effectives du changement par le biais d'un téléphone mobile ou autre dispositif de réception.

**10.** Procédé selon la revendication 1, comprenant en outre le fait de :

dans un accord qui n'est pas un accord direct, extraire, de la chaîne de blocs de données d'instrument immobilier, par le biais d'une unité de réception du moteur de données de tiers, des provisions de contrat nécessaires gouvernant un changement demandé de termes avec d'autres données pertinentes incluant, au moins, des données pour générer des offres au propriétaire par rapport à chaque option, les offres contenant des changements de termes de l'accord de financement immobilier autres que les termes qui sont le sujet de la demande ;

calculer, par le biais d'une unité de traitement du moteur de contrat, au moins une offre pour chaque changement de termes d'une option spécifiée par le propriétaire ;

modifier le site web par le biais d'une unité de transmission du moteur de contrat pour informer le propriétaire des offres ;

demander au propriétaire de confirmer l'acceptation de l'une des offres ou de confirmer le refus de toutes les offres ;

par le biais d'une unité de transmission du moteur de contrat, alerter au moins le propriétaire, qui peut être hors ligne, par le biais d'un téléphone mobile ou autre dispositif de réception, des offres et du besoin d'accepter une offre ou de refuser toutes les offres ;

créer, par le biais d'une unité de traitement du moteur de contrat, un ensemble de données d'offres incluant au moins le contenu des offres et des valeurs des paramètres de données de gouvernance au moment des offres, valeurs qui gouvernent les termes d'offres ;

écrire, par le biais d'une unité de transmission du moteur de contrat, l'ensemble de données d'offres sur la chaîne de blocs de données d'instrument immobilier ;

lorsque le propriétaire accepte une offre, extraire, par le biais d'une unité de réception du moteur de contrat, l'ensemble de données d'offres de la chaîne de blocs de données d'instrument immobilier ;

calculer, par le biais d'une unité de traitement du moteur de contrat à l'aide des données d'ensemble d'offres, les ajustements entre au moins un propriétaire, l'investisseur et un détenteur de position d'équilibrage résiduel nécessaires pour clôturer l'accord de financement immobilier existant et le remplacer par un nouvel accord de financement immobilier incorporant les termes spécifiés dans l'offre acceptée ;

transmettre, par le biais d'une unité de transmission du moteur de contrat, un message informant les parties pertinentes d'étapes nécessaires ;

recevoir, par le biais d'une unité de réception du moteur de contrat, une vérification selon laquelle les étapes nécessaires, incluant tout paiement requis entre les parties, ont été réalisées ;

compiler, par le biais d'une unité de traitement du moteur de contrat, un paquet de données de transition incluant au moins les ajustements effectués pour clôturer l'accord de financement immobilier existant, les termes du nouvel accord de financement immobilier avec les positions de compte résiduel de départ des parties, et la date et l'heure auxquelles le nouvel accord entre en vigueur ;

écrire, par le biais d'une unité de transmission du moteur de contrat, les données de transition sur la chaîne de blocs de données d'instrument immobilier pour effectuer un décalage vers le nouvel accord de financement immobilier ;

créer, par le biais d'une unité de traitement du moteur de contrat, des versions affichables séparées des données de transition appropriées pour chaque partie pertinente ;

modifier le site web par le biais d'une unité de traitement et d'une unité de transmission du moteur de contrat pour afficher les données de transition dans des versions séparées sur des portions séparées du site web pour chaque partie séparée, ainsi que pour afficher, dans des zones communément accessibles du site web, le nouvel accord ; et

par le biais d'une unité de transmission du moteur de contrat, alerter chacune des parties pertinentes, qui peuvent être hors ligne, des données de transition pertinentes pour cette partie ainsi que des données communes décrivant le nouvel accord de financement immobilier.

**11.** Procédé selon la revendication 1, comprenant le fait de :

recevoir, sur le site web ou autre dispositif d'entrée commandé par une entité de gestion, une demande d'un propriétaire de vendre une position de compte résiduel à au moins un investisseur ou d'acheter une position de compte résiduel auprès d'au moins un investisseur ; et

transmettre, par le biais d'une unité de transmission d'un serveur commandé par l'entité de gestion, la demande de vente ou d'achat à une unité de réception d'un moteur de contrat fonctionnant par le biais d'une unité de traitement commandée par l'entité de gestion.

**12.** Procédé selon la revendication 1, comprenant en outre le fait de :

pour un accord direct, extraire de la chaîne de blocs de données d'instrument immobilier par le biais d'une unité de réception du moteur de contrat, des provisions de contrat nécessaires gouvernant une vente ou un achat demandé avec d'autres données pertinentes incluant, au moins, des données nécessaires pour déterminer les termes de la vente ou de l'achat ;

déterminer, par le biais d'une unité de traitement du moteur de contrat, si la vente ou l'achat demandé est autorisé dans le cadre du contrat d'accord de financement immobilier ;

lorsque la vente ou l'achat demandé est autorisé dans le cadre du contrat d'accord de financement immobilier, déterminer si une approbation par les investisseurs de l'autre côté de la transaction est nécessaire ;

déterminer, par le biais d'une unité de traitement du moteur de contrat, les termes applicables de l'achat ou de la vente ;

lorsque la vente ou l'achat est par ailleurs admissible, rechercher, par le biais d'une unité de transmission du moteur de contrat, des approbations d'investisseur, si nécessaire, sur la base des termes calculés en alertant les investisseurs par le biais d'au moins un dispositif de réception de chaque dit investisseur des termes et du besoin d'approuver ou de refuser l'approbation ;

après réception d'une réponse ou après qu'un délai de réponse s'est écoulé, déterminer, par le biais d'une unité de traitement du moteur de contrat, si la vente ou l'achat sur les termes calculés est autorisé ou refusé ;

modifier le site web, par le biais d'une unité de transmission du moteur de contrat, pour informer le propriétaire de l'autorisation ou du refus ;

pour l'autorisation, demander au propriétaire de confirmer l'acceptation ou le refus sur la base des termes calculés ;

par le biais d'une unité de transmission du moteur de contrat, alerter le propriétaire, qui peut être hors ligne, par le biais d'un téléphone mobile ou autre dispositif de réception, de l'autorisation ou du refus ;

pour l'autorisation, demander au propriétaire de confirmer l'acceptation ou le refus de la transaction sur la base des termes calculés ;

lorsque le propriétaire confirme la transaction, transmettre, par le biais d'une unité de transmission du moteur de contrat, un message informant la partie pertinente ou les parties pertinentes des étapes requises ;

recevoir, par le biais d'une unité de réception du moteur de contrat, une vérification selon laquelle les étapes requises, incluant tout paiement requis entre les parties, ont été réalisées ;

compiler, par le biais d'une unité de traitement du moteur de contrat, un paquet de données de transaction incluant au moins la confirmation de la transaction, les termes de la transaction, la date et l'heure auxquelles la transaction a été effective, et les nouvelles positions de compte résiduel des parties à compter de cette date et de cette heure ;

écrire, par le biais d'une unité de transmission du moteur de contrat, après formatage par le biais d'une unité de traitement du moteur de contrat, les données de transaction sur la chaîne de blocs de données d'instrument immobilier ;

modifier le site web, par le biais d'une unité de traitement et d'une unité de transmission du moteur de contrat, pour afficher les portions pertinentes des données de transaction ; et

par le biais d'une unité de transmission du moteur de contrat, alerter au moins un propriétaire et un investisseur, qui peuvent être hors ligne, des portions pertinentes des données de transaction par le biais d'un téléphone mobile ou autre dispositif de réception.

**13.** Procédé selon la revendication 1, comprenant en outre le fait de :

dans un accord qui n'est pas un accord direct, extraire de la chaîne de blocs de données d'instrument immobilier, par le biais d'une unité de réception du moteur de données de tiers, des provisions de contrat nécessaires gouvernant une vente ou un achat demandé avec d'autres données pertinentes incluant, au moins, des données suffisantes pour générer des offres au propriétaire par rapport à la vente ou à l'achat proposé, chaque offre contenant des changements dans les termes de l'accord de financement immobilier accompagnant la vente ou l'achat proposé ;

calculer, par le biais d'une unité de traitement du moteur de contrat, au moins une offre par rapport à la vente ou à l'achat proposé par le propriétaire ;

déterminer, par le biais d'une unité de traitement du moteur de contrat, si la vente ou l'achat demandé est autorisé dans le cadre du contrat d'accord de financement immobilier ;

lorsque la vente ou l'achat demandé est autorisé dans le cadre du contrat d'accord de financement immobilier, déterminer si une approbation par les investisseurs de l'autre côté de la transaction est nécessaire ;

déterminer, par le biais d'une unité de traitement du moteur de contrat, les termes applicables de l'achat ou de la vente et les termes de chaque offre ;

lorsque la vente ou l'achat est par ailleurs admissible, rechercher, par le biais d'une unité de transmission, les approbations d'investisseur par rapport à chaque offre, si nécessaire, sur la base des termes calculés en alertant les investisseurs par le biais d'au moins un dispositif de réception de chaque dit investisseur des offres, et du besoin d'approuver ou de refuser l'approbation de chaque offre ;

après réception d'une réponse ou après que le délai de réponse s'est écoulé, déterminer, par le biais d'une unité de traitement du moteur de contrat, si chaque offre est autorisée ou refusée ;

modifier le site web, par le biais d'une unité de transmission du moteur de contrat, pour informer le propriétaire de l'autorisation ou du refus de chaque offre ;

pour l'autorisation d'au moins une offre, demander au propriétaire de confirmer l'acceptation d'une offre avec les termes de vente ou d'achat ou de toutes les refuser ;

par le biais d'une unité de transmission du moteur de contrat, alerter le propriétaire, qui peut être hors ligne, par le biais d'un téléphone mobile ou autre dispositif de réception, de l'autorisation ou du refus de chaque offre ;

pour l'autorisation d'au moins une offre, demander au propriétaire de confirmer l'acceptation d'une offre avec les termes de vente ou d'achat ou de toutes les refuser ;

créer, par le biais d'une unité de traitement du moteur de contrat, un ensemble de données d'offres incluant au moins le contenu des offres, les termes de vente ou d'achat et les valeurs des paramètres de données de gouvernance au moment des offres, valeurs qui gouvernent les termes d'offres ;

écrire, par le biais d'une unité de transmission du moteur de contrat, l'ensemble de données d'offres sur la chaîne de blocs de données d'instrument immobilier ;

lorsque le propriétaire accepte une offre avec les termes de vente ou d'achat, extraire, par le biais d'une unité de réception du moteur de contrat, l'ensemble de données d'offres de la chaîne de blocs de données d'instrument immobilier ;

calculer, par le biais d'une unité de traitement du moteur de contrat à l'aide des données d'ensemble d'offres, les ajustements entre au moins un propriétaire, un investisseur et un détenteur de position d'équilibrage résiduel nécessaires pour clôturer l'accord de financement immobilier existant et le remplacer par un nouvel accord de financement immobilier incorporant les termes spécifiés dans l'offre acceptée ;

transmettre, par le biais d'une unité de transmission du moteur de contrat, un message informant les parties pertinentes d'étapes nécessaires ;

recevoir, par le biais d'une unité de réception du moteur de contrat, une vérification selon laquelle les étapes nécessaires, incluant tout paiement requis entre les parties, ont été réalisées ;

compiler, par le biais d'une unité de traitement du moteur de contrat, un paquet de données de transition incluant au moins les ajustements effectués pour clôturer l'accord de financement immobilier existant, les termes de la vente ou de l'achat, les termes du nouvel accord de financement immobilier avec les positions de compte résiduel de départ des parties, et la date et l'heure auxquelles le nouvel accord est entré en vigueur ;

écrire, par le biais d'une unité de transmission du moteur de contrat, les données de transition sur la chaîne de blocs de données d'instrument immobilier,

effectuer un décalage vers le nouvel accord de financement immobilier ;

créer, par le biais d'une unité de traitement du moteur de contrat, des versions affichables séparées des données de transition appropriées pour chaque partie pertinente ;

modifier le site web par le biais d'une unité de traitement et d'une unité de transmission du moteur de contrat pour afficher les données de transition dans des versions séparées sur des portions séparées du site web pour chaque partie séparée, ainsi que pour afficher, dans des zones communément accessibles du site web, le nouvel accord ; et

par le biais d'une unité de transmission du moteur de contrat, alerter chacune des parties pertinentes, qui peuvent être hors ligne, des données de transition pertinentes pour cette partie ainsi que des données communes décrivant le nouvel accord de financement immobilier.

14. Procédé selon la revendication 1, dans lequel ledit système de chaînes de blocs comprend :

des informations contractuelles spécifiant au moins un accord de financement immobilier entre au moins un propriétaire et au moins un investisseur finançant une maison particulière ;
une série chronologique de paramètres économiques relatifs à la gestion dynamique d'au moins un accord de financement immobilier ;
un enregistrement de propriété actuelle et antérieure de la dette de financement ou de l'équité ;
un enregistrement de transactions incluant au moins des paiements par le propriétaire aux investisseurs ;
un enregistrement de tout ajustement ou changement de l'accord de financement immobilier ;
une spécification d'au moins un mécanisme d'équilibrage pour suivre au moins les contributions nettes du propriétaire et de l'investisseur, considérant l'accord de financement immobilier entre eux en tant qu'entreprise commune et pour ajuster au moins un compte résiduel pour refléter les contributions nettes des parties ;
un enregistrement de données et de calculs d'un moteur d'équilibrage fonctionnant en continu sur la base d'un ou plusieurs mécanismes d'équilibrage avec des ajustements obtenus d'au moins un compte résiduel ;
un protocole d'accès définissant différents niveaux d'accès à des données dans le système de chaînes de blocs, ainsi que des niveaux d'autorisation pour écrire de nouvelles données sur le système de chaînes de blocs ; et
des donnés décrivant des maisons qui sont le sujet des accords de financement immobilier.

15. Système pour faciliter les données de transaction lors d'une transaction, comprenant

un dispositif de calcul d'un propriétaire, présentant une interface utilisateur, pour faciliter les données de transaction, le propriétaire étant une première partie de la transaction ;
un dispositif de calcul d'un investisseur, présentant une interface utilisateur, pour faciliter les données de transaction, l'investisseur étant une seconde partie de la transaction ; et
un dispositif d'entité de gestion présentant une interface informatique, l'entité de gestion gérant :

au moins un dispositif de moteur d'équilibrage pour mettre en œuvre des ajustements dans un mécanisme d'équilibrage sur la base des données de transaction, le mécanisme d'équilibrage étant configuré pour permettre au moteur d'équilibrage d'ajuster un compte résiduel, pour chacune de multiples périodes de temps, sur la base de la contribution nette du propriétaire et de la valeur immobilière pendant chaque période de temps, conformément à un algorithme d'accumulation de parité d'achat ;
au moins un dispositif de moteur de données pour créer, regrouper, mettre à jour, traiter, stocker et communiquer au moins une série chronologique sur la base des données de transaction ; et
au moins un dispositif de moteur de contrat pour initier, mettre en œuvre, appliquer et mettre à jour un accord de financement immobilier entre au moins le propriétaire et l'investisseur sur la base des données de transaction ;

une pluralité de dispositifs de tiers auxquels sont associées des interfaces informatiques fournissant des données de financement de tiers pertinentes sur la base des données de transaction ;
une base de données de moteur de trading central pour permettre au dispositif informatique du propriétaire ou au dispositif informatique de l'investisseur de transmettre un message d'offre d'achat sur la base des données de transaction ;
un système de chaînes de blocs distribué contenant au moins une chaîne de blocs de données d'instrument immobilier pour stocker de manière sécurisée des données confidentielles qui sont utilisées pour faciliter les données de transaction ; et
une couche d'application qui reçoit, traite et transmet des données entre le dispositif informatique du propriétaire, le dispositif informatique d'un investisseur, la base de données de moteur de trading central, la pluralité de dispositifs de tiers, le système de chaînes de blocs distribué et le dispositif d'entité de gestion ;
en réponse aux données de transaction, ladite couche d'application modifiant un site web accessible au propriétaire et à l'investisseur ; et
ladite couche d'application alertant le propriétaire et l'investisseur de la transaction par le biais d'un dispositif mobile ; et dans lequel le moteur d'équilibrage est configuré pour transmettre, par le biais d'une unité de transmission du moteur d'équilibrage, une demande du système de chaînes de blocs pour des données pertinentes à un calcul d'équilibrage, dans lequel les données résident dans la chaîne de blocs de données d'instrument immobilier et incluent une série chronologique de tous les éléments de contribution incluant au moins des paiements de propriétaire à l'investisseur et dans lequel une série chronologique de valeurs immobilières est écrite sur la chaîne de blocs de données d'instrument immobilier pour une utilisation par le moteur d'équilibrage.

FIG. 1

FIG. 2

FIG. 3

FIG. 4

START

502 — Receive Balancing Request

504 — Query Blockchain

506 — Update Earned Equity

508 — Write to Blockchain

510 — Transmit to Website

512 — Transmit Transaction Message

END

FIG. 5    500

EP 3 738 094 B1

FIG. 6

FIG. 7

700

START → Receive Data Request (702) → Query Third-Party Valuations (704) → Record to Database (706) → Non Third-Party Valuations? (708) — YES → Compute Non Third-Party Valuations (710) → Combine Valuations (712); NO → Combine Valuations (712) → Timestamp Record (714) → Record Data to Blockchain (716) → Generate Data Message (718) → Transmit Data Message (720) → END

FIG. 8

FIG. 9

**FIG. 10**

1000

START

1002 → Request to Sell Equity Recevied

1004 → Query Blockchain

1006 → Query Contract

1008 → Transaction Permitted?

1014 YES → Compute Terms

1010 NO → Generate Denial Message

1012 → Transmit Denial Message → END

1016 → Generate Outcome Message

1018 → Transmit Outcome Message

1020 → Confirmed?

1022 NO → Transmit Denial Message → END

1024 YES → Generate Funding Request

1026 → Sell Cryptocurrency

1028 → Send Payment to Homeowner

1030 → Write to Transaction Blockchain

1032 → Compute Completion Data

1034 → Write to Blockchain

1036 → Generate Confirmation Message

1038 → Transmit Confirmation Message → END

FIG. 11

EP 3 738 094 B1

```
                    ┌──────────┐
                    │  START   │
                    └──────────┘
                          │
                          ▼
      1202      ┌──────────────────┐
                │      Query       │
                │     Housing      │
                │    Instrument    │
                │    Blockchain    │
                └──────────────────┘
                          │
                          ▼
      1204      ┌──────────────────┐
                │      Update      │
                │     Portfolio    │
                │    Information   │
                └──────────────────┘
                          │
                          ▼
      1206      ┌──────────────┐    1208  ┌──────────────┐   1210  ┌──────────────┐      ┌──────────┐
                │   Write to   │          │   Generate   │         │   Transmit   │      │   END    │
                │ Cryptocurrency│ ──────▶ │   Portfolio  │ ──────▶ │Portfolio Update│ ──▶ └──────────┘
                │   Portfolio  │          │    Update    │         │   Message    │
                │   Blockchain │          │   Message    │         └──────────────┘
                └──────────────┘          └──────────────┘
```

FIG. 12                                                                    1200

FIG. 13

FIG. 14

START

1402 Mortgage Payment Received

1404 Process Payment Data

1406 Write to Blockchain

1408 Query Blockchain

1410 Extract Updated Data

1412 Generate Data Message

1414 Transmit Data Message

END

1400

```
        START

1502
       Valutation
        Update
      Notification

1504                  1506              1508              1510
       Query                Pay Down    YES   Calculate          Record
        Data                Required?  ──────→  Pay Down   ──────→  to
      Blockchain                                                  Blockchain

                             │NO
                             ▼
                            END                                     END

                                                1512              1514
                                                     Generate          Send
                                                     Pay Down   ──────→  Pay Down
                                                     Request           Request
```

FIG. 15

1500

**START**

1602

Payment
Request
Received

1604

Attempt
to Collect
Payment

1606

Payment
Adequate?

YES

1608

Query
Blockchain

1610

Record
Payment Data
to Blockchain

1612

Generate
Mortgage Data
Message

1614

Transmit
Mortgage Data
Message

**END**

NO

1616

Query
Blockchain

1618

Identify
Investor
Contacts

1620

Generate
Inadequate
Funds
Message

1622

Transmit
Inadequate
Funds
Message

1624

Time
Limit
Elapsed?

YES

**END**

NO

1626

Time
Interval
Delay

YES

1600

FIG. 16

EP 3 738 094 B1

```
                    ┌──────────────┐
                    │    START     │
                    └──────────────┘
                            │
                            ▼
        1702        ┌──────────────┐
                    │   Default    │
                    │   Notice     │
                    │   Received   │
                    └──────────────┘
                            │
                            ▼
        1704        ┌──────────────┐
                    │    Query     │
                    │  Blockchain  │
                    └──────────────┘
                            │
                            ▼
        1706        ┌──────────────┐      1716     ┌──────────────┐      1718     ┌──────────────┐      1720     ┌──────────────┐
                    │   Initiate   │               │   Change     │               │   Generate   │               │   Transmit   │
                    │ Defualt Steps│──────────────▶│  Investor on │──────────────▶│ Substitution │──────────────▶│ Substitution │
                    └──────────────┘               │  Blockchain  │               │   Message    │               │   Message    │
                            │                       └──────────────┘               └──────────────┘               └──────────────┘
                            ▼                              ▲                                                               │
        1708        ┌──────────────┐      1714     ┌──────────────┐                                                       ▼
                    │   Activate   │               │   Transmit   │                                              ┌──────────────┐
                    │   Payment    │               │   Payment    │                                              │     END      │
                    │    Engine    │               │  Completion  │                                              └──────────────┘
                    └──────────────┘               │   Message    │
                            │                       └──────────────┘
                            ▼                              ▲
        1710        ┌──────────────┐      1712     ┌──────────────┐
                    │    Verify    │               │   Generate   │
                    │   Payment    │──────────────▶│   Payment    │
                    └──────────────┘               │  Completion  │
                                                   │   Message    │
                                                   └──────────────┘
```

FIG. 17

1700

FIG. 18

FIG. 19

1900

START → EBP Arrangement Initiated (1902) → Contract Data Generated (1904) → Write to Blockchain (1906) → END

**FIG. 20**

2000

**FIG. 21**

2100

FIG. 22

START → Payment Offer Accepted (2202) → Initiate EBP Arrangement Termination (2204) → Query Blockchain (2206) → Compute Required Allocation (2208) → Compute Buyout Amount (2210) → Activate Payment Engine (2212) → Execute Bank Transfer (2214) → Generate Payment Confirmation (2218) → Send Payment Confirmation (2220) → END

Prepare Transition Data (2216) → Update Blockchain (2222) → Generate Transition Message (2224) → Transmit Transition Message (2226) → END

2200

FIG. 23

EP 3 738 094 B1

FIG. 24    2400

Fig. 25

2500

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20170046638 A1
- US 20170213289 A1
- US 20170330174 A1
- AU 2015258248 A1
- WO 2017218984 A1
- WO 2010085481 A1
- US 9870562 B2

**Non-patent literature cited in the description**

- **A.J. AUERBACH**. Retrospective Capital Gains Taxation. *American Economic Review*, March 1991, vol. 81, 167-178